# EUROPÄISCHE PATENTANMELDUNG

(11) **EP 4 832 320 A2**
(43) Veröffentlichungstag der Anmeldung: **28.10.2026**
(21) Anmeldenummer: 26204442.3
(22) Anmeldetag: 16.03.2021
(51) Int. Cl.: H02K 41/03

(54) **PLANARANTRIEBSSYSTEM, VERFAHREN ZUM BETREIBEN EINES PLANARANTRIEBSSYSTEMS UND STATOR ZUM ANTREIBEN EINES LÄUFERS**

(30) Priorität: 19.03.2020 EP 20164167
(62) Dokumentnummer(n) der früheren Anmeldung(en) nach Art. 76 EPÜ: 21711882.7 / 4 107 847
(71) Anmelder: Beckhoff Automation GmbH, 33415 Verl (DE)
(72) Erfinder: BENTFELD, Lukas, 33129 Delbruck (DE); BRINKMANN, Rolf, 32107 Bad Salzuflen (DE); JEBRAMCIK, Patrick, 33334 Gutersloh (DE); KAULMANN, Tim, 33104 Paderborn (DE)
(74) Vertreter: Patentanwaltskanzlei WILHELM & BECK

(57) **Zusammenfassung**

Die Erfindung betrifft ein Planarantriebssystem. Das Planarantriebssystem weist einen Stator und einen Läufer auf. Der Stator weist mehrere Statorleiter auf. Der Läufer weist eine Magneteinrichtung mit wenigstens einem Läufermagneten auf. Der Stator ist zum Bestromen der Statorleiter ausgebildet. Zwischen bestromten Statorleitern des Stators und der Magneteinrichtung des Läufers ist eine magnetische Wechselwirkung hervorrufbar, um den Läufer anzutreiben. Der Stator ist ausgebildet, das Bestromen der Statorleiter durch eine Stromregelung auf Basis einer Pulsweitenmodulation durchzuführen. Aufgrund der Stromregelung ist ein Rippelstrom in bestromten Statorleitern des Stators und dadurch ein magnetisches Wechselfeld erzeugbar. Der Läufer weist wenigstens eine Läuferspule auf, in welcher aufgrund des magnetischen Wechselfelds eine Wechselspannung induzierbar ist. Die Erfindung betrifft des Weiteren ein Verfahren zum Betreiben eines Planarantriebssystems und einen Läufer für ein Planarantriebssystem.

## Beschreibung

Die vorliegende Erfindung betrifft ein Planarantriebssystem. Die Erfindung betrifft des Weiteren ein Verfahren zum Betreiben eines Planarantriebssystems und einen Läufer für ein Planarantriebssystem.

Diese Patentanmeldung beansprucht die Priorität der europäischen Patentanmeldung EP 20 164 167.7, deren Offenbarungsgehalt hiermit durch Rückbezug aufgenommen wird.

Planarantriebssysteme können in unterschiedlichen Gebieten zur Anwendung kommen. Mögliche Beispiele sind die Automatisierungstechnik, insbesondere die Fertigungstechnik, die Handhabungstechnik und die Verfahrenstechnik. Mit Hilfe eines Planarantriebssystems kann ein bewegliches Element, welches zum Beispiel Bestandteil einer Anlage oder Maschine sein kann, in mindestens zwei linear unabhängigen Richtungen bewegt oder positioniert werden. Ein Planarantriebssystem kann einen permanenterregten elektromagnetischen Planarmotor mit einem planaren Stator und wenigstens einem über dem Stator in wenigstens zwei Richtungen beweglichen Läufer umfassen.

Der Stator eines Planarantriebssystems kann eine Mehrzahl an bestrombaren Statorleitern aufweisen. Der Läufer kann eine Magneteinrichtung mit mehreren Permanentmagneten aufweisen. Ein Antreiben des Läufers kann durch Bestromen von Statorleitern des Stators erfolgen. Auf diese Weise kann eine magnetische Wechselwirkung zwischen bestromten Statorleitern und der Magneteinrichtung des Läufers hervorgerufen werden, wodurch der Läufer schwebend über dem Stator gehalten sowie über diesem bewegt werden kann.

Die EP 1 842 101 B1 beschreibt einen Planarmotor mit einem Stator und einem beweglichen Läufer. Der Läufer weist mehrere Elektroniken und Aufnahmespulen zur Energieaufnahme auf, so dass die Elektroniken mit Energie versorgt werden können.

Die Aufgabe der vorliegenden Erfindung besteht darin, ein verbessertes Planarantriebssystem anzugeben, welches sich für eine drahtlose Energieübertragung von einem Stator zu einem Läufer eignet. Es ist weiterhin Aufgabe der Erfindung, ein entsprechendes Verfahren zum Betreiben eines Planarantriebssystems und einen Läufer für ein Planarantriebssystem anzugeben.

Diese Aufgabe wird durch die Merkmale der unabhängigen Patentansprüche gelöst. Weitere vorteilhafte Ausführungsformen der Erfindung sind in den abhängigen Ansprüchen angegeben.

Gemäß einem Aspekt der Erfindung wird ein Planarantriebssystem vorgeschlagen. Das Planarantriebssystem weist einen Stator und einen Läufer auf. Der Stator weist mehrere Statorleiter auf. Der Läufer weist eine Magneteinrichtung mit wenigstens einem Läufermagneten auf. Der Stator ist zum Bestromen der Statorleiter ausgebildet. Zwischen bestromten Statorleitern des Stators und der Magneteinrichtung des Läufers kann eine magnetische Wechselwirkung hervorgerufen werden, um den Läufer anzutreiben. Der Stator ist ausgebildet, das Bestromen der Statorleiter durch eine Stromregelung auf Basis einer Pulsweitenmodulation durchzuführen. Aufgrund der Stromregelung auf Basis der Pulsweitenmodulation kann ein Rippelstrom in bestromten Statorleitern des Stators und dadurch ein magnetisches Wechselfeld erzeugt werden. Der Läufer weist wenigstens eine Läuferspule auf, in welcher aufgrund des magnetischen Wechselfelds eine Wechselspannung induziert werden kann.

Das vorgeschlagene Planarantriebssystem eignet sich für eine zuverlässige drahtlose bzw. induktive Energieübertragung von dem Stator zu dem Läufer. Hierbei fungieren bestromte Statorleiter des Stators als Primärwicklungen bzw. Primärspulen, und dient die wenigstens eine Läuferspule des Läufers als Sekundärwicklung bzw. Sekundärspule. Um eine elektrische Spannung in der Läuferspule des Läufers zu induzieren, ist ein sich zeitlich änderndes Magnetfeld im Bereich der Läuferspule erforderlich. Ein sich zeitlich ändernder elektrischer Strom in elektrisch angesteuerten Statorleitern des Stators kann für einen solchen sich zeitlich ändernden magnetischen Fluss im Bereich der Läuferspule sorgen.

Bei dem Planarantriebssystem wird in diesem Zusammenhang ausgenutzt, dass das Bestromen der als Primärwicklungen dienenden Statorleiter des Stators durch eine elektrische Stromregelung auf Basis einer Pulsweitenmodulation (engl. Puls Width Modulation, PWM) erfolgt. Hierbei werden zu bestromende Statorleiter mit einer mittels Pulsweitenmodulation getakteten elektrischen Spannung, und infolgedessen mit pulsweitenmodulierten periodischen Spannungspulsen, oder anders ausgedrückt, mit durch eine PWM-Taktfrequenz bzw. durch ein Zeitraster der Pulsweitenmodulation vorgegebenen periodischen Spannungspulsen, beaufschlagt. Ein Nebeneffekt bei dieser Art von Stromregelung besteht darin, dass der in bestromten Statorleitern erzeugte elektrische Strom mit einem Wechselstromanteil, dem sogenannten Rippelstrom, überlagert ist. Dies liegt an einer glättenden Wirkung der als Primärspulen dienenden Statorleiter, wodurch der in elektrisch angesteuerten Statorleitern fließende Strom der pulsweitenmodulierten Spannung derart folgt, dass ein sägezahnartiger bzw. dreieckförmiger Stromverlauf vorliegt. Hierbei kann der Strom um einen Mittelwert hin und her pendeln.

Das Auftreten des Rippelstroms ist mit einem sich zeitlich ändernden Magnetfeld verbunden. Auf diese Weise kann eine elektrische Wechselspannung in der wenigstens einen Läuferspule des Läufers induziert, und infolgedessen elektrische Energie von dem Stator auf den Läufer übertragen werden. Die induzierte Wechselspannung kann im Wesentlichen proportional zu der zeitlichen Änderung des die Läuferspule durchsetzenden magnetischen Flusses sein.

Bei dem Planarantriebssystem wird somit keine zusätzliche Primärspule an dem Stator eingesetzt, um eine elektrische Energie induktiv von dem Stator zu dem Läufer zu übertragen. Die Energieübertragung basiert stattdessen auf einem parasitären Ausnutzen des durch die pulsweitenmodulierte getaktete Bestromung hervorgerufenen Rippelstroms, und damit auf dem durch den Rippelstrom im Bereich des Läufers erzeugten magnetischen Wechselfeld.

Im Folgenden werden weitere mögliche Details und Ausführungsformen näher beschrieben, welche für das Planarantriebssystem in Betracht kommen können.

Die PWM-Taktfrequenz kann im kHz-Bereich liegen und zum Beispiel 64kHz betragen.

Der wenigstens eine Läufermagnet der Magneteinrichtung des Läufers kann ein Permanentmagnet sein.

Mit Bezug auf die wenigstens eine Läuferspule des Läufers sind unterschiedliche Ausgestaltungen denkbar. Es ist zum Beispiel möglich, dass der Läufer wenigstens eine Leiterplatte (engl. Printed Circuit Board, PCB) aufweist. Die wenigstens eine Leiterplatte kann mehrlagig ausgeführt sein. Die wenigstens eine Läuferspule des Läufers kann in Form von einer oder mehreren spiralförmigen metallischen Leiterbahnen der wenigstens einen Leiterplatte verwirklicht sein.

Der Läufer kann zum Beispiel eine einzelne Leiterplatte mit einer oder mehreren spiralförmigen Leiterbahnen aufweisen, welche eine oder mehrere Läuferspulen bilden können. Des Weiteren kann der Läufer mehrere separate Leiterplatten mit jeweils einer oder mehreren spiralförmigen Leiterbahnen aufweisen, welche jeweils eine oder mehrere Läuferspulen bilden können. Mehrere spiralförmige Leiterbahnen bzw. Läuferspulen können elektrisch bzw. elektrisch in Serie miteinander verbunden sein.

Die Magneteinrichtung des Läufers kann mehrere Läufermagnete aufweisen. Die Läufermagnete können derart angeordnet sein, dass die Läufermagnete einen Bereich umgeben. Ferner kann die Magneteinrichtung zum Beispiel eine rechteckige bzw. quadratische Kontur besitzen.

In einer weiteren Ausführungsform, welche in diesem Zusammenhang zur Anwendung kommen kann, ist die wenigstens eine Läuferspule des Läufers in dem von den Läufermagneten der Magneteinrichtung umgebenen Bereich angeordnet. Bei dieser Ausführungsform kann eine mehrlagige Leiterplatte mit mehreren übereinander angeordneten Lagen und mehreren übereinander angeordneten spiralförmigen Leiterbahnen zum Einsatz kommen. In dieser Ausgestaltung kann die Leiterplatte relativ einfach in dem Läufer integriert sein. Hierbei kann der Läufer eine freistellende Ausnehmung in dessen Mitte aufweisen, innerhalb welcher die Leiterplatte angeordnet sein kann. Auch kann die Leiterplatte eine relativ große Anzahl an Lagen und übereinander angeordneten spiralförmigen Leiterbahnen umfassen, was eine effektive Energieübertragung von dem Stator zu dem Läufer möglich macht. Dies kann ferner durch eine große Windungszahl der spiralförmigen Leiterbahnen begünstigt werden. Die Anzahl der Lagen und der spiralförmigen Leiterbahnen kann zum Beispiel sechs oder acht betragen. Die verwendete Leiterplatte kann zum Beispiel eine Dicke von 1mm besitzen.

In einer weiteren Ausführungsform weist der Läufer mehrere Läuferspulen auf, welche in einem Bereich unterhalb der Magneteinrichtung des Läufers angeordnet sind. Im Betrieb des Planarantriebssystems können sich die Läuferspulen zwischen dem Stator und der Magneteinrichtung des Läufers befinden. Auch in dieser Ausführungsform kann eine mehrlagige Leiterplatte mit mehreren Lagen und mehreren übereinander angeordneten spiralförmigen Leiterbahnen zum Einsatz kommen. Im Bereich jeder Lage können ferner mehrere nebeneinander angeordnete spiralförmige Leiterbahnen vorhanden sein. Die Leiterplatte kann an der Unterseite des Läufers angeordnet sein. Auch kann sich die Leiterplatte über die gesamte oder im Wesentlichen gesamte Fläche des Läufers erstrecken. Auf diese Weise kann eine relativ große Spulenfläche zur Verfügung gestellt werden, was eine effektive Energieübertragung von dem Stator zu dem Läufer begünstigt. Darüber hinaus ist diese Ausführungsform kompatibel zu einer Ausgestaltung des Läufers ohne freistellende Ausnehmung in dessen Mitte. Da in dieser Ausführungsform die Flughöhe des Läufers um die Dicke der Leiterplatte verringert sein kann, kann es in Betracht kommen, eine relativ flache Leiterplatte mit einer im Vergleich zu der oben genannten Ausführungsform geringeren Anzahl an Lagen einzusetzen. Möglich sind zum Beispiel zwei Lagen. Des Weiteren kann die verwendete Leiterplatte eine Dicke von zum Beispiel 0,3mm aufweisen.

In einer weiteren Ausführungsform weist der Läufer mehrere Läuferspulen auf, welche im Bereich von lateralen Außenseiten des Läufers angeordnet sind. Auch diese Ausführungsform ist kompatibel zu einer Ausgestaltung des Läufers ohne freistellende Ausnehmung in dessen Mitte. In dieser Ausführungsform können mehrere mehrlagige Leiterplatten mit mehreren Lagen und mehreren übereinander angeordneten spiralförmigen Leiterbahnen eingesetzt werden. Die Leiterplatten können eine relativ große Anzahl an Lagen und übereinander angeordneten spiralförmigen Leiterbahnen umfassen, welche zum Beispiel sechs oder acht betragen kann. Auch können die verwendeten Leiterplatten eine Dicke von zum Beispiel 1mm besitzen. Des Weiteren können die Leiterplatten in Abstandshaltern des Läufers integriert sein, welche im Bereich der lateralen Außenseiten des Läufers vorhanden sein können.

Es kann auch ein gewickelter metallischer Draht als Läuferspule zum Einsatz kommen. In diesem Zusammenhang sind folgende Ausgestaltungen denkbar.

In einer weiteren Ausführungsform ist die wenigstens eine Läuferspule des Läufers in Form eines gewickelten Drahts ausgebildet und umschließt die Magneteinrichtung des Läufers. In dieser Ausgestaltung kann die induktive Energieübertragung von dem Stator zu dem Läufer mit einer hohen Effektivität erfolgen, und kann infolgedessen eine relativ große elektrische Leistung übertragen werden. Auch diese Ausführungsform ist kompatibel zu einer Ausgestaltung des Läufers ohne freistellende Ausnehmung in dessen Mitte. Die als gewickelter Draht verwirklichte Läuferspule kann im Bereich von lateralen Außenseiten des Läufers angeordnet sein. Ferner kann die Läuferspule in einem umlaufenden Abstandshalter bzw. einer umlaufenden Abstandshalterstruktur des Läufers integriert sein. Des Weiteren kann die Läuferspule eine Mehrzahl an umlaufenden Drahtwicklungen aufweisen.

Eine Ausgestaltung des Läufers ohne freistellende Ausnehmung in dessen Mitte, wie sie oben angedeutet wurde, ermöglicht eine relativ kleine Bauform des Läufers mit kleinen lateralen Abmessungen.

In einer weiteren Ausführungsform weist der Läufer einen Gleichrichter zum Umwandeln der induzierten Wechselspannung in eine Gleichspannung auf. Mit der Gleichspannung kann wenigstens eine weitere Einrichtung versorgt werden. Die weitere Einrichtung, welche Bestandteil des Läufers und/oder auf dem Läufer angeordnet sein kann, kann zum Beispiel eine Elektronik sein. Der Gleichrichter kann zum Beispiel ein Brückengleichrichter oder ein synchroner Gleichrichter sein. Des Weiteren kann der Gleichrichter als Spannungsverstärker bzw. Spannungsverdoppler ausgeführt sein.

Das Bestromen von Statorleitern des Stators dient wie oben angegeben zum Antreiben des Läufers. Das Antreiben des Läufers beruht auf einer magnetischen Wechselwirkung zwischen bestromten Statorleitern des Stators und der Magneteinrichtung des Läufers. Hierbei kann der Läufer schwebend über dem Stator gehalten sowie zusätzlich auch bewegt werden. Wie weiter unten noch näher erläutert wird, können die Statorleiter des Stators zu unabhängig voneinander bestrombaren Mehrspulen- bzw. Mehrphasensystemen zusammengeschaltet sein. Zum Antreiben des Läufers kann, in Abhängigkeit einer Position des Läufers, ein Teil der Statorleiter bzw. der Mehrphasensysteme gleichzeitig bestromt werden. Das Antreiben des Läufers kann auf dem Mittelwert des in bestromten Statorleitern fließenden Stroms basieren. Der durch die pulsweitenmodulierte Bestromung bedingte Rippelstrom kann hingegen keinen oder einen lediglich geringen und dadurch vernachlässigbaren Einfluss auf das Antreiben des Läufers haben.

Der in bestromten Statorleitern bzw. Mehrphasensystemen des Stators erzeugte Rippelstrom kann relativ groß sein, d.h. eine relativ große Schwingungsbreite (Spitze-TalWert, engl. Peak-to-Peak Amplitude) aufweisen. Möglich ist zum Beispiel eine Schwingungsbreite im einstelligen Ampere-Bereich, zum Beispiel in einem Bereich bis zu 4A. In entsprechender Weise kann das aufgrund des Rippelstroms erzeugte magnetische Wechselfeld eine relativ große Schwingungsbreite aufweisen, was eine effektive induktive Energieübertragung von dem Stator auf den Läufer möglich macht. Das Vorliegen eines relativ großen Rippelstroms kann von einer geringen Induktivität der als Primärspulen dienenden Statorleiter des Stators herrühren. Die Größe des Rippelstroms kann abhängig sein von dem Mittelwert des in bestromten Statorleitern fließenden Stroms.

Die bei dem Planarantriebssystem durchgeführte Stromregelung kann als Gleichstromregelung bzw. DC-Stromregelung (engl. Direct Current) bezeichnet werden. Im Betrieb des Planarantriebssystems können für Statorleiter bzw. Mehrphasensysteme des Stators im Rahmen der Stromregelung zwar unterschiedliche elektrische Sollstromwerte vorgegeben werden, so dass auch durch die Statorleiter im Mittel unterschiedliche elektrische Ströme fließen können. Im Vergleich zu dem überlagerten Rippelstrom können derartige Stromänderungen wesentlich langsamer sein bzw. sich auf wesentlich größere Zeiträume beziehen. Insofern kann, trotz der im Mittel unterschiedlichen Ströme, die Bezeichnung DC-Stromregelung zur Anwendung kommen.

Zum Durchführen der Stromregelung weist das Planarantriebssystem gemäß einer Ausführungsform mehrere Stromregler, PWM-Signalerzeugungseinrichtungen, mit den Statorleitern bzw. Mehrphasensystemen verbundene Endstufeneinrichtungen und Strommesseinrichtungen auf. Die Endstufeneinrichtungen können mehrere Endstufen umfassen. Derartige Komponenten können Bestandteile des Stators sein. Die Strommesseinrichtungen, welche zum Beispiel jeweils einen Analog-Digital-Umsetzer (engl. Analog-to-Digital Converter, ADC) umfassen können, können ausgebildet sein, Iststromwerte von Statorleitern bzw. Mehrphasensystemen zu erfassen. Die Iststromwerte können, zusammen mit Sollstromwerten, den Stromreglern übermittelt werden. Hinsichtlich der Iststromwerte kann der Stator ferner Verarbeitungseinrichtungen aufweisen, welche die mit den Strommesseinrichtungen gewonnenen Iststromwerte weiterverarbeiten, so dass diese in verarbeiteter Form an die Stromregler übermittelt werden können. Die Stromregler können ausgebildet sein, Steuersignale bzw. Sollspannungssignale zu erzeugen. Das Erzeugen der Steuersignale kann auf den Sollstromwerten und den (verarbeiteten) Iststromwerten basieren. Die PWM-Signalerzeugungseinrichtungen können ausgebildet sein, pulsweitenmodulierte Steuersignale zu erzeugen, welche an die Endstufeneinrichtungen angelegt werden. In diesem Sinne können die von den Stromreglern erzeugten Steuersignale mit Hilfe der PWM-Signalerzeugungseinrichtungen in die pulsweitenmodulierten Steuersignale umgesetzt werden. Hierauf basierend können mit Hilfe der Endstufeneinrichtungen pulsweitenmodulierte bzw. getaktete Spannungspulse an Statorleiter bzw. Mehrphasensysteme des Stators angelegt werden, wodurch diese periodisch bestromt werden. Die Endstufeneinrichtungen können zu diesem Zweck mit einer Zwischenkreisspannung versorgt werden.

In einer weiteren Ausführungsform weist das Planarantriebssystem eine Hauptsteuervorrichtung auf, welche ausgebildet ist, Sollstromwerte für das Bestromen von Statorleitern bzw. Mehrphasensystemen des Stators zu erzeugen. Die Sollstromwerte können an die vorstehend genannten Stromregler übermittelt werden.

Die Hauptsteuervorrichtung kann des Weiteren zum Festlegen eines Systemtakts des Planarantriebssystems ausgebildet sein, nach welchem sich der zeitliche Ablauf des Betriebs des Planarantriebssystems richten kann. Basierend auf dem Systemtakt können in diesem Zusammenhang zeitliche Parameter der Stromregelung wie die PWM-Taktfrequenz vorgegeben sein.

In einer weiteren Ausführungsform weist der Stator des Planarantriebssystems ein oder mehrere Statormodule auf. Bei einer Ausgestaltung mit mehreren Statormodulen können diese lateral nebeneinander angeordnet sein. Ein solches Statormodul kann mehrere der oben genannten Komponenten, also mehrere Statorleiter bzw. Mehrphasensysteme, Stromregler, PWM-Signalerzeugungseinrichtungen, Endstufeneinrichtungen, Strommesseinrichtungen und Verarbeitungseinrichtungen aufweisen. Des Weiteren kann das bzw. jedes Statormodul eine Modulsteuervorrichtung aufweisen, welche die Stromregler, PWM-Signalerzeugungseinrichtungen und Verarbeitungseinrichtungen des jeweiligen Statormoduls umfassen kann. Die Modulsteuervorrichtung kann zum Beispiel in Form eines FPGAs (engl. Field Programmable Gate Array) verwirklicht sein.

Die Stromregelung bei einem solchen Statormodul kann entsprechend der oben beschriebenen Weise dadurch erfolgen, dass mit Hilfe der zugehörigen Strommesseinrichtungen Iststromwerte von Statorleitern bzw. Mehrphasensystemen erfasst werden. Diese können der Modulsteuervorrichtung des Statormoduls zugeführt werden, und mit Hilfe von Verarbeitungseinrichtungen der Modulsteuervorrichtung verarbeitet und an Stromregler der Modulsteuervorrichtung übermittelt werden. Des Weiteren können den Stromreglern der Modulsteuervorrichtung von der Hauptsteuervorrichtung erzeugte Sollstromwerte übermittelt werden. Die Stromregler können, basierend auf den Sollstromwerten und den verarbeiteten Iststromwerten, Steuersignale erzeugen, welche durch die PWM-Signalerzeugungseinrichtungen der Modulsteuervorrichtung in pulsweitenmodulierte und damit getaktete Steuersignale umgesetzt und an Endstufeneinrichtungen des zugehörigen Statormoduls angelegt werden können.

Wie oben angedeutet wurde, ist gemäß einer weiteren Ausführungsform vorgesehen, dass die Statorleiter des Stators zu unabhängig voneinander bestrombaren Mehrphasensystemen zusammengeschaltet sind. Jedes Mehrphasensystem kann mehrere aus Statorleitern gebildete Spulen aufweisen. Insofern können die Mehrphasensysteme auch als Spulensysteme bzw. Mehrspulensysteme bezeichnet werden. Zum Antreiben des Läufers kann ein Teil der Mehrphasensysteme gleichzeitig bestromt werden.

In Bezug auf die vorgenannte Ausgestaltung kann der Stator des Planarantriebssystems ausgebildet sein, Mehrphasensysteme desselben mit einem Mehrphasenstrom zu beaufschlagen. Hierbei kann jede Spule eines bestromten Mehrphasensystems mit einer entsprechenden Phase des Stroms gespeist werden. Die zu diesem Zweck mit Hilfe des Stators durchgeführte Stromregelung kann auf Basis einer mittenzentrierten Pulsweitenmodulation (engl. Center Aligned PWM) erfolgen, bei welcher die Spulen eines Mehrphasensystems mit bezüglich der PWM-Taktfrequenz bzw. eines Zeitrasters der Pulsweitenmodulation mittig zueinander zentrierten Spannungspulsen beaufschlagt werden.

Die Mehrphasensysteme des Stators können Dreiphasensysteme bzw. Dreispulensysteme sein, welche jeweils drei aus Statorleitern gebildete und mit jeweils einem gemeinsamen Sternpunkt zusammengeschaltete Spulen umfassen. Im Betrieb des Planarantriebssystems können derartige Spulensysteme mit einem Dreiphasenstrom beaufschlagt werden. Mit Bezug auf diese Ausgestaltung können die Endstufeneinrichtungen in Form von Schaltungen mit dreifachen Halbbrücken verwirklicht sein.

Im Hinblick auf das unabhängige Bestromen von Mehrphasensystemen ist der Stator ausgebildet, für jedes Mehrphasensystem eine eigene Stromregelung durchzuführen. Hierzu kann der Stator oben bereits genannte Komponenten, d.h. Stromregler, PWM-Signalerzeugungseinrichtungen, mit den Mehrphasensystemen verbundene Endstufeneinrichtungen, Strommesseinrichtungen und Verarbeitungseinrichtungen aufweisen. Die Strommesseinrichtungen können zum Erfassen von Iststromwerten von Statorleitern bzw. Spulen der Mehrphasensysteme ausgebildet sein. Dies kann durch Abtasten erfolgen. Die Verarbeitungseinrichtungen können zum Verarbeiten der erfassten Iststromwerte ausgebildet sein. Hierbei kann eine Koordinatentransformation (Clarke-Park-Transformation) der an einem Mehrphasensystem gewonnenen Iststromwerte durchgeführt werden. Die Stromregler können ausgebildet sein, basierend auf Sollstromwerten und verarbeiteten Iststomwerten Steuersignale bzw. Spannungssignale zu erzeugen. Die PWM-Signalerzeugungseinrichtungen können ausgebildet sein, pulsweitenmodulierte Steuersignale zu erzeugen bzw. die von den Stromreglern ausgegebenen Steuersignale in pulsweitenmodulierte Steuersignale umzusetzen. Im Rahmen der Umsetzung kann ebenfalls eine Koordinatentransformation (inverse Clarke-Park-Transformation) durchgeführt werden. Die von den PWM-Signalerzeugungseinrichtungen erzeugten pulsweitenmodulierten Steuersignale können an Endstufeneinrichtungen angelegt werden, wodurch zugehörige Mehrphasensysteme mit periodischen Spannungspulsen beaufschlagt und dadurch bestromt werden können. Hierbei können die Mehrphasensysteme mit mittenzentrierten Spanungspulsen beaufschlagt werden.

Es ist möglich, dass der Stator für jedes Mehrphasensystem einen Stromregler, eine PWM-Signalerzeugungseinrichtung, eine Endstufeneinrichtung und eine Verarbeitungseinrichtung aufweist. Auch kann für jedes Mehrphasensystem eine dem jeweiligen Mehrphasensystem zugehörige Strommesseinrichtung vorhanden sein. Die Strommesseinrichtungen können dazu ausgebildet sein, in den zugehörigen Mehrphasensystemen fließende Ströme abzutasten bzw. periodisch abzutasten. Bei der oben genannten Ausgestaltung der Mehrphasensysteme als Dreiphasensysteme in Sternschaltung kann sich das Abtasten jeweils auf zwei der drei Spulen eines Dreiphasensystems beziehen. Denn anhand der in den zwei abgetasteten Spulen fließenden Ströme kann auf den in der nicht abgetasteten Spule fließenden Strom geschlossen werden. Alternativ kann die hiervon abweichende und im Folgenden beschriebene Ausführungsform in Betracht kommen.

In einer weiteren Ausführungsform, in welcher die Statorleiter des Stators zu unabhängig voneinander bestrombaren Mehrphasensystemen zusammengeschaltet sind und der Stator ausgebildet ist, für jedes Mehrphasensystem eine eigene Stromregelung durchzuführen, weist der Stator für das Durchführen der Stromregelung mehrere Strommesseinrichtungen auf, wobei die Strommesseinrichtungen jeweils mit einer Gruppe aus mehreren Mehrphasensystemen verbunden, und damit jeweils einer solchen Gruppe aus Mehrphasensystemen zugeordnet sind. Die Strommesseinrichtungen sind ferner ausgebildet, in Mehrphasensystemen der jeweils zugehörigen Gruppe fließende Ströme periodisch abzutasten und das Abtasten der Ströme lediglich in Bezug auf eines der Mehrphasensysteme simultan durchzuführen. Diese Ausführungsform, in welcher der Stator jeweils eine Strommesseinrichtung für eine Gruppe aus mehreren Mehrphasensystemen aufweist, kann sich durch einen geringen Hardwareaufwand und dadurch geringe Kosten auszeichnen.

Bei der oben genannten Ausgestaltung der Mehrphasensysteme als Dreiphasensysteme in Sternschaltung kann sich das simultane Abtasten jeweils auf zwei der drei Spulen eines Dreiphasensystems beziehen. Denn anhand der in den zwei abgetasteten Spulen fließenden Ströme kann auf den in der nicht abgetasteten Spule fließenden Strom geschlossen werden.

Bei dem periodischen Abtasten können Iststromwerte der Ströme gewonnen werden. Das Abtasten kann an vorgegebenen Zeitpunkten erfolgen. Es kann ferner in Betracht kommen, das Abtasten eines Mehrphasensystems zeitlich abgestimmt auf dessen pulsweitenmodulierte Bestromung durchzuführen. Hierbei können die Abtastzeitpunkte derart gewählt sein bzw. derart mit der Taktfrequenz der Pulsweitenmodulation synchronisiert sein,
dass die durch das Abtasten gewonnenen Iststromwerte dem Mittelwert des jeweiligen Stroms entsprechen. Zu diesem Zweck kann das Abtasten zeitlich mittig zwischen entsprechenden Spannungspulsen erfolgen (sogenanntes Regular-Sampling-Verfahren). Auch kann pro PWM-Taktperiode jeweils eine Messung durchgeführt werden. Diese Vorgehensweise ermöglicht eine genaue Stromregelung.

In der oben genannten Ausführungsform kommt jeweils für eine Gruppe aus mehreren Mehrphasensystemen nur eine Strommesseinrichtung zum Einsatz. Die Strommesseinrichtung ist ferner ausgebildet, die Stromabtastung lediglich in Bezug auf eines der Mehrphasensysteme der zugehörigen Gruppe simultan durchzuführen.

Um auch in einem solchen Fall eine genaue Stromregelung bereitzustellen, ist der Stator gemäß einer weiteren Ausführungsform ausgebildet, das periodische Abtasten der Ströme von Mehrphasensystemen einer Gruppe mit Hilfe der zugehörigen Strommesseinrichtung zeitlich abgestimmt auf deren pulsweitenmodulierte Bestromung durchzuführen. Der Stator ist des Weiteren ausgebildet, das pulsweitenmodulierte Bestromen von Mehrphasensystemen der Gruppe und das hierauf abgestimmte Abtasten mit einem Zeitversatz zueinander, oder anders ausgedrückt, in zueinander versetzten Zeitrastern, durchzuführen. Der Zeitversatz, welcher jeweils zwischen dem pulsweitenmodulierten Bestromen von verschiedenen Mehrphasensystemen der betreffenden Gruppe und zwischen dem Abtasten von verschiedenen Mehrphasensystemen der Gruppe bzw. von einem Mehrphasensystem zum jeweils nächsten Mehrphasensystem der Gruppe vorliegt, entspricht einer Abtastzeitdauer bzw. minimalen Abtastzeitdauer der Strommesseinrichtungen. Diese Ausführungsform kann in Bezug auf jede Gruppe aus Mehrphasensystemen des Stators zur Anwendung kommen. Das pulsweitenmodulierte Bestromen von Mehrphasensystemen mit einem Zeitversatz zueinander bietet die Möglichkeit, eine Entlastung eines die Zwischenkreisspannung bereitstellenden Zwischenkreises zu erzielen.

In der vorgenannten Ausführungsform werden Mehrphasensysteme einer Gruppe jeweils abgestimmt auf deren pulsweitenmodulierte elektrische Ansteuerung abgetastet. Hierbei kann pro PWM-Periode jeweils eine Strommessung erfolgen. Auch können Strommittelwerte als Iststromwerte erhalten werden, was eine genaue Stromregelung möglich macht. Da mit Hilfe der zugehörigen Strommesseinrichtung jeweils lediglich ein Mehrphasensystem simultan abgetastet werden kann, werden mehrere bzw. sämtliche Mehrphasensysteme der betreffenden Gruppe zeitlich zueinander versetzt bzw. in zueinander versetzten Zeitrastern mit Hilfe der Strommesseinrichtung abgetastet und, hierzu korrespondierend, zeitlich zueinander versetzt bzw. in zueinander versetzten Zeitrastern auf Basis der Pulsweitenmodulation bestromt. Die oben genannten Zeitraster können durch die Taktfrequenz der Pulsweitenmodulation vorgegeben sein, anhand derer die getaktete Bestromung der Mehrphasensysteme durchgeführt wird.

Im Betrieb des Stators können auch Mehrphasensysteme von mehreren Gruppen aus Mehrphasensystemen, welche in entsprechender Weise unterschiedlichen Strommesseinrichtungen zugeordnet sind, gleichzeitig bestromt werden. Hierbei ist es möglich, dass die versetzten Zeitraster in den unterschiedlichen Gruppen zueinander synchron sind oder mit anderen Worten, dass jeweils Mehrphasensysteme aus den unterschiedlichen Gruppen synchron zueinander pulsweitenmoduliert bestromt und synchron zueinander abgetastet werden.

Gemäß der oben genannten Ausführungsform ist weiter vorgesehen, dass der Zeitversatz einer Abtastzeitdauer bzw. minimalen Abtastzeitdauer der Strommesseinrichtungen entspricht. Hierbei handelt es sich um die Zeitdauer, welche eine Strommesseinrichtung zum simultanen Abtasten der Ströme eines zugehörigen Mehrphasensystems benötigt. Diese Ausgestaltung trägt dem Umstand Rechnung, dass sich der Läufer und damit die wenigstens eine Läuferspule des Läufers im Betrieb des Planarantriebssystems über bzw. im Einflussbereich von mehreren bestromten Mehrphasensystemen des Stators befinden können. Auf diese Weise kann die Läuferspule dem Einfluss eines resultierenden magnetischen Wechselfelds ausgesetzt sein, welches durch eine Überlagerung mehrerer magnetischer Wechselfelder, jeweils hervorgerufen durch die in den betreffenden Mehrphasensystemen fließenden Rippelströme, gebildet ist. Das oben beschriebene, zueinander versetzte pulsweitenmodulierte elektrische Ansteuern von Mehrphasensystemen hat zur Folge, dass auch die Rippelströme und damit die hierdurch hervorgerufenen magnetischen Wechselfelder zueinander versetzt bzw. phasenverschoben sind. Auf diese Weise kann es, je nach Position des Läufers, zu unterschiedlichen konstruktiven sowie auch destruktiven bzw. abschwächenden Überlagerungen von magnetischen Wechselfeldern mit unterschiedlichen Feldstärkeänderungen kommen. In entsprechender Weise kann die in der Läuferspule induzierte Wechselspannung und damit die von dem Stator auf den Läufer übertragene Energie unterschiedlich groß sein.

Bei der vorstehend genannten Ausführungsform erfolgt das versetzte pulsweitenmodulierte Bestromen von Mehrphasensystemen daher mit einem minimalen Zeitversatz in Form der Abtastzeitdauer der Strommesseinrichtungen. Hierdurch kann erreicht werden, dass sich die magnetischen Wechselfelder von bestromten Mehrphasensystemen teilweise bzw. zu einem relativ großen Teil konstruktiv überlagern. Auf diese Weise kann die induktive Energieübertragung von dem Stator auf den Läufer möglichst effektiv und größtenteils positionsunabhängig sein, und können Schwankungen in der Güte der Energieübertragung relativ klein sein. Durch den minimalen Versatz lässt sich ferner vermeiden, dass zum Zeitpunkt eines Abtastens eines Mehrphasensystems bei einem anderen Mehrphasensystem eine Spannungsänderung erfolgt, und es dadurch zu einer Störung der Strommessung kommt. Die minimale Abtastzeitdauer kann zum Beispiel im einstelligen Mikrosekundenbereich liegen und zum Beispiel 1,2µs betragen.

In einer weiteren bzw. alternativen Ausführungsform ist der Stator ausgebildet, in einem ersten Betriebsmodus das periodische Abtasten der Ströme von Mehrphasensystemen einer Gruppe mit Hilfe der zugehörigen Strommesseinrichtung zeitlich abgestimmt auf deren pulsweitenmodulierte Bestromung, und das pulsweitenmodulierte Bestromen von Mehrphasensystemen der Gruppe und das hierauf abgestimmte Abtasten mit einem Zeitversatz zueinander, oder anders ausgedrückt, in zueinander versetzten Zeitrastern, durchzuführen. Entsprechend der obigen Beschreibung kann pro PWM-Periode jeweils eine Strommessung erfolgen, und können Strommittelwerte als Iststromwerte erhalten werden, was eine genaue Stromregelung ermöglicht. Der Stator ist des Weiteren ausgebildet, in einem zweiten Betriebsmodus das pulsweitenmodulierte Bestromen von Mehrphasensystemen der Gruppe zeitlich synchron zueinander, und das periodische Abasten von in den Mehrphasensystemen der Gruppe fließenden Strömen mit Hilfe der zugehörigen Strommesseinrichtung mit einem Zeitversatz zueinander durchzuführen. Auch diese Ausführungsform kann in Bezug auf jede Gruppe aus Mehrphasensystemen des Stators zur Anwendung kommen. Der in dem ersten Betriebsmodus und der in dem zweiten Betriebsmodus vorliegende Zeitversatz kann jeweils der Abtastzeitdauer bzw. minimalen Abtastzeitdauer der Strommesseinrichtungen entsprechen.

In dem ersten Betriebsmodus erfolgt die Stromregelung wie bei der zuvor beschriebenen Ausführungsform. Dieser Betriebsmodus kann eingesetzt werden, wenn eine Energieübertragung von dem Stator auf den Läufer nicht erforderlich bzw. nicht vorgesehen ist oder anders ausgedrückt, wenn eine in der wenigstens einen Läuferspule induzierte Wechselspannung nicht genutzt wird.

Der zweite Betriebsmodus kann hingegen verwendet werden, um in gezielter Weise eine effiziente Energieübertragung von dem Stator auf den Läufer zu bewirken. In dem zweiten Betriebsmodus erfolgt das Bestromen von Mehrphasensystemen einer Gruppe synchron zueinander, oder anders ausgedrückt, ohne Zeitversatz und dadurch in einem gemeinsamen Zeitraster. Wie oben angedeutet wurde, können im Betrieb des Planarantriebssystems auch Mehrphasensysteme von mehreren Gruppen aus Mehrphasensystemen gleichzeitig bestromt werden. In diesem Zusammenhang können in dem zweiten Betriebsmodus auch Mehrphasensysteme von mehreren Gruppen zeitlich synchron zueinander bzw. in einem gemeinsamen Zeitraster pulsweitenmoduliert bestromt werden. Das zeitlich synchrone Bestromen von mehreren Mehrphasensystemen hat zur Folge, dass die in den jeweiligen Mehrphasensystemen fließenden Rippelströme und die hierdurch hervorgerufenen magnetischen Wechselfelder zueinander synchron und in Phase sind, und sich ausschließlich oder weitestgehend konstruktiv überlagern. Auf diese Weise können relativ große magnetische Feldstärkeänderungen bewirkt und kann insofern eine relativ große Wechselspannung in der wenigstens einen Läuferspule des Läufers induziert werden. Dies ermöglicht eine effektive und darüber hinaus positionsunabhängige Energieübertragung von dem Stator auf den Läufer.

In dem zweiten Betriebsmodus kann ebenfalls pro PWM-Periode jeweils eine Strommessung erfolgen. Aufgrund des in dem zweiten Betriebsmodus vorliegenden Zeitversatzes, welcher zwischen dem Abtasten von verschiedenen Mehrphasensystemen einer jeweiligen Gruppe bzw. von einem Mehrphasensystem zum jeweils nächsten Mehrphasensystem der Gruppe vorliegt, kann in dem zweiten Betriebsmodus allerdings lediglich ein Mehrphasensystem der Gruppe derart abgestimmt auf dessen pulsweitenmodulierte Bestromung abgetastet werden, dass für dieses Mehrphasensystem der Gruppe Strommittelwerte als Iststromwerte gewonnen werden. Für eines oder mehrere andere Mehrphasensysteme der betreffenden Gruppe ist dies aufgrund des in dem zweiten Betriebsmodus zueinander versetzt durchgeführten Abtastens hingegen nicht möglich. Dies hat zur Folge, dass für diese Mehrphasensysteme von den Strommittelwerten abweichende Iststromwerte ermittelt werden können. Hierdurch kann die Genauigkeit der Stromregelung etwas beeinträchtigt sein. Wie oben angegeben wurde, kann der zweite Betriebsmodus jedoch lediglich für den Fall einer gezielten Energieübertragung von dem Stator auf den Läufer, und dadurch zeitlich begrenzt zur Anwendung kommen, so dass eine solche Beeinträchtigung vernachlässigt werden kann.

Das Bestromen von Mehrphasensystemen von einer oder mehreren Gruppen aus Mehrphasensystemen des Stators entsprechend des ersten oder zweiten Betriebsmodus kann durch die Hauptsteuervorrichtung des Planarantriebssystems festgelegt bzw. initiiert werden. Die Hauptsteuervorrichtung kann hierzu entsprechende Steuersignale an eine oder mehrere Stromregler bzw. Modulsteuervorrichtungen übermitteln, um den jeweiligen Betriebsmodus vorzugeben.

In einer weiteren Ausführungsform weist der Stator eine optional zuschaltbare Beeinflussungseinrichtung auf, welche ausgebildet ist, die Stromregelung derart zu beeinflussen, dass ein verstärkter Rippelstrom in bestromten Statorleitern bzw. in einem oder mehreren bestromten Mehrphasensystemen des Stators und dadurch ein verstärktes magnetisches Wechselfeld erzeugt werden kann. Dies kann derart erfolgen, dass ein Mittelwert eines in bestromten Statorleitern bzw. Mehrphasensystemen fließenden Stroms unverändert bleibt.

Der mit Hilfe der Beeinflussungseinrichtung verstärkte Rippelstrom sowie das verstärkte magnetische Wechselfeld können eine vergrößerte Schwingungsbreite aufweisen. Durch das verstärkte magnetische Wechselfeld kann eine vergrößerte Wechselspannung, welche ebenfalls eine vergrößerte Schwingungsbreite aufweisen kann, in der wenigstens einen Läuferspule des Läufers induziert werden. Auf diese Weise kann eine effektive Energieübertragung von dem Stator auf den Läufer erzielt werden. Ferner besteht die Möglichkeit, mit Hilfe der Beeinflussungseinrichtung die Größe bzw. Schwingungsbreite des Rippelstroms unabhängig von dem Mittelwert des in elektrisch angesteuerten Statorleitern fließenden Stroms zu beeinflussen.

Die Beeinflussungseinrichtung kann zum Beispiel ausgebildet sein, Beeinflussungssignale zu erzeugen, welche den von einem oder mehreren Stromreglern erzeugten Steuersignalen hinzugefügt werden können, bevor diese an eine oder mehrere PWM-Signalerzeugungseinrichtungen übermittelt werden. Die auf die Steuersignale aufaddierten Beeinflussungssignale können zum Beispiel in Form einer mittelwertfreien Wechselspannung vorliegen oder den Effekt einer solchen Wechselspannung wiedergeben. Auf diese Weise kann erreicht werden, dass der Mittelwert der ausgegebenen Spannung, und damit auch der Mittelwert des in bestromten Statorleitern fließenden Stroms, wie oben angegeben, gleich bleibt. Diese Gegebenheit kann sich auf mehrere PWM-Perioden beziehen. Alternativ besteht die Möglichkeit, dass die Beeinflussungssignale den von einer oder mehreren PWM-Signalerzeugungseinrichtungen erzeugten pulsweitenmodulierten Steuersignalen hinzugefügt werden, bevor diese an entsprechende Endstufeneinrichtungen angelegt werden.

Mit Hilfe der Beeinflussungssignale kann eine Verstärkung des in bestromten Statorleitern fließenden Rippelstroms bewirkt werden. Es ist zum Beispiel möglich, dass infolge der Beeinflussungssignale Spannungspulse mit unterschiedlichen Pulsdauern und/oder zueinander inversen Polaritäten an Statorleiter bzw. an ein oder mehrere Mehrphasensysteme angelegt werden. Beispielsweise können nacheinander im Wechsel mehrere Spannungspulse mit vergrößerter Pulsdauer und anschließend mehrere Spannungspulse mit im Vergleich zu den vorhergehenden Spannungspulsen inverser Polarität vorliegen.

Der Stator kann eine Beeinflussungseinrichtung oder, bei einer Ausgestaltung des Stators mit mehreren Statormodulen, jeweils eine Beeinflussungseinrichtung pro Statormodul aufweisen. Möglich ist es auch, dass der Stator für jedes Mehrphasensystem und damit jeden Stromregler bzw. jede PWM-Signalerzeugungseinrichtung eine eigene Beeinflussungseinrichtung aufweist. Eine oder mehrere Beeinflussungseinrichtungen können jeweils in einer Modulsteuervorrichtung eines Statormoduls integriert sein. Ein Aktivieren von einer oder mehreren Beeinflussungseinrichtungen zum Beeinflussen der Stromregelung, sowie auch ein Deaktivieren derselben, kann durch die Hauptsteuervorrichtung des Planarantriebssystems veranlasst werden. Die Hauptsteuervorrichtung kann hierzu entsprechende Steuersignale an eine oder mehrere Beeinflussungseinrichtungen bzw. Modulsteuervorrichtungen übermitteln.

Gemäß einem weiteren Aspekt der Erfindung wird ein Verfahren zum Betreiben eines Planarantriebssystems vorgeschlagen. Das Planarantriebssystem kann wie oben beschrieben bzw. gemäß einer oder mehrerer der oben beschriebenen Ausführungsformen ausgebildet sein. Das Planarantriebssystem weist einen Stator und einen Läufer auf. Der Stator weist mehrere Statorleiter auf. Der Läufer weist eine Magneteinrichtung mit wenigstens einem Läufermagneten auf. Durch Bestromen von Statorleitern des Stators wird eine magnetische Wechselwirkung zwischen bestromten Statorleitern und der Magneteinrichtung des Läufers hervorgerufen, um den Läufer anzutreiben. Das Bestromen der Statorleiter wird durch eine Stromregelung auf Basis einer Pulsweitenmodulation durchgeführt. Aufgrund der pulsweitenmodulierten Stromregelung wird ein Rippelstrom in bestromten Statorleitern des Stators und dadurch ein magnetisches Wechselfeld erzeugt. Der Läufer weist wenigstens eine Läuferspule auf, in welcher aufgrund des magnetischen Wechselfelds eine Wechselspannung induziert wird.

Mit Hilfe des vorgeschlagenen Verfahrens kann eine zuverlässige induktive Energieübertragung von dem Stator zu dem Läufer bewirkt werden. Für die Energieübertragung wird der durch die pulsweitenmodulierte Bestromung erzeugte Rippelstrom und das durch den Rippelstrom im Bereich des Läufers hervorgerufene magnetische Wechselfeld genutzt.

Für das Verfahren können dieselben Merkmale, Details und Ausführungsformen zur Anwendung kommen und können dieselben Vorteile in Betracht kommen, wie sie oben mit Bezug auf das Planarantriebssystem erläutert wurden.

In diesem Sinne ist gemäß einer möglichen Ausführungsform vorgesehen, dass die Statorleiter des Stators zu unabhängig voneinander bestrombaren Mehrphasensystemen zusammengeschaltet sind. Des Weiteren wird für jedes bestromte Mehrphasensystem eine eigene Stromregelung durchgeführt. Für das Durchführen der Stromregelung weist der Stator mehrere Strommesseinrichtungen auf, welche jeweils mit einer Gruppe aus mehreren Mehrphasensystemen verbunden, und damit jeweils einer solchen Gruppe aus Mehrphasensystemen zugeordnet sind. Mit Hilfe der Strommesseinrichtungen werden in bestromten Mehrphasensystemen der jeweils zugehörigen Gruppe fließende Ströme periodisch abgetastet. Hierbei wird das Abtasten der Ströme lediglich in Bezug auf eines der Mehrphasensysteme simultan durchgeführt. Diese Ausführungsform lässt sich mit einem geringen Hardwareaufwand des Stators verwirklichen.

Neben den Strommesseinrichtungen kann der Stator, wie oben angegeben wurde, weitere Komponenten aufweisen. Hierunter fallen Stromregler, PWM-Signalerzeugungseinrichtungen, mit den Mehrphasensystemen verbundene Endstufeneinrichtungen und Verarbeitungseinrichtungen.

In einer weiteren Ausführungsform wird das periodische Abtasten der Ströme von Mehrphasensystemen einer Gruppe mit Hilfe der zugehörigen Strommesseinrichtung zeitlich abgestimmt auf deren pulsweitenmodulierte Bestromung durchgeführt. Des Weiteren wird das pulsweitenmodulierte Bestromen von Mehrphasensystemen der Gruppe und das hierauf abgestimmte Abtasten mit einem Zeitversatz zueinander durchgeführt. Der Zeitversatz, welcher jeweils zwischen dem pulsweitenmodulierten Bestromen von verschiedenen Mehrphasensystemen der betreffenden Gruppe und zwischen dem Abtasten von verschiedenen Mehrphasensystemen der Gruppe bzw. von einem Mehrphasensystem zum jeweils nächsten Mehrphasensystem der Gruppe vorliegt, entspricht einer Abtastzeitdauer bzw. minimalen Abtastzeitdauer der Strommesseinrichtungen. Diese Ausführungsform kann in Bezug auf jede bestromte Gruppe aus Mehrphasensystemen des Stators zur Anwendung kommen.

Bei dem Abtasten von Mehrphasensystemen einer Gruppe abgestimmt auf deren pulsweitenmodulierte Bestromung können Strommittelwerte als Iststromwerte erhalten werden, was eine genaue Stromregelung ermöglicht. Aufgrund der oben genannten Gegebenheit, dass mit Hilfe der zugehörigen Strommesseinrichtung jeweils lediglich ein Mehrphasensystem simultan abgetastet wird, werden mehrere bzw. sämtliche Mehrphasensysteme der betreffenden Gruppe mit einem Zeitversatz zueinander, oder anders ausgedrückt, in zueinander versetzten Zeitrastern, abgetastet als auch pulsweitenmoduliert bestromt. Der Zeitversatz entspricht der (minimalen) Abtastzeitdauer der Strommesseinrichtungen, wodurch eine größtenteils von der Position des Läufers unabhängige Energieübertragung von dem Stator auf den Läufer erzielt werden kann.

In einer weiteren Ausführungsform werden in einem ersten Betriebsmodus das periodische Abtasten der Ströme von Mehrphasensystemen einer Gruppe mit Hilfe der zugehörigen Strommesseinrichtung zeitlich abgestimmt auf deren pulsweitenmodulierte Bestromung, und das pulsweitenmodulierte Bestromen von Mehrphasensystemen der Gruppe und das hierauf abgestimmte Abtasten mit einem Zeitversatz zueinander durchgeführt. Hierbei können Strommittelwerte als Iststromwerte erhalten werden, was eine genaue Stromregelung ermöglicht. In einem zweiten Betriebsmodus werden das pulsweitenmodulierte Bestromen von Mehrphasensystemen der Gruppe zeitlich synchron zueinander, und das periodische Abasten von in den Mehrphasensystemen der Gruppe fließenden Strömen mit Hilfe der zugehörigen Strommesseinrichtung mit einem Zeitversatz zueinander durchgeführt. Diese Ausführungsform kann in Bezug auf eine oder mehrere bestromte Gruppen aus Mehrphasensystemen des Stators zur Anwendung kommen. Der in dem ersten Betriebsmodus und der in dem zweiten Betriebsmodus vorliegende Zeitversatz kann jeweils der Abtastzeitdauer der Strommesseinrichtungen entsprechen.

Der erste Betriebsmodus kann für den Fall zum Einsatz kommen, dass eine Energieübertragung von dem Stator auf den Läufer nicht erforderlich bzw. nicht vorgesehen ist. Der zweite Betriebsmodus kann im Unterschied hierzu zu dem Zweck verwendet werden, in gezielter Weise eine induktive Energieübertragung von dem Stator auf den Läufer hervorzurufen. Hierbei können auch Mehrphasensysteme von mehreren Gruppen aus Mehrphasensystemen in dem zweiten Betriebsmodus betrieben werden, um deren Mehrphasensysteme synchron zueinander, oder anders ausgedrückt, in einem gemeinsamen Zeitraster, zu bestromen. Auf diese Weise können die in den betreffenden Mehrphasensystemen fließenden Rippelströme und die hierdurch hervorgerufenen magnetischen Wechselfelder zueinander in Phase sein und sich konstruktiv überlagern, so dass eine relativ große Wechselspannung in der wenigstens einen Läuferspule des Läufers induziert werden kann. Wie oben angegeben wurde, kann die Genauigkeit der Stromregelung in dem zweiten Betriebsmodus zwar etwas beeinträchtigt sein. Da der zweite Betriebsmodus jedoch lediglich zur gezielten Energieübertragung von dem Stator auf den Läufer, und dadurch zeitlich begrenzt zur Anwendung kommen kann, kann eine solche Beeinträchtigung vernachlässigt werden.

In einer weiteren Ausführungsform wird mit Hilfe einer optional zuschaltbaren Beeinflussungseinrichtung des Stators die Stromregelung derart beeinflusst, dass ein verstärkter Rippelstrom in bestromten Statorleitern des Stators und dadurch ein verstärktes magnetisches Wechselfeld erzeugt wird. Dies kann derart erfolgen, dass ein Mittelwert eines in bestromten Statorleitern fließenden Stroms unverändert bleibt. Durch das verstärkte magnetische Wechselfeld kann eine vergrößerte Wechselspannung in der wenigstens einen Läuferspule des Läufers induziert werden, was eine effektive Energieübertragung von dem Stator auf den Läufer ermöglicht.

Es wird ferner ein Stator für ein Planarantriebssystem zum Antreiben eines Läufers beschrieben. Der Läufer weist eine Magneteinrichtung mit wenigstens einem Läufermagneten und wenigstens eine Läuferspule auf. Der Stator weist mehrere Statorleiter auf. Der Stator ist zum Bestromen der Statorleiter ausgebildet. Zwischen bestromten Statorleitern des Stators und der Magneteinrichtung des Läufers kann eine magnetische Wechselwirkung hervorgerufen werden, um den Läufer anzutreiben. Der Stator ist ausgebildet, das Bestromen der Statorleiter durch eine Stromregelung auf Basis einer Pulsweitenmodulation durchzuführen. Aufgrund der Stromregelung auf Basis der Pulsweitenmodulation kann ein Rippelstrom in bestromten Statorleitern des Stators und dadurch ein magnetisches Wechselfeld erzeugt werden, mit dessen Hilfe eine Wechselspannung in der wenigstens eine Läuferspule des Läufers induziert werden kann.

Für den Stator können dieselben Merkmale, Details und Ausführungsformen zur Anwendung kommen und können dieselben Vorteile in Betracht kommen, wie sie oben mit Bezug auf das Planarantriebssystem und für das Verfahren erläutert wurden. Denkbar sind zum Beispiel folgende Ausführungsformen.

In einer möglichen Ausführungsform weist der Stator ein oder mehrere Statormodule auf. Bei einer Ausgestaltung des Stators mit mehreren Statormodulen können diese lateral nebeneinander angeordnet sein.

In einer weiteren Ausführungsform sind die Statorleiter des Stators zu unabhängig voneinander bestrombaren Mehrphasensystemen zusammengeschaltet. Der Stator ist ausgebildet, für jedes Mehrphasensystem eine eigene Stromregelung durchzuführen. Für das Durchführen der Stromregelung weist der Stator mehrere Strommesseinrichtungen auf. Die Strommesseinrichtungen sind jeweils mit einer Gruppe aus mehreren Mehrphasensystemen verbunden. Die Strommesseinrichtungen sind ausgebildet, in den Mehrphasensystemen der jeweils zugehörigen Gruppe fließende Ströme periodisch abzutasten und das Abtasten der Ströme lediglich in Bezug auf eines der Mehrphasensysteme simultan durchzuführen.

In einer weiteren Ausführungsform ist der Stator ausgebildet, das periodische Abtasten der Ströme von Mehrphasensystemen einer Gruppe mit Hilfe der zugehörigen Strommesseinrichtung zeitlich abgestimmt auf deren pulsweitenmodulierte Bestromung durchzuführen. Der Stator ist des Weiteren ausgebildet, das pulsweitenmodulierte Bestromen von Mehrphasensystemen der Gruppe und das hierauf abgestimmte Abtasten mit einem Zeitversatz zueinander durchzuführen. Der Zeitversatz, welcher jeweils zwischen dem pulsweitenmodulierten Bestromen von verschiedenen Mehrphasensystemen der Gruppe und zwischen dem Abtasten von verschiedenen Mehrphasensystemen der Gruppe bzw. von einem Mehrphasensystem zum jeweils nächsten Mehrphasensystem der Gruppe besteht, entspricht einer Abtastzeitdauer der Strommesseinrichtungen.

In einer weiteren Ausführungsform ist der Stator ausgebildet, in einem ersten Betriebsmodus das periodische Abtasten der Ströme von Mehrphasensystemen einer Gruppe mit Hilfe der zugehörigen Strommesseinrichtung zeitlich abgestimmt auf deren pulsweitenmodulierte Bestromung, und das pulsweitenmodulierte Bestromen von Mehrphasensystemen der Gruppe und das hierauf abgestimmte Abtasten mit einem Zeitversatz zueinander durchzuführen. Der Stator ist des Weiteren ausgebildet, in einem zweiten Betriebsmodus das pulsweitenmodulierte Bestromen von Mehrphasensystemen der Gruppe zeitlich synchron zueinander, und das periodische Abasten von in den Mehrphasensystemen der Gruppe fließenden Strömen mit Hilfe der zugehörigen Strommesseinrichtung mit einem Zeitversatz zueinander durchzuführen. Der in dem ersten Betriebsmodus und der in dem zweiten Betriebsmodus vorliegende Zeitversatz kann jeweils der Abtastzeitdauer der Strommesseinrichtungen entsprechen.

In einer weiteren Ausführungsform weist der Stator eine optional zuschaltbare Beeinflussungseinrichtung auf. Die Beeinflussungseinrichtung ist ausgebildet, die Stromregelung derart zu beeinflussen, dass ein verstärkter Rippelstrom in bestromten Statorleitern bzw. Mehrphasensystemen des Stators und dadurch ein verstärktes magnetisches Wechselfeld erzeugbar ist. Dies kann derart erfolgen, dass ein Mittelwert eines in bestromten Statorleitern fließenden Stroms unverändert bleibt.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 eine perspektivische Darstellung eines Planarantriebssystem mit einem Stator und einem Läufer, wobei der Stator ein Statormodul aufweist;
Figur 2 eine perspektivische Darstellung des Stators mit mehreren nebeneinander angeordneten Statormodulen;
Figur 3 eine perspektivische Darstellung des Läufers, welcher eine Magneteinrichtung und eine von der Magneteinrichtung umgebene Leiterplatte aufweist;
Figur 4 eine perspektivische Darstellung des Statormoduls ohne Läufer;
Figur 5 eine Explosionsdarstellung der Magneteinrichtung des Läufers und von Statorlagen des Statormoduls;
Figuren 6 und 7 Aufsichtsdarstellungen von Statorlagen des Statormoduls;
Figuren 8 und 9 Ersatzschaltbilder von dreiphasigen Spulensystemen des Statormoduls;
Figur 10 eine Verschaltung eines Spulensystems mit einer Endstufeneinrichtung;
Figur 11 einen Regelkreis zur Stromregelung eines Spulensystems auf Basis der Pulsweitenmodulation;
Figur 12 eine Anordnung umfassend eine mit drei Spulensystemen verbundene Strommesseinrichtung;
Figur 13 zeitliche Spannungs- und Stromverläufe bei einer pulsweitenmodulierten Bestromung eines einphasigen und eines dreiphasigen Spulensystems;
Figur 14 zeitliche Spannungs- und Stromverläufe, effektive Stromverläufe und Verläufe einer Magnetfeldstärkeänderung bei einer versetzten und bei einer zeitlich synchronen pulsweitenmodulierten Bestromung von zwei Spulensystemen;
Figur 15 zeitliche Spannungs- und Stromverläufe von drei Spulensystemen, welche versetzt zueinander bestromt werden;
Figur 16 örtliche Verläufe einer Magnetfeldstärke zu unterschiedlichen Zeitpunkten bei einer pulsweitenmodulierten Bestromung von zwei Spulensystemen;
Figur 17 zeitliche Spannungs- und Stromverläufe von drei Spulensystemen, welche zeitlich synchron bestromt werden und bei welchen eine Strommessung zeitlich versetzt erfolgt;
Figur 18 einen weiteren Regelkreis zur Stromregelung eines Spulensystems auf Basis der Pulsweitenmodulation, wobei der Regelkreis eine zusätzliche Beeinflussungseinrichtung zum Beeinflussen der Stromregelung aufweist;
Figur 19 zeitliche Spannungs- und Stromverläufe bei einer pulsweitenmodulierten Bestromung eines Spulensystems in einem unbeeinflussten und in einem mit der Beeinflussungseinrichtung beeinflussten Zustand;
Figur 20 eine perspektivische Darstellung des Statormoduls und des Läufers, wobei die Leiterplatte des Läufers in einer teilaufgeschnittenen Darstellung des Läufers gezeigt ist;
Figur 21 eine Aufsichtsdarstellung des Statormoduls und des Läufers;
Figur 22 eine Explosionsdarstellung der Leiterplatte des Läufers von Figur 20 mit mehreren Läuferspulen;
Figur 23 eine Aufsichtsdarstellung einer Läuferspule;
Figur 24 eine Darstellung des Läufers mit der Leiterplatte, einem Gleichrichter und einer weiteren Einrichtung;
Figur 25 eine perspektivische Darstellung einer weiteren Ausgestaltung des Läufers mit einer Leiterplatte, welche an einer Unterseite des Läufers angeordnet ist;
Figur 26 eine Explosionsdarstellung der Leiterplatte des Läufers von Figur 25 mit mehreren Läuferspulen;
Figur 27 eine Darstellung einer weiteren Ausgestaltung des Läufers, welcher mehrere Leiterplatten im Bereich von lateralen Außenseiten aufweist; und
Figuren 28 bis 31 unterschiedliche Darstellungen einer weiteren Ausgestaltung des Läufers, in welcher der Läufer eine Läuferspule in Form eines umlaufenden gewickelten Drahts aufweist.

Auf der Grundlage der folgenden schematischen Figuren werden Ausführungsformen eines Planarantriebssystems und eines Verfahrens zum Betreiben eines Planarantriebssystems beschrieben. Das Planarantriebssystem, welches einen planaren Stator und einen beweglichen Läufer umfasst, eignet sich für eine zuverlässige induktive Energieübertragung von dem Stator zu dem Läufer. Mit Bezug auf die im Folgenden beschriebenen Ausführungsformen wird darauf hingewiesen, dass Aspekte und Details, welche in Bezug auf eine Ausführungsform beschrieben werden, auch bei einer anderen Ausführungsform zur Anwendung kommen können. Des Weiteren besteht die Möglichkeit, Merkmale von mehreren Ausführungsformen miteinander zu kombinieren.

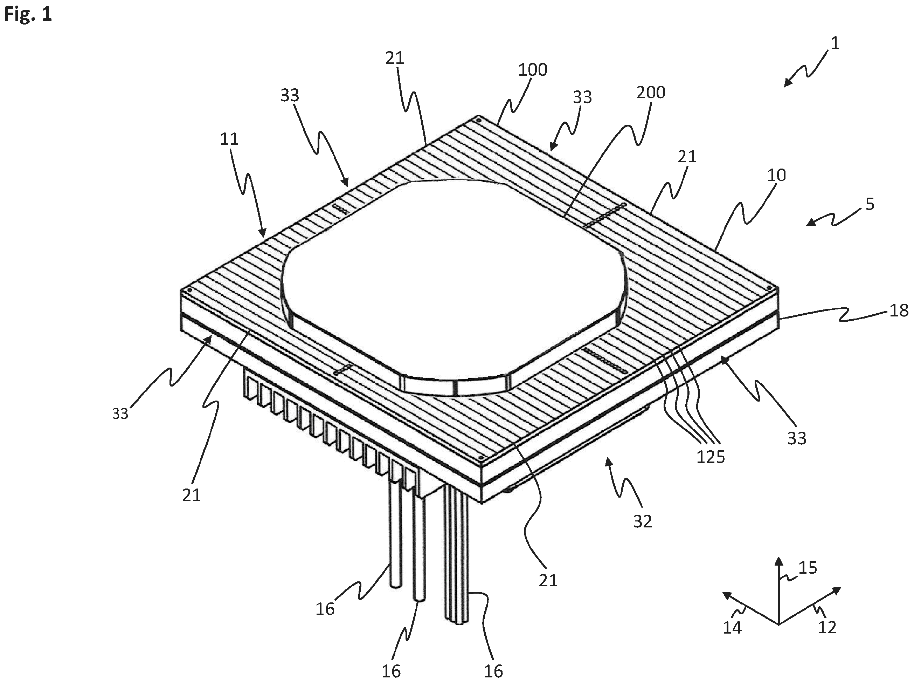

**Figur 1** zeigt eine perspektivische Darstellung einer Ausgestaltung eines Planarantriebssystems 1, welches einen Stator 5 mit wenigstens einem Statormodul 10 und einen Läufer 200 aufweist. Der Läufer 200 ist im Betrieb des Planarantriebssystems 1 beweglich über dem Stator 5 und dem Statormodul 10 angeordnet. Das Statormodul 10 umfasst ein Modulgehäuse 18 und eine Statoreinheit 100, welche an einer Oberseite des Modulgehäuses 18 angeordnet ist. Die Statoreinheit 100 ist als Planarstator ausgebildet und weist eine ebene bzw. planare Statorfläche 11 auf. Die Statorfläche 11 erstreckt sich über die gesamte Oberseite der Statoreinheit 100 und des Statormoduls 10. Die Statoreinheit 100 weist mehrere mit elektrischen Antriebsströmen beaufschlagbare metallische Statorleiter 125 auf. Die Statorleiter 125 können auch als Spulenleiter oder Leiterstreifen bezeichnet werden.

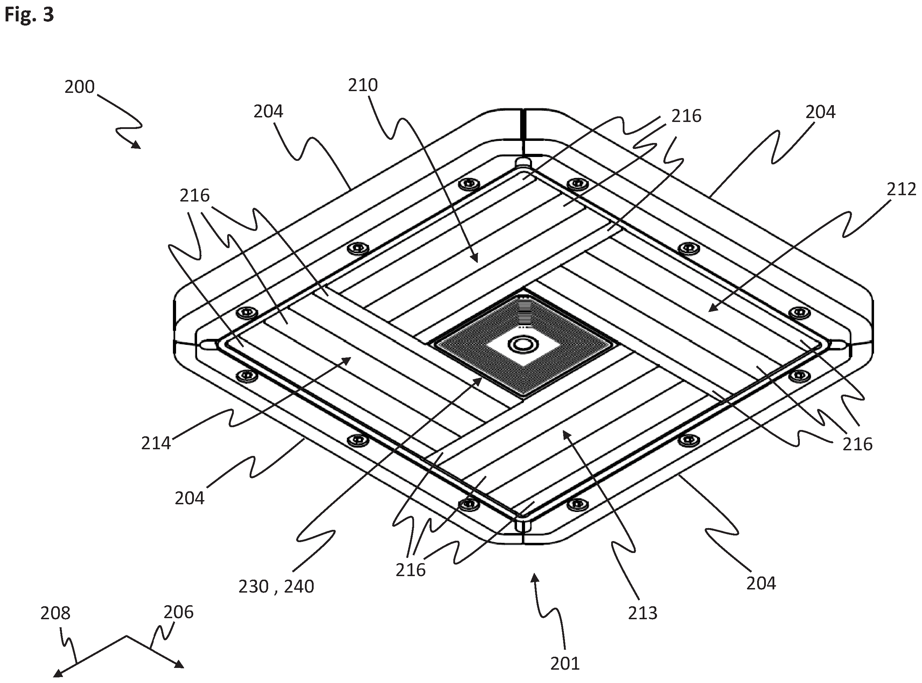

Durch das Bestromen von Statorleitern 125 des Statormoduls 10 kann ein Magnetfeld erzeugt werden, welches den Läufer 200 in Wechselwirkung mit einer Magneteinrichtung 201 des Läufers 200 (vgl. **Figur 3**) antreiben kann. Der Läufer 200 kann hierbei schwebend über der Statorfläche 11 gehalten sowie zusätzlich bewegt werden. Ein Bewegen des Läufers 200 kann sowohl in einer ersten Richtung 12 als auch in einer zweiten Richtung 14 erfolgen. Wie in **Figur 1** gezeigt ist, sind die erste und zweite Richtung 12, 14 senkrecht zueinander, und jeweils parallel zu der Statorfläche 11 orientiert. Indem der Läufer 200 zugleich in der ersten Richtung 12 als auch in der zweiten Richtung 14 bewegt wird, kann der Läufer 200 in einer beliebigen Richtung über der Statorfläche 11 bewegt werden. Ein Bewegen des Läufers 200 ist ferner in einer zu der ersten Richtung 12, der zweiten Richtung 14 und der Statorfläche 11 senkrecht orientierten dritten Richtung 15 möglich. Auf diese Weise kann der Abstand des Läufers 200 zu der Statorfläche 11 variiert werden, der Läufer 200 also über der Statorfläche 11 angehoben oder abgesenkt werden.

In dem Modulgehäuse 18 sind in **Figur 1** nicht dargestellte weitere elektrische und elektronische Komponenten und Einrichtungen des Statormoduls 10 angeordnet. Diese Bestandteile dienen u.a. zur Erzeugung von elektrischen Antriebsströmen und dadurch zur Bestromung von Statorleitern 125 des Statormoduls 10. Wie weiter unten näher erläutert wird, erfolgt die Bestromung durch eine Stromregelung auf Basis der Pulsweitenmodulation.

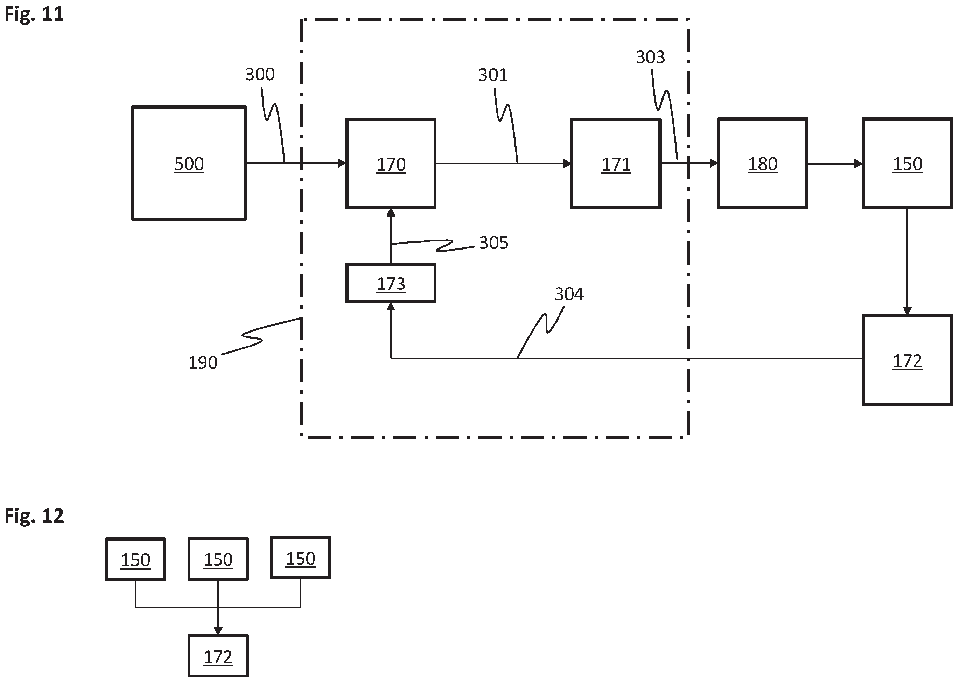

An einer der Statorfläche 11 gegenüberliegenden Unterseite 32 des Modulgehäuses 18 befinden sich in **Figur 1** nicht dargestellte Anschlüsse, welche zur Verbindung des Statormoduls 10 mit mehreren Anschlussleitungen 16 dienen. Die Anschlussleitungen 16 können eine Energieversorgungsleitung zur Versorgung des Statormoduls 10 mit elektrischer Energie, eine Eingangsdatenleitung und eine Ausgangsdatenleitung umfassen. Über die Energieversorgungsleitung kann dem Statormodul 10 elektrische Energie u.a. zur Erzeugung von Antriebsströmen zugeführt werden. Über die Eingangs- und Ausgangsdatenleitung kann ein Senden von Daten an das Statormodul 10 und von dem Statormodul 10 erfolgen. Auf diese Weise kann eine Datenkommunikation zwischen dem Statormodul 10 und einer Hauptsteuervorrichtung 500 (vgl. **Figur 11**) des Planarantriebssystems 1 verwirklicht sein. Dies umfasst zum Beispiel ein Übermitteln von Steuersignalen bzw. Steuerdaten wie beispielsweise elektrischen Sollstromwerten von der Hauptsteuervorrichtung 500 an das Statormodul 10.

Anhand von **Figur 1** wird deutlich, dass das Modulgehäuse 18, die Statoreinheit 100 und die Statorfläche 11 in der Aufsicht auf die Statorfläche 11 rechteckig bzw. quadratisch ausgebildet sind. Die Statorfläche 11 wird durch vier jeweils gerade Außenkanten 21 begrenzt. Jeweils zwei einander gegenüberliegende Außenkanten 21 sind parallel zu der ersten Richtung 12 und zwei einander gegenüberliegende weitere Außenkanten 21 sind parallel zu der zweiten Richtung 14 orientiert. Das Statormodul 10 und das Modulgehäuse 18 weisen ferner zwischen der Statorfläche 11 und der gegenüberliegenden Unterseite 32 vier ebene Seitenflächen 33 auf, welche an der Statorfläche 11 bündig mit den Außenkanten 21 abschließen.

Der Stator 5 des Planarantriebssystems 1 kann nicht nur mit einem Statormodul 10, sondern mit mehreren baugleichen Exemplaren des in **Figur 1** gezeigten Statormoduls 10 verwirklicht sein. Die mehreren Statormodule 10 können derart nebeneinander angeordnet sein, dass die Außenkanten 21 und Seitenflächen 33 benachbarter Statormodule 10 aneinander liegen. Auf diese Weise können die Statorflächen 11 der Statormodule 10 eine zusammenhängende Arbeitsfläche bilden, über welche der Läufer 200 unterbrechungsfrei bewegt werden kann. Dies erfolgt durch eine entsprechende Bestromung von Statorleitern 125 der Statormodule 10 und dadurch Erzeugen eines den Läufer 200 antreibenden Magnetfelds.

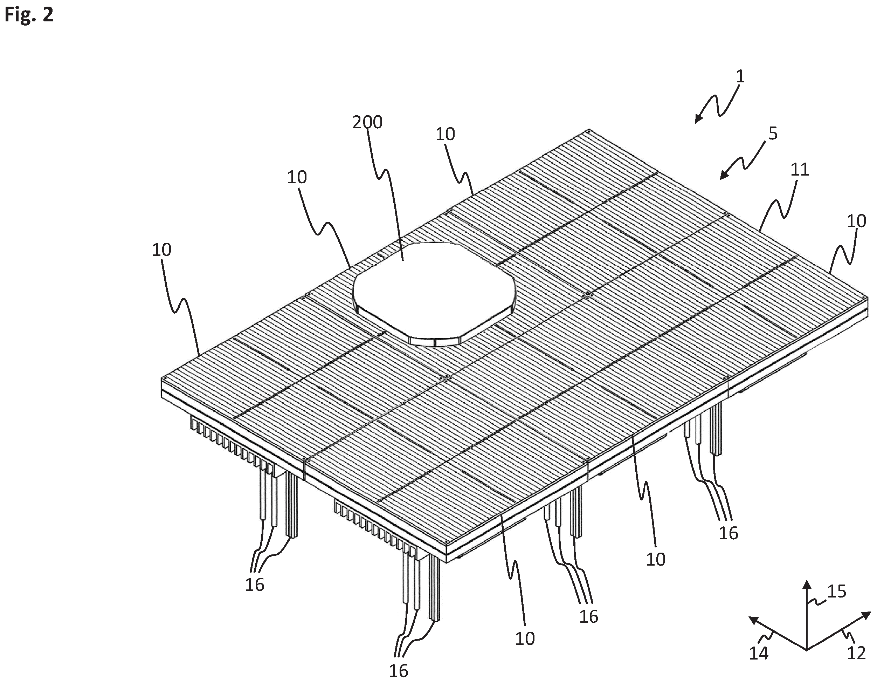

Zur Veranschaulichung zeigt **Figur 2** eine perspektivische Darstellung einer Ausgestaltung des Stators 5 mit sechs nebeneinander angeordneten Statormodulen 10. Die Statormodule 10 sind in zwei in der zweiten Richtung 14 nebeneinanderliegenden und entlang der ersten Richtung 12 ausgedehnten ersten Reihen und in drei in der ersten Richtung 12 nebeneinanderliegenden und entlang der zweiten Richtung 14 ausgedehnten zweiten Reihen bzw. Spalten nebeneinander angeordnet. Die Statorflächen 11 der Statormodule 10 bilden eine zusammenhängende und planare Arbeitsfläche für den Läufer 200. Der Läufer 200 kann jeweils nahtlos von der Statorfläche 11 eines Statormoduls 10 auf die bzw. über die Statorfläche 11 eines benachbarten Statormoduls 10 bewegt werden.

Abgesehen von der in **Figur 2** gezeigten Ausgestaltung können für den Stator 5 des Planarantriebssystems 1 auch andere Ausgestaltungen mit anderen Anordnungen und/oder anderen Anzahlen an nebeneinander angeordneten Statormodulen 10 in Betracht kommen. Die Statormodule 10 können in der ersten und/oder zweiten Richtung 12, 14 prinzipiell zu einem Stator 5 beliebiger Größe zusammengefügt sein.

Die oben erwähnte Energieversorgung und Datenkommunikation kann bei jedem der Statormodule 10 des Stators 5 über jeweils eigene Anschlussleitungen 16 der Statormodule 10 verwirklicht sein. Alternative, hier nicht dargestellte Ausgestaltungen der Statormodule 10 können ferner elektrische Verbindungselemente aufweisen, mittels derer elektrische Energie und/oder Daten von einem Statormodul 10 zu einem benachbarten Statormodul 10 übertragen werden können. Derartige Verbindungselemente können zum Beispiel an den Seitenflächen 33 der Statormodule 10 angeordnet sein.

**Figur 3** zeigt eine Ausgestaltung des Läufers 200 des Planarantriebssystems 1 in einer perspektivischen Ansicht von unten auf eine Unterseite des Läufers 200. Im Betrieb des Planarantriebssystems 1 ist die Unterseite des Läufers 200 der Statorfläche 11 des Statormoduls 10 bzw. von mehreren Statormodulen 10 des Stators 5 zugewandt angeordnet. Auch sind der Läufer 200 bzw. dessen Unterseite parallel oder im Wesentlichen parallel zu der Statorfläche 11 orientiert. Der Läufer 200 weist an der Unterseite eine Magneteinrichtung 201 auf. Die Magneteinrichtung 201 besitzt eine rechteckige bzw. quadratische Außenkontur, und umfasst eine erste Magneteinheit 210, eine zweite Magneteinheit 212, eine dritte Magneteinheit 213 und eine vierte Magneteinheit 214. Die erste Magneteinheit 210 und die dritte Magneteinheit 213 weisen jeweils in einer ersten Läuferrichtung 206 nebeneinander angeordnete und entlang einer zu der ersten Läuferrichtung 206 senkrecht orientierten zweiten Läuferrichtung 208 ausgedehnte längliche Läufermagnete 216 auf. Die zweite Magneteinheit 212 und die vierte Magneteinheit 214 weisen jeweils in der zweiten Läuferrichtung 208 nebeneinander angeordnete und entlang der ersten Läuferrichtung 206 ausgedehnte längliche Läufermagnete 216 auf. Bei den Läufermagneten 216 handelt es sich um Permanentmagnete. Die erste und die dritte Magneteinheit 210, 213 dienen im Betrieb des Planarantriebssystems 1 einem Antrieb des Läufers 200 in der ersten Läuferrichtung 206. Die zweite und die vierte Magneteinheit 212, 214 dienen im Betrieb einem Antrieb des Läufers 200 in der zweiten Läuferrichtung 208.

Die Magneteinheiten 210, 212, 213, 214 der Magneteinrichtung 201 und deren Läufermagnete 216 sind derart angeordnet, dass diese einen Bereich umgeben. In dem von den Läufermagneten 216 umgebenen Bereich weist der Läufer 200 gemäß der in **Figur 3** gezeigten Ausgestaltung eine erste Leiterplatte 230 mit wenigstens einer Läuferspule 240 auf. Die wenigstens eine Läuferspule 240 wird, zusammen mit den Statorleitern 125 des Stators 5, für die induktive Energieübertragung von dem Stator 5 zu dem Läufer 200 genutzt. Wie weiter unten näher erläutert wird, basiert die Energieübertragung darauf, dass durch die pulsweitenmodulierte elektrische Ansteuerung von Statorleitern 125 ein Rippelstrom und dadurch ein magnetisches Wechselfeld erzeugt wird, so dass eine elektrische Wechselspannung in der Läuferspule 240 induziert werden kann. Die induzierte Wechselspannung kann im Wesentlichen proportional zu der zeitlichen Änderung des die Läuferspule 240 durchsetzenden magnetischen Flusses sein.

Wie in **Figur 3** gezeigt ist, weist der Läufer 200 ferner vier Abstandshalter 204 auf, welche die Magneteinrichtung 201 umgeben und laterale Außenseiten des Läufers 200 bilden. Bei einer nicht dargestellten Verwendung von mehreren baugleichen Läufern 200 in dem Planarantriebssystem 1 können die Abstandshalter 204 dafür sorgen, dass bei sich berührenden Abstandshaltern 204 zweier nebeneinander angeordneter Läufer 200 ein Mindestabstand zwischen den Magneteinrichtungen 201 der Läufer 200 eingehalten wird. Auf diese Weise kann vermieden werden, dass die Unterseiten der Läufer 200 durch eine Anziehungskraft zwischen ihren Magneteinrichtungen 201 aus der zur Statorfläche 11 parallelen Position aufgerichtet werden und die beiden Läufer 200 mit einander zugewandten Unterseiten aneinander magnetisch haften bleiben. Die Abstandshalter 204 können ein elastisch verformbares Material aufweisen oder aus einem solchen Material ausgebildet sein.

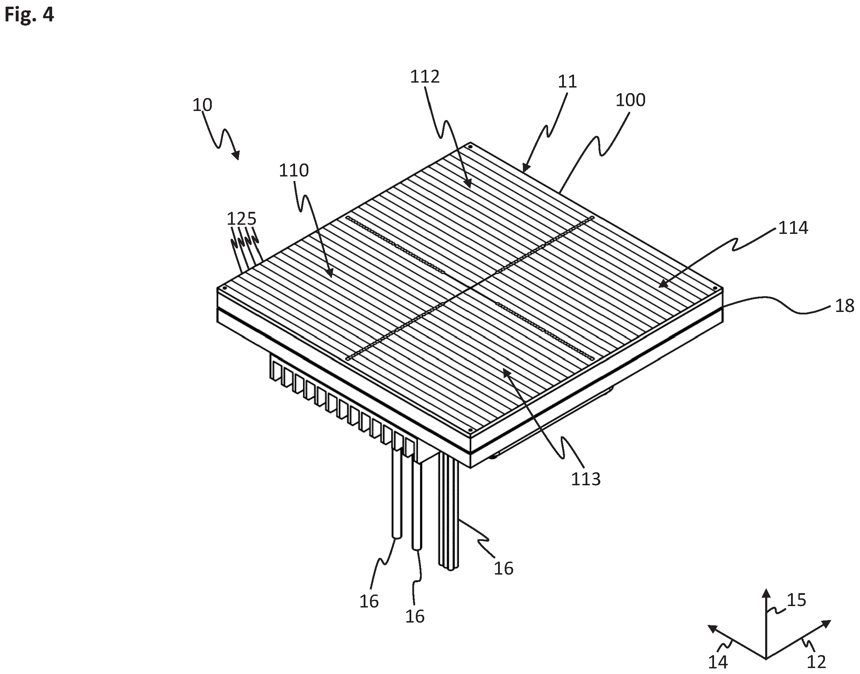

**Figur 4** zeigt eine perspektivische Darstellung des Statormoduls 10 ohne den Läufer 200. Bei einer Ausgestaltung des Stators 5 mit mehreren Statormodulen 10, wie sie beispielhaft in **Figur 2** gezeigt ist, können sämtliche Statormodule 10 baugleich oder im Wesentlichen baugleich ausgeführt sein. Daher können vorstehend als auch nachstehend beschriebene Details in Bezug auf sämtliche Statormodule 10 des Stators 5 zur Anwendung kommen.

Die Statoreinheit 100 der in **Figur 4** veranschaulichten Ausgestaltung des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der jeweils elektrisch voneinander isolierten Statorleiter 125. Jeder der Statorleiter 125 ist vollständig in einem der Statorsektoren 110, 112, 113, 114 angeordnet. Die Statorsektoren 110, 112, 113, 114 sind rechteckig ausgebildet. Die Statorsektoren 110, 112, 113, 114 können quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht. Die Statorsektoren 110, 112, 113, 114 umfassen jeweils ein Viertel der Fläche, d.h. einen Quadranten, der Statoreinheit 100.

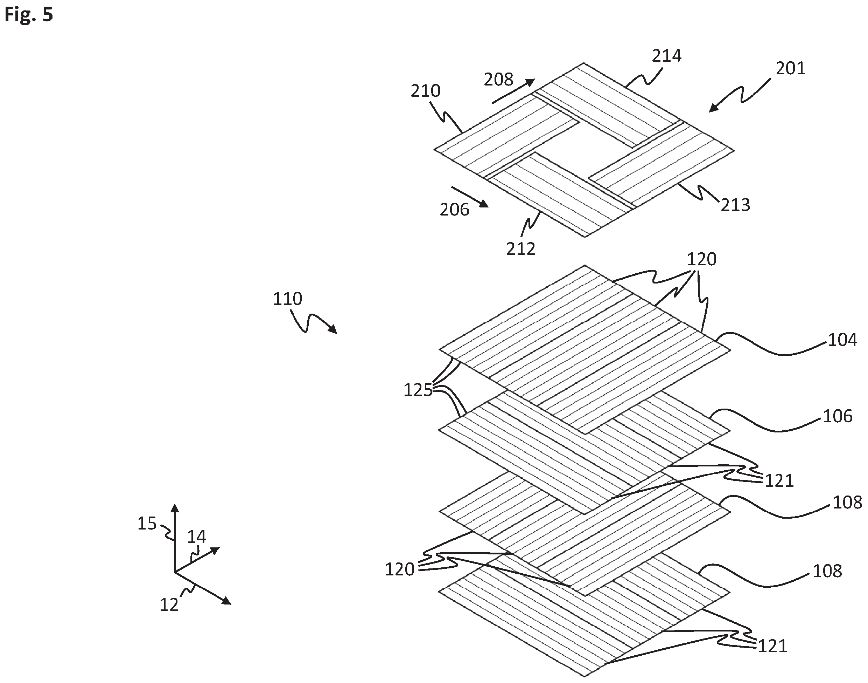

Innerhalb der Statorsektoren 110, 112, 113, 114 können die Statorleiter 125 in mehreren übereinanderliegenden Statorlagen oder Statorebenen angeordnet sein, wobei jede der Statorlagen lediglich Statorleiter 125 aufweist, welche entweder entlang der ersten Richtung 12 oder entlang der zweiten Richtung 14 ausgedehnt sind. Hinsichtlich der Orientierung und Anordnung der Statorleiter 125 und hinsichtlich der Statorlagen können die Statorsektoren 110, 112, 113, 114 identisch oder im Wesentlichen identisch aufgebaut sein. Zur weiteren Veranschaulichung zeigt **Figur 5** eine Explosionsdarstellung der Magneteinrichtung 201 des Läufers 200 und des ersten Statorsektors 110 mit vier übereinanderliegenden Statorlagen. Soweit keine Unterschiede beschrieben werden, sind der zweite, dritte und vierte Statorsektor 112, 113, 114 identisch zu dem ersten Statorsektor 110 aufgebaut. Gemäß der in **Figur 5** gezeigten Ausgestaltung weist der erste Statorsektor 110 eine erste Statorlage 104, eine unter der ersten Statorlage 104 angeordnete zweite Statorlage 106 und zwei unter der zweiten Statorlage 106 angeordnete weitere Statorlagen 108 auf. Die erste Statorlage 104 umfasst lediglich Statorleiter 125, welche entlang der ersten Richtung 12 nebeneinander angeordnet und entlang der zweiten Richtung 14 länglich ausgedehnt sind. Die zweite Statorlage 106 umfasst lediglich Statorleiter 125, welche entlang der zweiten Richtung 14 nebeneinander angeordnet und entlang der ersten Richtung 12 länglich ausgedehnt sind. In entsprechender Weise umfasst eine unter der zweiten Statorlage 106 angeordnete erste der weiteren Statorlagen 108 lediglich Statorleiter 125, welche entlang der zweiten Richtung 14 länglich ausgedehnt sind, und eine unter der ersten der weiteren Statorlagen 108 angeordnete zweite der weiteren Statorlagen 108 umfasst lediglich Statorleiter 125, welche entlang der ersten Richtung 12 länglich ausgedehnt sind.

Der erste Statorsektor 110 kann darüber hinaus unter den in **Figur 5** gezeigten Statorlagen 104, 106, 108 nicht dargestellte weitere Statorlagen 108 aufweisen. Insgesamt umfasst der erste Statorsektor 110 damit abwechselnd erste oder weitere Statorlagen 104, 108 mit Statorleitern 125, welche lediglich entlang der zweiten Richtung 14 ausgedehnt sind, und zweite oder weitere Statorlagen 106, 108 mit Statorleitern 125, welche lediglich entlang der ersten Richtung 12 ausgedehnt sind.

Für das Statormodul 10 kann abgesehen von der anhand von **Figur 5** beschriebenen Ausgestaltung eine andere nicht dargestellte Ausgestaltung mit einer anderen Anordnung von Statorlagen 104, 106, 108 mit entlang der ersten Richtung 12 und entlang der zweiten Richtung 14 länglich ausgedehnten Statorleitern 125 in Betracht kommen. Ein mögliches Beispiel ist eine Ausgestaltung, bei welcher zunächst wie in **Figur 5** die erste Statorlage 104 mit lediglich entlang der zweiten Richtung 14 ausgedehnten Statorleitern 125 und darunter die zweite Statorlage 106 mit lediglich entlang der ersten Richtung 12 ausgedehnten Statorleitern 125 vorliegt. Abweichend von **Figur 5** kann die unter der zweiten Statorlage 106 angeordnete erste der weiteren Statorlagen 108 lediglich entlang der ersten Richtung 12 ausgedehnte Statorleiter 125 umfassen, und kann die unter der ersten der weiteren Statorlagen 108 angeordnete zweite der weiteren Statorlagen 108 lediglich entlang der zweiten Richtung 14 ausgedehnte Statorleiter 125 umfassen. Darunter können weitere Statorlagen 108 mit einer der zuvor beschriebenen Orientierung der vier Statorlagen 104, 106, 108 entsprechenden und sich wiederholenden Orientierung der Statorleiter 125 vorhanden sein.

Wie in **Figur 5** dargestellt ist, sind die Statorleiter 125 des ersten Statorsektors 110 innerhalb der Statorlagen 104, 106, 108 jeweils zu Statorsegmenten 120, 121 zusammengefasst. Der erste Statorsektor 110 umfasst in jeder Statorlage 104, 106, 108 jeweils drei nebeneinander und aneinander anschließend angeordnete Statorsegmente 120, 121. Jedes der Statorsegmente 120, 121 umfasst jeweils sechs nebeneinander angeordnete Statorleiter 125. Der erste Statorsektor 110 umfasst in der ersten Statorlage 104 drei erste Statorsegmente 120 und in der zweiten Statorlage 106 drei zweite Statorsegmente 121. Die ersten Statorsegmente 120 umfassen jeweils sechs nebeneinanderliegende und entlang der zweiten Richtung 14 ausgedehnte Statorleiter 125. Die zweiten Statorsegmente 121 umfassen jeweils sechs nebeneinanderliegende und entlang der ersten Richtung 12 ausgedehnte Statorleiter 125. In den weiteren Statorlagen 108 umfasst der erste Statorsektor 110 jeweils abwechselnd, oder in einer anderen Reihenfolge, jeweils drei erste Statorsegmente 120 oder jeweils drei zweite Statorsegmente 121. Die ersten und zweiten Statorsegmente 120, 121 weisen, abgesehen von ihrer Orientierung, identische Abmessungen auf.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Eine solche Ausrichtung ist in **Figur 5** veranschaulicht. Hierbei können die erste und dritte Magneteinheit 210, 213 der Magneteinrichtung 201 des Läufers 200 mit dem durch die Statorleiter 125 der ersten Statorsegmente 120 erzeugten Magnetfeld wechselwirken, um eine Bewegung des Läufers 200 entlang der ersten Richtung 12 hervorzurufen. Die zweite und vierte Magneteinheit 212, 214 der Magneteinrichtung 201 des Läufers 200 können mit dem durch die Statorleiter 125 der zweiten Statorsegmente 121 erzeugten Magnetfeld wechselwirken, um eine Bewegung des Läufers 200 entlang der zweiten Richtung 14 zu bewirken.

Alternativ kann der Läufer 200, anders als in **Figur 5** gezeigt, derart ausgerichtet sein, dass die erste Läuferrichtung 206 entlang der zweiten Richtung 14 und die zweite Läuferrichtung 208 entlang der ersten Richtung 12 orientiert ist. Hierbei können die erste und dritte Magneteinheit 210, 213 mit dem Magnetfeld der zweiten Statorsegmente 121 für einen Antrieb des Läufers 200 in der zweiten Richtung 14, und können die zweite und vierte Magneteinheit 212, 214 mit dem Magnetfeld der ersten Statorsegmente 120 für einen Antrieb des Läufers 200 in der ersten Richtung 12 zusammenwirken.

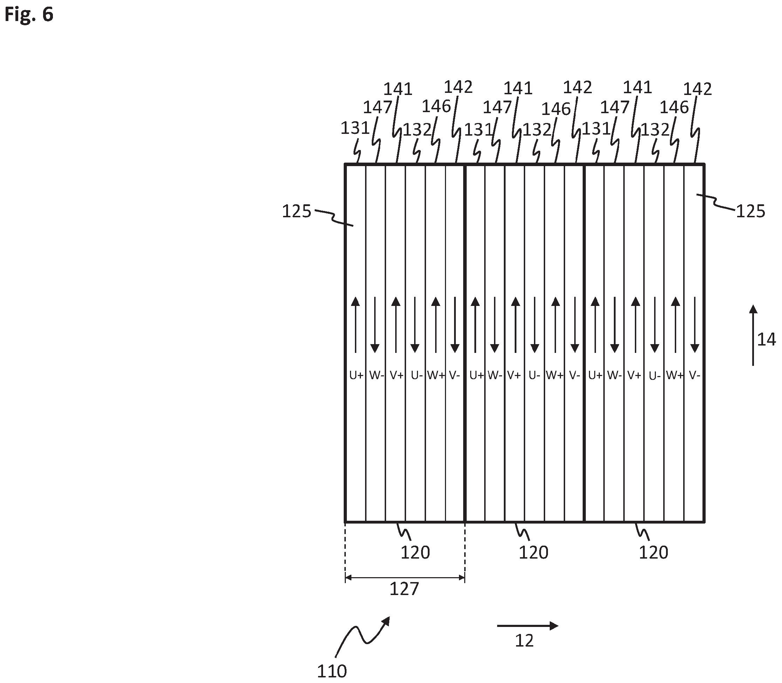

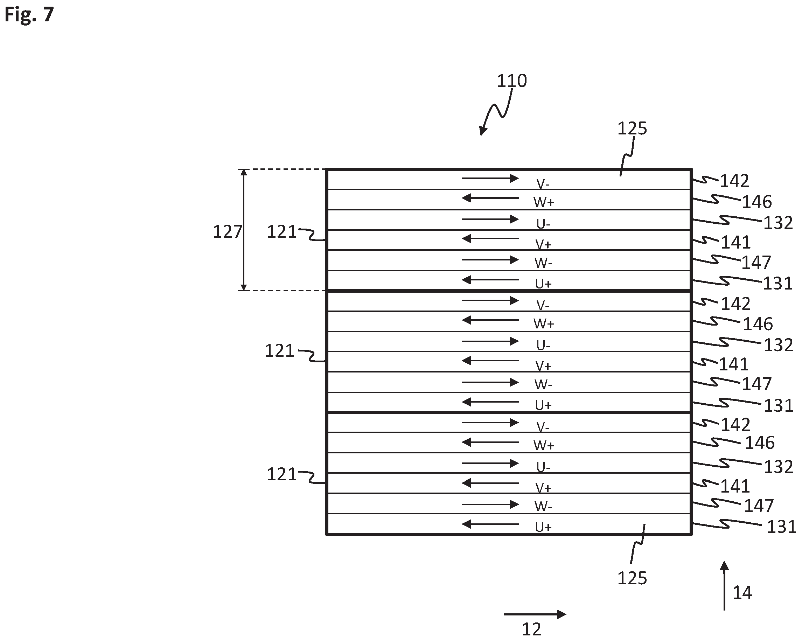

**Figur 6** zeigt eine Aufsichtsdarstellung der ersten Statorsegmente 120 des ersten Statorsektors 110. Eine entsprechende Aufsichtsdarstellung der zweiten Statorsegmente 121 des ersten Statorsektors 110 ist in **Figur 7** veranschaulicht. Soweit keine Unterschiede beschrieben werden, sind der zweite, dritte und vierte Statorsektor 112, 113, 114 identisch zu dem ersten Statorsektor 110 aufgebaut. Gemäß der in den **Figuren 6** **und** **7** gezeigten Ausgestaltung weisen die Statorsegmente 120, 121 eine Segmentbreite 127 auf, welche zum Beispiel 40mm betragen kann. Die Statorleiter 125 jedes der einzelnen Statorsegmente 120, 121 einer entsprechenden Statorlage 104, 106, 108 sind jeweils unabhängig von den Statorleitern 125 der übrigen Statorsegmente 120, 121 der betreffenden Statorlage 104, 106, 108 mit Antriebsströmen bestrombar. Daher hängen die Antriebsströme in einem der Statorsegmente 120, 121 nicht zwingend von Antriebsströmen in einem anderen der Statorsegmente 120, 121 ab. Außerdem können die Statorleiter 125 eines der Statorsegmente 120, 121 mit Antriebsströmen beaufschlagt werden, während die Statorleiter 125 eines anderen, beispielsweise eines benachbarten Statorsegments 120, 121, stromlos sind.

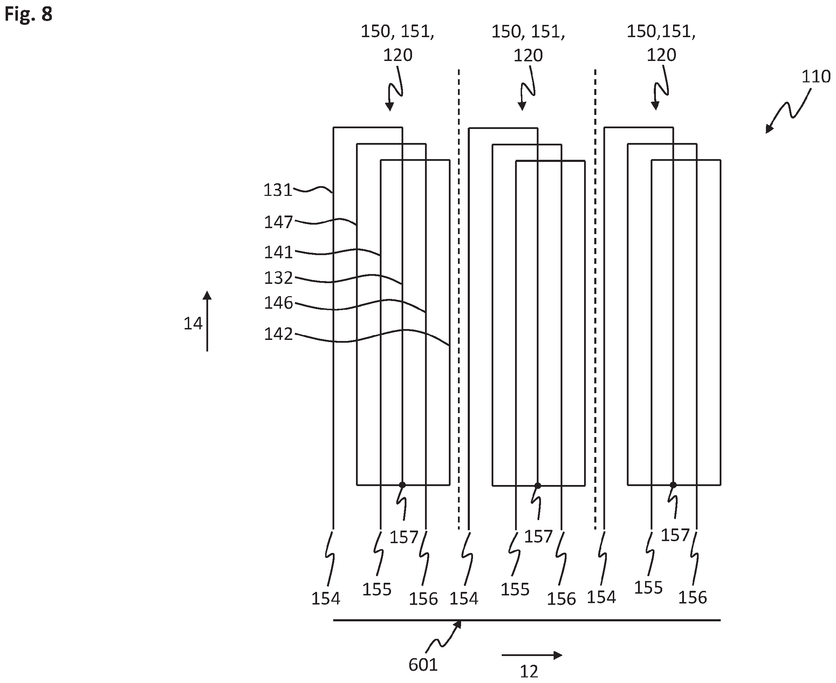

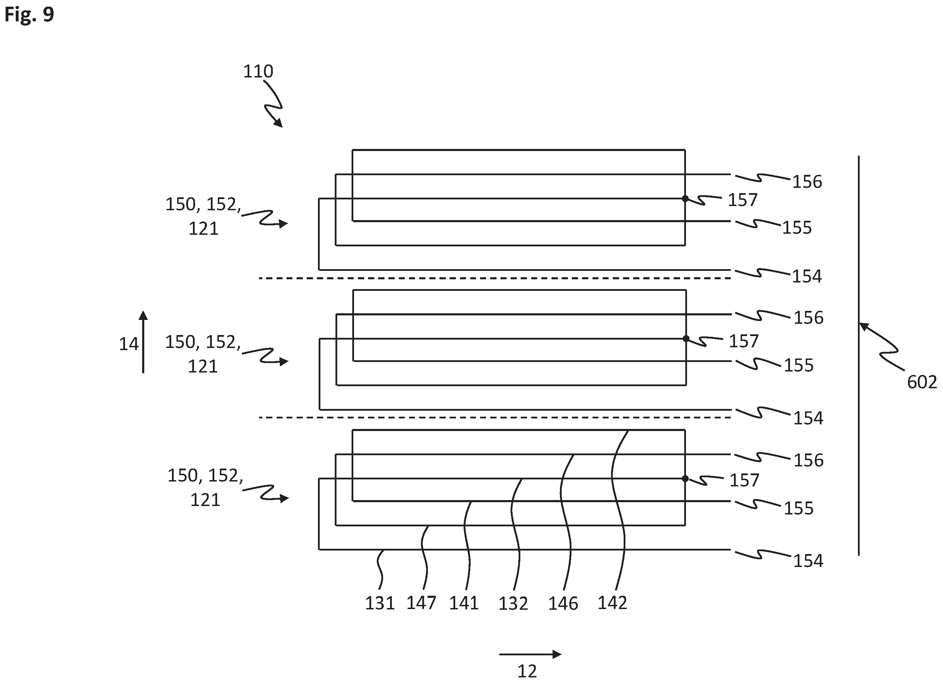

Die Statorleiter 125 der einzelnen Statorsegmente 120, 121 sind jeweils zu unabhängig voneinander bestrombaren dreiphasigen Spulensystemen, im Folgenden auch als Dreiphasensysteme 150 bezeichnet, mit einem gemeinsamen Sternpunkt 157 verschaltet (vgl. die **Figuren 8** **und** **9**). Die Dreiphasensysteme 150 können im Betrieb des Planarantriebssystems 1 mit einem dreiphasigen elektrischen Antriebsstrom beaufschlagt werden. Hierbei können eine erste Phase U, eine zweite Phase V und eine dritte Phase W der Antriebsströme untereinander jeweils einen Phasenversatz von 120° aufweisen.

In den **Figuren 6** **und** **7** ist eine mögliche Verteilung der Phasen U, V, W auf die Statorleiter 125 der ersten und zweiten Statorsegmente 120, 121 dargestellt. Die Statorsegmente 120, 121 weisen jeweils einen ersten Hinleiter 131 und einen ersten Rückleiter 132 für die ersten Phasen U der Antriebsströme, einen zweiten Hinleiter 141 und einen zweiten Rückleiter 142 für die zweiten Phasen V der Antriebsströme und einen dritten Hinleiter 146 und einen dritten Rückleiter 147 für die dritten Phasen W der Antriebsströme auf. Nachdem die einzelnen Statorsegmente 120, 121 jeweils unabhängig voneinander bestrombar sind, können die Antriebsströme, mit denen die einzelnen Statorsegmente 120, 121 beaufschlagt werden, verschieden sein. Insbesondere können jeweils die einzelnen ersten Phasen U, mit denen die verschiedenen Statorsegmente 120, 121 beaufschlagt werden können, verschieden sein. Außerdem können jeweils die einzelnen zweiten Phasen V, mit denen die verschiedenen Statorsegmente 120, 121 beaufschlagt werden können, und die einzelnen dritten Phasen W, mit denen die verschiedenen Statorsegmente 120, 121 beaufschlagt werden können, verschieden sein.

Die Phasen U, V und W können jeweils an einer ersten Seite der Statorsegmente 120, 121 auf die Hinleiter 131, 141, 146 und auf einer entgegengesetzten zweiten Seite der Statorsegmente 120, 121 auf die Rückleiter 132, 142, 147 eingespeist werden. Außerdem können die Phasen U, V und W jeweils an der zweiten Seite der Statorsegmente 120, 121 aus den Hinleitern 131, 141, 146 und auf der ersten Seite der Statorsegmente 120, 121 aus den Rückleitern 132, 142, 147 ausgekoppelt werden.

Die ersten Hin- und Rückleiter 131, 132 von auf mehreren ersten und weiteren Statorlagen 104, 108 übereinanderliegenden ersten Statorsegmenten 120 können jeweils seriell verschaltet sein. Analog können die zweiten Hin- und Rückleiter 141, 142 und die dritten Hin- und Rückleiter 146, 147 von auf mehreren ersten und weiteren Statorlagen 104, 108 übereinanderliegenden ersten Statorsegmenten 120 jeweils seriell verschaltet sein. Hierbei können die Phasen U, V, W jeweils auf einer der ersten und weiteren Statorlagen 104, 108 in die Hinleiter 131, 141, 146 eines der ersten Statorsegmente 120 eingekoppelt werden, anschließend jeweils alle der betreffenden Phase U, V, W zugeordneten Hin- und Rückleiter 131, 141, 146, 132, 142, 147 auf allen ersten und weiteren Statorlagen 104, 108 des betreffenden ersten Statorsegments 120 durchlaufen und schließlich in einem Sternpunkt 157 zusammengeführt werden (vgl. **Figur 8**). Analog zu den ersten Statorsegmenten 120 können auch jeweils die ersten Hin- und Rückleiter 131, 132, die zweiten Hin- und Rückleiter 141, 142 und die dritten Hin- und Rückleiter 146, 147 von auf mehreren zweiten und weiteren Statorlagen 106, 108 übereinanderliegenden zweiten Statorsegmenten 121 seriell verschaltet und in einem Sternpunkt 157 zusammengeführt sein (vgl. **Figur 9**).

**Figur 8** zeigt ein Ersatzschaltbild der ersten Statorsegmente 120 des ersten Statorsektors 110, welches für die vorstehend beschriebene Ausgestaltung in Betracht kommen kann. Bei dem in **Figur 8** dargestellten Ersatzschaltbild sind alle übereinanderliegenden und in Serie geschalteten Statorleiter 125 der ersten Statorsegmente 120 als ein einziger Leiter dargestellt. Der dargestellte erste Hinleiter 131 umfasst alle in verschiedenen ersten und weiteren Statorlagen 104, 108 übereinanderliegenden und in Serie geschalteten Hinleiter 131 der ersten Statorsegmente 120, und der dargestellte erste Rückleiter 132 umfasst alle in verschiedenen ersten und weiteren Statorlagen 104, 108 übereinanderliegenden und in Serie geschalteten ersten Rückleiter 132 der ersten Statorsegmente 120. Analog umfassen die dargestellten zweiten Hinleiter 141, zweiten Rückleiter 142, dritten Hinleiter 146 und dritten Rückleiter 147 jeweils alle in verschiedenen ersten und weiteren Statorlagen 104, 108 übereinanderliegenden und in Serie geschalteten zweiten Hinleiter 141, zweiten Rückleiter 142, dritten Hinleiter 146 und dritten Rückleiter 147 der ersten Statorsegmente 120.

Wie in **Figur 8** gezeigt ist, sind die Statorleiter 125 bzw. die Hin- und Rückleiter 131, 132, 141, 142, 146, 147 der einzelnen ersten Statorsegmente 120 jeweils zu Dreiphasensystemen 150 verschaltet. Mit Bezug auf die ersten Statorsegmente 120 werden diese auch als erste Dreiphasensysteme 151 bezeichnet. An einer entlang der ersten Richtung 12 orientierten ersten Seite 601 der einzelnen ersten Statorsegmente 120 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 kann mit einem in einer der ersten oder weiteren Statorlagen 104, 108 angeordneten ersten Hinleiter 131 verbunden sein. Der zweite Anschlusspunkt 155 kann mit einem in einer der ersten oder weiteren Statorlagen 104, 108 angeordneten zweiten Hinleiter 141 verbunden sein. Der dritte Anschlusspunkt 156 kann mit einem in einer der ersten oder weiteren Statorlagen 104, 108 angeordneten dritten Hinleiter 146 verbunden sein. Außerdem ist an der ersten Seite 601 der einzelnen ersten Statorsegmente 120 jeweils ein Sternpunkt 157 angeordnet. In den Sternpunkten 157 können jeweils ein erster Rückleiter 132 einer der ersten oder weiteren Statorlagen 104, 108, ein zweiter Rückleiter 142 einer der ersten oder weiteren Statorlagen 104, 108 und ein dritter Rückleiter 147 einer der ersten oder weiteren Statorlagen 104, 108 miteinander verbunden sein.

**Figur 9** zeigt ein Ersatzschaltbild der zweiten Statorsegmente 121 des ersten Statorsektors 110, welches für die oben beschriebene Ausgestaltung in Betracht kommen kann. Bei dem in **Figur 9** dargestellten Ersatzschaltbild sind, wie bei dem in **Figur 8** dargestellten Ersatzschaltbild der ersten Statorsegmente 120, alle übereinanderliegenden und in Serie geschalteten Statorleiter 125 der zweiten Statorsegmente 121 als ein einziger Leiter dargestellt. Die Statorleiter 125 bzw. die Hin- und Rückleiter 131, 132, 141, 142, 146, 147 der zweiten Statorsegmente 121 sind jeweils zu Dreiphasensystemen 150 verschaltet. Mit Bezug auf die zweiten Statorsegmente 121 werden diese auch als zweite Dreiphasensysteme 152 bezeichnet. An einer entlang der zweiten Richtung 14 orientierten zweiten Seite 602 der zweiten Statorsegmente 121 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 kann mit einem in einer der zweiten oder weiteren Statorlagen 106, 108 angeordneten ersten Hinleiter 131 verbunden sein. Der zweite Anschlusspunkt 155 kann mit einem in einer der zweiten oder weiteren Statorlagen 106, 108 angeordneten zweiten Hinleiter 141 verbunden sein. Der dritte Anschlusspunkt 156 kann mit einem in einer der zweiten oder weiteren Statorlagen 106, 108 angeordneten dritten Hinleiter 146 verbunden sein. Außerdem ist an der zweiten Seite 602 der einzelnen zweiten Statorsegmente 121 jeweils ein Sternpunkt 157 angeordnet. In den Sternpunkten 157 können jeweils ein erster Rückleiter 132 einer der zweiten oder weiteren Statorlagen 106, 108, ein zweiter Rückleiter 142 einer der zweiten oder weiteren Statorlagen 106, 108 und ein dritter Rückleiter 147 einer der zweiten oder weiteren Statorlagen 106, 108 miteinander verbunden sein.

Anhand der in den **Figuren 8** **und** **9** gezeigten Ausgestaltung des ersten Statorsektors 110 wird deutlich, dass die die ersten Statorsegmente 120 repräsentierenden ersten Dreiphasensysteme 151 und die die zweiten Statorsegmente 121 repräsentierenden zweiten Dreiphasensysteme 152 des ersten Statorsektors 110 um 90° gegeneinander verdreht angeordnet sind. Der erste Statorsektor 110 umfasst drei erste Dreiphasensysteme 151 und drei zweite Dreiphasensysteme 152. Das durch die ersten Dreiphasensysteme 151 erzeugte Magnetfeld kann für eine Bewegung des Läufers 200 entlang der ersten Richtung 12 sorgen. Das durch die zweiten Dreiphasensysteme 152 erzeugte Magnetfeld kann eine Bewegung des Läufers 200 entlang der zweiten Richtung 14 bewirken. Diese Ausgestaltung gilt in entsprechender Weise für den zweiten, dritten und vierten Statorsektor 112, 113, 114.

Die Statoreinheit 100 des in **Figur 4** veranschaulichten Statormoduls 10 umfasst infolgedessen zwölf erste Dreiphasensysteme 151 und zwölf zweite Dreiphasensysteme 152, und somit insgesamt vierundzwanzig Dreiphasensysteme 150. Die Statoreinheit 100 kann in Form einer nicht dargestellten mehrlagigen Leiterplatte verwirklicht sein, wobei die Statorlagen 104, 106, 108 jeweils in unterschiedlichen Lagen der Leiterplatte angeordnet sind. Um eine Verschaltung der Hin- und Rückleiter 131, 141, 146, 132, 142, 147 gemäß der in den **Figuren 8** **und** **9** gezeigten Ersatzschaltbilder zu erreichen, kann die Statoreinheit 100 nicht dargestellte elektrische Verbindungsstrukturen wie Horizontalverbindungsstrukturen und Vertikalverbindungsstrukturen aufweisen.

Durch eine geeignete Bestromung von Dreiphasensystemen 150 des bzw. wenigstens eines Statormoduls 10 des Stators 5 kann der Läufer 200 wie oben angegeben angetrieben werden. Hierbei kann ein Teil der Dreiphasensysteme 150 zeitgleich bestromt werden. Dies betrifft Dreiphasensysteme 150, welche sich im Bereich des Läufers 200 befinden. In diesem Zusammenhang kann das bzw. jedes Statormodul 10 des Stators 5 nicht dargestellte Positionssensoren wie zum Beispiel Hallsensoren aufweisen, mittels derer die aktuelle Position des Läufers 200 erfasst werden kann. Bei einer Ausgestaltung des Stators 5 mit mehreren Statormodulen 10, wie sie zum Beispiel in **Figur 2** gezeigt ist, kann in entsprechender Weise ein Teil der Dreiphasensysteme 150 eines oder mehrerer benachbarter Statormodule 10 zeitgleich elektrisch angesteuert werden, um den Läufer 200 anzutreiben.

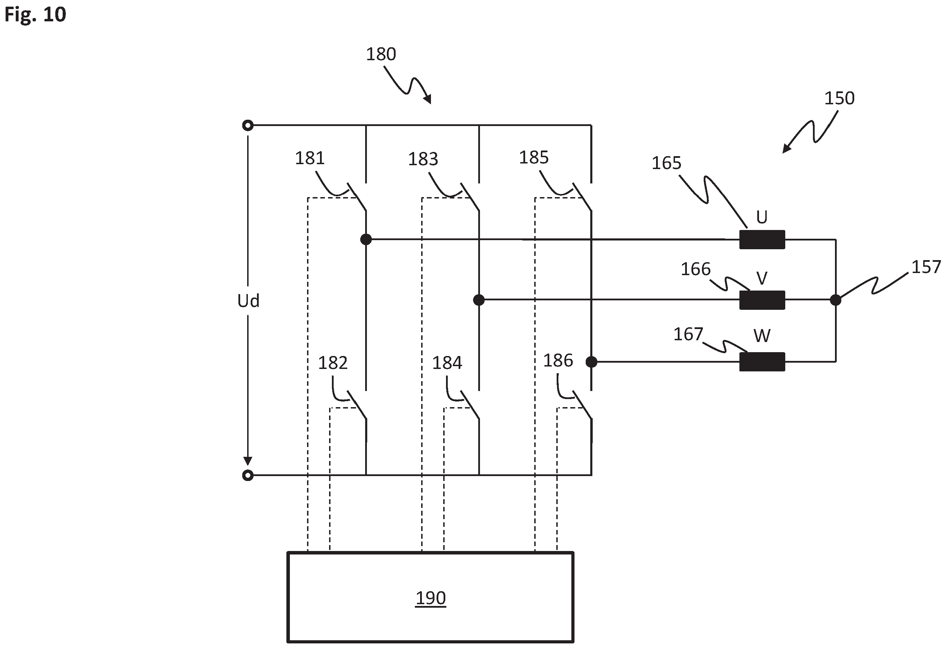

Die Bestromung von Dreiphasensystemen 150 des bzw. jedes Statormoduls 10 des Stators 5 erfolgt, wie oben angedeutet wurde, durch eine Stromregelung auf Basis der Pulsweitenmodulation. Wie in **Figur 10** anhand eines einzelnen Dreiphasensystems 150 eines Statormoduls 10 dargestellt ist, kann zu diesem Zweck u.a. eine dem Dreiphasensystem 150 zugeordnete und mit diesem verbundene Endstufeneinrichtung 180 des Statormoduls 10 zum Einsatz kommen. Das Dreiphasensystem 150 umfasst vorliegend eine erste Spule 165, eine zweite Spule 166 und eine dritte Spule 167, welche in einem gemeinsamen Sternpunkt 157 zusammengeschaltet sind. Mit Bezug auf die in den **Figuren 8** **und** **9** gezeigten Ersatzschaltbilder können die erste Spule 165 erste Hin- und Rückleiter 131, 132, die zweite Spule 166 zweite Hin- und Rückleiter 141, 142, und die dritte Spule 167 dritte Hin- und Rückleiter 146, 147 umfassen. Im Betrieb kann die erste Spule 165 zur Beaufschlagung der ersten Phase U eines dreiphasigen Antriebsstroms dienen, und können die zweite Spule 166 zur Beaufschlagung der zweiten Phase V und die dritte Spule 167 zur Beaufschlagung der dritten Phase W des Antriebsstroms verwendet werden.

Gemäß der in **Figur 10** gezeigten Ausgestaltung ist die Endstufeneinrichtung 180 an eine elektrische Zwischenkreisspannung Ud eines nicht dargestellten Gleichspannungszwischenkreises bzw. Zwischenkreisspeichers des betreffenden Statormoduls 10 angeschlossen. Die Endstufeneinrichtung 180 umfasst vorliegend einen ersten Schalter 181, einen zweiten Schalter 182, einen dritten Schalter 183, einen vierten Schalter 184, einen fünften Schalter 185 und einen sechsten Schalter 186. Der erste und zweite Schalter 181, 182 sind mit der ersten Spule 165 verbunden und können eine der ersten Spule 165 zugeordnete erste Endstufe bilden. Der dritte und vierte Schalter 183, 184 sind mit der zweiten Spule 166 verbunden und können eine der zweiten Spule 166 zugeordnete zweite Endstufe bilden. Der fünfte und sechste Schalter 185, 186 sind mit der dritten Spule 167 verbunden und können eine der dritten Spule 167 zugeordnete dritte Endstufe bilden.

Die in **Figur 10** dargestellte Endstufeneinrichtung 180 mit den Schaltern 181, 182, 183, 184, 185, 186 kann in Form einer Treiberschaltung mit drei Halbbrücken ausgebildet sein. Bei dieser Ausgestaltung können die Schalter 181, 182, 183, 184, 185, 186 in Form von Transistoren verwirklicht sein.

Im Betrieb ist, abweichend von der Darstellung in **Figur 10**, jeweils einer der beiden ersten und zweiten Schalter 181, 182 geschlossen, und der andere der beiden ersten und zweiten Schalter 181, 182 jeweils geöffnet. In entsprechender Weise sind jeweils einer der beiden dritten und vierten Schalter 183, 184 sowie jeweils einer der beiden fünften und sechsten Schalter 185, 186 geöffnet, und der andere der beiden dritten und vierten Schalter 183, 184 sowie der andere der beiden fünften und sechsten Schalter 185, 186 jeweils geschlossen. In Abhängigkeit der Schaltzustände der Schalter 181, 182, 183, 184, 185, 186 der Endstufeneinrichtung 180 können an die Spulen 165, 166, 167 des Dreiphasensystems 150 elektrische Spannungen bzw. Spannungspulse mit einem Spannungsbetrag in Höhe der Versorgungsspannung Ud oder ein Bezugs- bzw. Massepotential angelegt werden.

In **Figur 10** ist angedeutet, dass die Endstufeneinrichtung 180 mit einer Modulsteuervorrichtung 190 des zugehörigen Statormoduls 10 verbunden ist. Im Betrieb kann über die Modulsteuervorrichtung 190 eine pulsweitenmodulierte periodische Ansteuerung der Endstufeneinrichtung 180 bzw. von deren Schaltern 181, 182, 183, 184, 185, 186 erfolgen. Auf diese Weise können die Spulen 165, 166, 167 des Dreiphasensystems 150 mit pulsweitenmodulierten periodischen Spannungspulsen in Höhe der Zwischenkreisspannung Ud beaufschlagt und dadurch entsprechend bestromt werden.

Zur weiteren Veranschaulichung zeigt **Figur 11** ein Blockschaltbild eines Regelkreises zur Stromregelung eines Dreiphasensystems 150 eines Statormoduls 10 auf Basis der Pulsweitenmodulation, wie er bei dem Planarantriebssystem 1 zur Anwendung kommen kann. Der in **Figur 11** dargestellte Regelkreis umfasst eine externe Hauptsteuervorrichtung 500 des Planarantriebssystems 1, eine Modulsteuervorrichtung 190, eine Endstufeneinrichtung 180, ein Dreiphasensystem 150 und eine Strommesseinrichtung 172. Die Modulsteuervorrichtung 190, die Endstufeneinrichtung 180, das Dreiphasensystem 150 und die Strommesseinrichtung 172 sind Bestandteile des bzw. eines Statormoduls 10 des Stators 5 des Planarantriebssystems 1. Mit Bezug auf das in **Figur 4** gezeigte Statormodul 10 können die Modulsteuervorrichtung 190, die Endstufeneinrichtung 180 und die Strommesseinrichtung 172 in dem Modulgehäuse 18 integriert sein.

Die in **Figur 11** gezeigte Modulsteuervorrichtung 190 umfasst einen Stromregler 170, eine PWM-Signalerzeugungseinrichtung 171 und eine Verarbeitungseinrichtung 173. Die Modulsteuervorrichtung 190 kann in Form eines FPGAs verwirklicht sein.

Die elektrische Strommesseinrichtung 172, welche einen Analog-Digital-Umsetzer umfassen kann, und welche in geeigneter Weise mit dem Dreiphasensystem 150 verbunden ist, ist zum Erfassen von Iststromwerten des Dreiphasensystems 150 ausgebildet. Dies kann durch periodisches Abtasten zu vorgegebenen Zeitpunkten erfolgen. Bei der Strommessung können lediglich die Ströme von zwei der drei Spulen des Dreiphasensystems 150 abgetastet werden. Denn anhand der in den zwei abgetasteten Spulen fließenden Ströme kann auf den in der nicht abgetasteten Spule fließenden Strom geschlossen werden. Dies liegt an der Sternschaltung der Spulen des Dreiphasensystems 150.

Wie in dem Regelkreis von **Figur 11** dargestellt ist, werden im Betrieb des Planarantriebssystems 1 mit Hilfe der Hauptsteuervorrichtung 500 Sollstromwerte 300 erzeugt und an den Stromregler 170 übermittelt. Des Weiteren werden von der Strommesseinrichtung 172 durch das Abtasten an dem Dreiphasensystem 150 gewonnene Iststromwerte 304 an die Verarbeitungseinrichtung 173 weitergeleitet, welche diese verarbeitet, und infolgedessen verarbeitete Iststromwerte 305 an den Stromregler 170 übermittelt. Die verarbeiteten Iststromwerte 305 können sich auf ein zweiphasiges Bezugssystem (d/q-System) beziehen. In diesem Sinne kann bei der Verarbeitung durch die Verarbeitungseinrichtung 173 eine Koordinatentransformation, d.h. eine Clarke-Park-Transformation, durchgeführt werden. Hierbei können die sich auf das Dreiphasensystem 150 beziehenden Iststromwerte 304 in die sich auf das zweiphasige Bezugssystem beziehenden verarbeiteten Iststromwerte 305 transformiert werden. Auch die von der Hauptsteuervorrichtung 500 erzeugten und an den Stromregler 170 weitergeleiteten Sollstromwerte 300 können auf das zweiphasige Bezugssystem bezogen sein.

Basierend auf den Sollstromwerten 300 und den verarbeiteten Iststromwerten 305 werden von dem Stromregler 170 Steuersignale 301 erzeugt und an die PWM-Signalerzeugungseinrichtung 171 übermittelt. Die Steuersignale 301, welche ebenfalls auf das zweiphasige Bezugssystem bezogen sein können, können Sollspannungssignale sein bzw. solche Spannungssignale wiedergeben. Hierauf basierend werden von der PWM-Signalerzeugungseinrichtung 171 pulsweitenmodulierte Steuersignale 303 erzeugt, welche an die Endstufen bzw. Schalter der Endstufeneinrichtung 180 angelegt werden. Anders ausgedrückt, werden die von dem Stromregler 170 ausgegebenen Steuersignale 301 mit Hilfe der PWM-Signalerzeugungseinrichtung 171 in die pulsweitenmodulierten Steuersignale 303 umgesetzt. Bei der Umsetzung durch die PWM-Signalerzeugungseinrichtung 171 kann eine weitere Koordinatentransformation, d.h. eine inverse Clarke-Park-Transformation, durchgeführt werden. Hierbei können die von dem Stromregler 170 kommenden und sich auf das zweiphasige Bezugssystem beziehenden Steuersignale 301 in die sich auf das Dreiphasensystem 150 beziehenden und darüber hinaus pulsweitenmodulierten Steuersignale 303 transformiert werden. Basierend auf den pulsweitenmodulierten Steuersignalen 303 können mit Hilfe der Endstufeneinrichtung 180 pulsweitenmodulierte getaktete Spannungspulse an das Dreiphasensystem 150 bzw. dessen Spulen angelegt werden, wodurch in diesen entsprechende Antriebsströme fließen können.

Wie oben angedeutet wurde, umfasst das bzw. jedes Statormodul 10 des Stators 5 vierundzwanzig Dreiphasensysteme 150. Das bzw. jedes Statormodul 10 ist in diesem Zusammenhang ausgebildet, für jedes der zugehörigen Dreiphasensysteme 150 eine eigene, und insofern von anderen Dreiphasensystemen 150 unabhängige Stromregelung entsprechend des in **Figur 11** gezeigten Regelkreises durchzuführen. Daher weist das bzw. jedes Statormodul 10 für jedes zugehörige Dreiphasensystem 150 einen Stromregler 170, eine PWM-Signalerzeugungseinrichtung 171, eine Verarbeitungseinrichtung 173 und eine Endstufeneinrichtung 180 auf. Pro Statormodul 10 sind infolgedessen vierundzwanzig Stromregler 170, vierundzwanzig PWM-Signalerzeugungseinrichtungen 171 und vierundzwanzig Verarbeitungseinrichtungen 173 vorhanden, welche in der zugehörigen Modulsteuervorrichtung 190 integriert sind, sowie vierundzwanzig Endstufeneinrichtungen 180.

Mit Bezug auf die Strommessung ist hingegen folgende Ausgestaltung vorgesehen, um den Hardwareaufwand gering zu halten. Hierbei weist das bzw. jedes Statormodul 10 des Stators 5 mehrere Strommesseinrichtungen 172 auf, welche jeweils mit einer Gruppe aus drei Dreiphasensystemen 150 verbunden, und dadurch jeweils einer solchen Gruppe aus drei Dreiphasensystemen 150 zur Stromabtastung zugeordnet sind. In **Figur 12** ist diese Ausgestaltung für eine Strommesseinrichtung 172 veranschaulicht. Die Strommesseinrichtungen 172 sind ferner ausgebildet, das periodische Abtasten der elektrischen Ströme lediglich in Bezug auf eines der zugehörigen Dreiphasensysteme 150 simultan durchzuführen.

Im Hinblick auf die oben genannte Implementierung mit vierundzwanzig Dreiphasensystemen 150 weist das bzw. jedes Statormodul 10 des Stators 5 in entsprechender Weise acht Strommesseinrichtungen 172 auf. Wie oben anhand der **Figuren 8** **und** **9** erläutert wurde, umfassen die vierundzwanzig Dreiphasensysteme 150 eines Statormoduls 10 zwölf erste Dreiphasensysteme 151 und zwölf zweite Dreiphasensysteme 152, wobei die ersten Dreiphasensysteme 151 eine Bewegung des Läufers 200 entlang der ersten Richtung 12, und die zweiten Dreiphasensystem 152 eine Bewegung des Läufers 200 entlang der zweiten Richtung 14 bewirken können. Das bzw. jedes Statormodul 10 kann in diesem Zusammenhang derart ausgebildet sein, dass eine Gruppe aus drei Dreiphasensystemen 150, welche einer Strommesseinrichtung 172 jeweils zugehörig sind, entweder lediglich drei erste Dreiphasensysteme 151 oder lediglich drei zweite Dreiphasensysteme 152 umfasst.

Die in **Figur 11** gezeigte Hauptsteuervorrichtung 500 des Planarantriebssystems 1 ist in geeigneter Weise mit einem Statormodul 10 des Stators 5, und bei einer Ausgestaltung des Stators 5 mit mehreren Statormodulen 10, wie sie zum Beispiel in **Figur 2** gezeigt ist, mit den mehreren Statormodulen 10 verbunden, um eine Datenkommunikation zwischen der Hauptsteuervorrichtung 500 und dem bzw. den Statormodulen 10 zu ermöglichen. Wie oben beschrieben wurde, können zu diesem Zweck entsprechende Datenleitungen sowie, im Falle mehrerer Statormodule 10, miteinander verbundene Statormodule 10 zur Anwendung kommen. Im Betrieb kann die Hauptsteuervorrichtung 500 Sollstromwerte an einen oder mehrere Stromregler 170 eines oder mehrerer Statormodule 10 übermitteln, wodurch die zugehörigen Dreiphasensysteme 150 pulsweitenmoduliert bestromt werden können. Mit Bezug auf das Erzeugen und Übermitteln der Sollstromwerte kann die Hauptsteuervorrichtung 500 eine aktuelle Position des Läufers 200 berücksichtigen. Entsprechende Positionsdaten können der Hauptsteuervorrichtung 500 von einem bzw. mehreren Statormodulen 10 übermittelt werden. Derartige Positionsdaten können, wie oben angedeutet wurde, mit Hilfe von Positionssensoren des bzw. der mehreren Statormodule 10 gewonnen werden.

Die Hauptsteuervorrichtung 500 kann ferner zum Festlegen eines Systemtakts des Planarantriebssystems 1 ausgebildet sein, nach welchem sich der zeitliche Ablauf des Betriebs des Planarantriebssystems 1 richten kann. Im Rahmen der Datenkommunikation zwischen der Hauptsteuervorrichtung 500 und dem bzw. mehreren Statormodulen 10 des Stators 5 kann auch eine Übermittlung des Systemtakts erfolgen. Basierend auf dem Systemtakt können zeitliche Parameter der Stromregelung wie eine Taktfrequenz der Pulsweitenmodulation vorgegeben sein. Die PWM-Taktfrequenz kann im kHz-Bereich liegen und zum Beispiel 64kHz betragen.

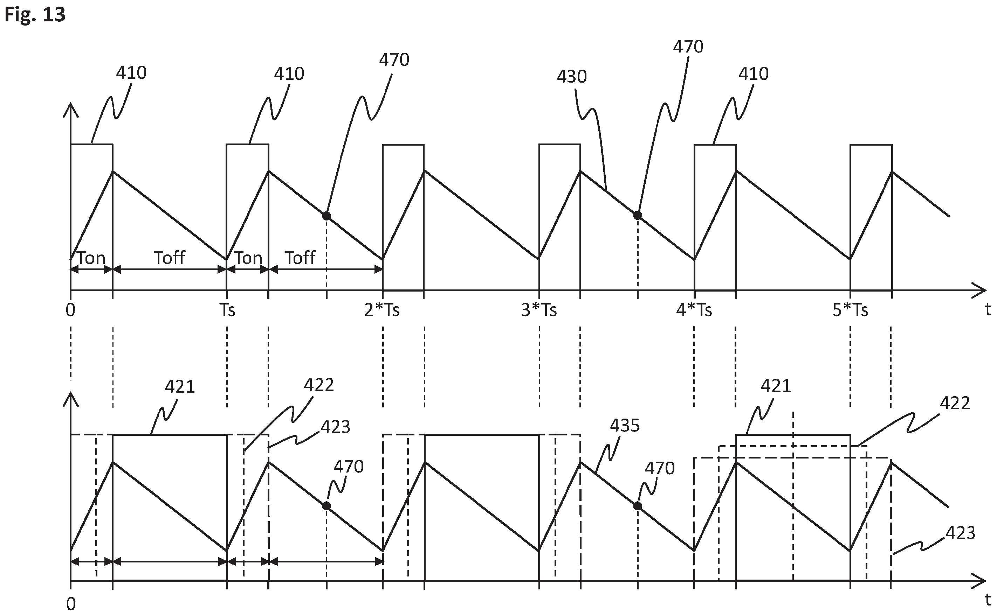

**Figur 13** zeigt mögliche elektrische Spannungs- und Stromverläufe in Abhängigkeit der Zeit t, wie sie bei einer pulsweitenmodulierten periodischen elektrischen Ansteuerung von Spulensystemen auftreten können. Das obere Diagramm von **Figur 13** zeigt, zur vereinfachenden Veranschaulichung, entsprechende Gegebenheiten bei einer Ansteuerung eines nicht dargestellten einphasigen Spulensystems, welches lediglich eine Spule aufweist. Das Spulensystem wird mit einer durch die Taktfrequenz der Pulsweitenmodulation vorgegebenen elektrischen Ansteuerspannung, und damit mit periodischen ersten Spannungspulsen 410 beaufschlagt. Die Spannung weist einen nahezu rechteckförmigen Verlauf mit zwei Spannungsniveaus auf. Ergänzend sind eine Periodendauer Ts der Pulsweitenmodulation, sowie eine Pulsdauer Ton und eine Auszeitdauer Toff dargestellt. Während der Pulsdauer Ton, in welcher das Spulensystem mit der Spannung beaufschlagt wird, liegt jeweils ein erster Spannungspuls 410 vor. Während der Auszeitdauer Toff erfolgt keine Spannungsbeaufschlagung des Spulensystems.

Aufgrund einer glättenden Wirkung des Spulensystems folgt der in dem Spulensystem fließende elektrische Strom den ersten Spannungspulsen 410 derart, dass ein dreieckförmiger erster Stromverlauf 430 vorliegt. Sofern die ersten Spannungspulse 410 an dem Spulensystem anliegen, erfolgt eine Vergrößerung des Stroms bzw. Strombetrags, und ansonsten eine Verkleinerung. Auf diese Weise pendelt der in dem Spulensystem fließende Strom mit der Taktfrequenz der Pulsweitenmodulation und damit der Periodendauer Ts um einen Mittelwert hin und her. Der Mittelwert des Stroms ist abhängig von dem Tastgrad, also dem Verhältnis aus der Pulsdauer Ton zu der Periodendauer Ts. Der in dem Spulensystem fließende Strom weist somit einen Wechselstromanteil, den sogenannten Rippelstrom, auf, was mit einem Auftreten eines sich zeitlich ändernden Magnetfelds verbunden ist.

Das untere Diagramm von **Figur 13** zeigt im Vergleich dazu entsprechende Gegebenheiten, wie sie bei einer elektrischen Ansteuerung eines dreiphasigen Spulensystems mit drei Spulen vorliegen können. Diese Art der Ansteuerung, welche auf einer mittenzentrierten Pulsweitenmodulation (engl. Center Aligned PWM) basiert, kann bei den Dreiphasensystemen 150 des Planarantriebssystem 1 zum Einsatz kommen und mit Hilfe des oben anhand von **Figur 11** beschriebenen Regelkreises sowie der oben beschriebenen Komponenten wie zum Beispiel der Endstufeneinrichtungen 180 verwirklicht werden.

Wie in **Figur 13** unten gezeigt ist, wird das dreiphasige Spulensystem mit drei durch die Taktfrequenz der Pulsweitenmodulation vorgegebenen Ansteuerspannungen, und damit mit drei periodischen Spannungspulsen 421, 422, 423 mit unterschiedlichen Pulsbreiten bzw. Pulsdauern beaufschlagt. Diese werden im Folgenden als zweite Spannungspulse 421, dritte Spannungspulse 422 und vierte Spannungspulse 423 bezeichnet. Die drei Spannungen weisen nahezu rechteckförmige Verläufe mit zwei Spannungsniveaus auf. Die zweiten Spannungspulse 421 können sich auf die erste Phase U, die dritten Spannungspulse 422 auf die zweite Phase V und die vierten Spannungspulse 423 auf die dritte Phase W eines dreiphasigen Antriebsstroms beziehen. In entsprechender Weise ist es zum Beispiel mit Bezug auf das in **Figur 10** gezeigte Dreiphasensystem 150 möglich, dass die erste Spule 165 mit den zweiten Spannungspulsen 421, die zweite Spule 166 mit den dritten Spannungspulsen 422 und die dritte Spule 167 mit den vierten Spannungspulsen 423 beaufschlagt wird. Dies lässt sich durch ein hierauf abgestimmtes Schalten der Schalter 181, 182, 183, 184, 185, 186 der zugehörigen Endstufeneinrichtung 180 erzielen.

Die elektrische Ansteuerung erfolgt derart, dass jeweils ein zweiter, dritter und vierter Spannungspuls 421, 422, 423 mittig zueinander zentriert sind, und damit die Mitten der jeweiligen Spannungspulse 421, 422, 423 übereinanderliegen. Um diesen Aspekt zu verdeutlichen, sind auf der rechten Seite des unteren Diagramms von **Figur 13** ein zweiter, dritter und vierter Spannungspuls 421, 422, 423 mit unterschiedlichen Pulshöhen dargestellt. Die Darstellung mit den unterschiedlichen Pulshöhen dient lediglich dazu, die mittenzentrierte Anordnung der zweiten, dritten und vierten Spannungspulse 421, 422, 423 hervorzuheben. Denn bei der Ansteuerung werden an die Spulen des dreiphasigen Spulensystems zweite, dritte und vierte Spannungspulse 421, 422, 423 mit übereinstimmender Spannungshöhe angelegt, wie es auch bei den übrigen in **Figur 13** gezeigten zweiten, dritten und vierten Spannungspulsen 421, 422, 423 veranschaulicht ist.

In dem unteren Diagramm von **Figur 13** ist ferner ein elektrischer zweiter Stromverlauf 435 dargestellt, wie er bei einer der drei Spulen des mit den drei Ansteuerspannungen und damit den zweiten, dritten und vierten Spannungspulsen 421, 422, 423 beaufschlagten dreiphasigen Spulensystems auftreten kann. Hierbei kann es sich zum Beispiel um die erste Phase U des dreiphasigen Antriebsstroms und, mit Bezug auf das in **Figur 10** gezeigte Dreiphasensystem 150, um die erste Spule 165 handeln. Auch der zweite Stromverlauf 435 besitzt, aufgrund einer glättenden Wirkung des Spulensystems, eine dreieckförmige Gestalt, und pendelt mit der Taktfrequenz der Pulsweitenmodulation um einen Mittelwert hin und her. Eine Vergrößerung des Strombetrags erfolgt, wenn sich alle drei Ansteuerspannungen nicht auf dem gleichen (oberen oder unteren) Spannungsniveau befinden. Sofern die drei Spannungen hingegen das gleiche Spannungsniveau besitzen, erfolgt eine Verkleinerung des Strombetrags. Der dabei vorhandene Rippelstrom führt auch hier zu einem Auftreten eines magnetischen Wechselfelds.

Bei den zwei anderen Spulen des dreiphasigen Spulensystems liegen zu dem zweiten Stromverlauf 435 korrespondierende, nicht dargestellte dreieckförmige und mit dem Rippelstrom behaftete elektrische Stromverläufe vor. Auch hierbei erfolgt jeweils eine Vergrößerung des Strombetrags, wenn sich sämtliche drei Ansteuerspannungen nicht auf dem gleichen Spannungsniveau befinden, und ansonsten eine Verkleinerung des Strombetrags. Wenigstens einer der nicht gezeigten Stromverläufe kann ein zu dem zweiten Stromverlauf 435 inverses Aussehen besitzen, d.h. dass die Stromänderungen mit gegenüber dem zweiten Stromverlauf 435 inversem Vorzeichen stattfinden.

Bei einem bestromten Dreiphasensystem 150 des Planarantriebssystems 1 sind die in den zugehörigen Spulen fließenden elektrischen Antriebsströme in gleicher Weise mit einem Rippelstrom überlagert. Das Auftreten des Rippelstroms ist mit einem sich zeitlich ändernden Magnetfeld verbunden. Dieser Effekt wird bei dem Planarantriebssystem 1 dazu genutzt, um eine elektrische Wechselspannung in der wenigstens einen Läuferspule 240 des Läufers 200 zu induzieren und dadurch elektrische Energie von dem Stator 5 auf den Läufer 200 zu übertragen. Der Rippelstrom kann relativ groß sein, d.h. eine relativ große Schwingungsbreite aufweisen. Möglich ist zum Beispiel eine Schwingungsbreite im einstelligen Ampere-Bereich, zum Beispiel in einem Bereich bis zu 4A. In entsprechender Weise kann das aufgrund des Rippelstroms erzeugte magnetische Wechselfeld eine relativ große Schwingungsbreite aufweisen, wodurch eine effektive induktive Energieübertragung von dem Stator 5 auf den Läufer 200 ermöglicht wird. Die Größe des Rippelstroms kann abhängig sein von dem Mittelwert des in bestromten Dreiphasensystemen 150 fließenden Stroms.

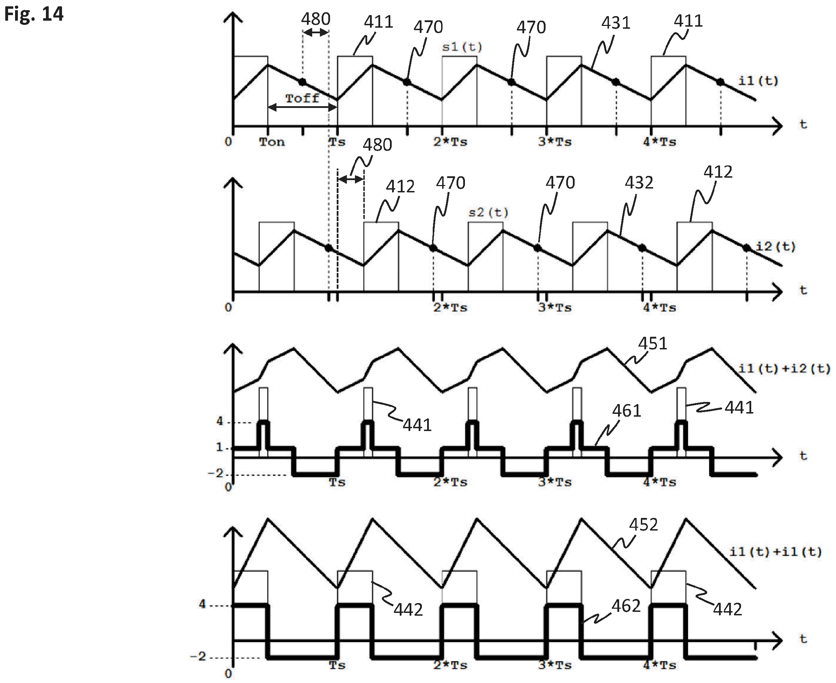

In **Figur 13** ist dargestellt, dass der erste Stromverlauf 430 in dem einphasigen Spulensystem mit dem zweiten Stromverlauf 435 in dem dreiphasigen Spulensystem übereinstimmen kann. Daher kann das obere Diagramm von **Figur 13** als Äquivalenzdarstellung für das dreiphasige Spulensystem dienen, und kann sich der erste Stromverlauf 430 auch auf eine der drei Spulen des dreiphasigen Spulensystems beziehen. Bei dieser Betrachtungsweise können die ersten Spannungspulse 410 als effektive und eine Vergrößerung des Strombetrags bewirkende Ersatzpulse für die eigentlich an dem dreiphasigen Spulensystem anliegenden zweiten, dritten und vierten Spannungspulse 421, 422, 423 angesehen werden. Dieser Zusammenhang ist in **Figur 13** anhand der gestrichelten Linien zwischen dem oberen und unteren Diagramm angedeutet. Die Äquivalenzdarstellung der Ansteuerung eines einphasigen Spulensystems für die Ansteuerung eines dreiphasigen Spulensystems kommt in entsprechender Weise in nachstehend beschriebenen Figuren wie den **Figuren 14****,** **15****,** **17** **und** **19** zum Einsatz.

In **Figur 13** sind darüber hinaus Strommesszeitpunkte 470 dargestellt, an welchen die Spulensysteme zum Gewinnen von elektrischen Iststromwerten abgetastet werden können. Das periodische Abtasten erfolgt zeitlich abgestimmt auf die pulsweitenmodulierte periodische Bestromung, und zwar derart, dass sich die Strommesszeitpunkte 470 mittig zwischen aufeinanderfolgenden ersten Spannungspulsen 410 bzw. zweiten, dritten und vierten Spannungspulsen 421, 422, 423 befinden. Hierdurch kann erreicht werden, dass die durch das Abtasten gewonnenen Iststromwerte dem Mittelwert des jeweiligen Stroms entsprechen (sogenanntes Regular-Sampling-Verfahren). Diese Vorgehensweise ermöglicht eine genaue Stromregelung.

In dem unteren Diagramm von **Figur 13** sind die Strommesszeitpunkte 470 jeweils zwischen den zweiten, dritten und vierten Spannungspulsen 421, 422, 423 angeordnet. In dem als Äquivalenzdarstellung verwendbaren oberen Diagramm von **Figur 13** sind die Strommesszeitpunkte 470 korrespondierend zu dem unteren Diagramm dargestellt. Auf diese Weise sind die Strommesszeitpunkte 470 nicht zwischen sämtlichen ersten Spannungspulsen 410 vorhanden. Es ist jedoch auch möglich, die Strommesszeitpunkte 470 zwischen sämtlichen ersten Spannungspulsen 410 vorzusehen und damit pro PWM-Taktperiode jeweils eine Messung durchzuführen, wie es zum Beispiel in **Figur 14** gezeigt ist.

Die bei dem Planarantriebssystem 1 gemäß des in **Figur 11** gezeigten Regelkreises durchgeführte Stromregelung kann derart erfolgen, dass zu bestromende Dreiphasensysteme 150 entsprechend **Figur 13** pulsweitenmoduliert angesteuert und dadurch bestromt werden. Hierbei werden unter Verwendung der von der Hauptsteuervorrichtung 500 vorgegebenen Sollstromwerte 300 pulsweitenmodulierte Steuersignale 303 erzeugt, welche an die jeweiligen Endstufeneinrichtungen 180 übermittelt werden (vgl. **Figur 11**). Auf diese Weise werden die zu bestromenden Dreiphasensysteme 150 mit Spannungspulsen mit vorgegebenen Tastverhältnissen und Pulsdauern beaufschlagt mit der Folge, dass diese bestromt werden. Die Mittelwerte der in den Dreiphasensystemen 150 fließenden elektrischen Ströme richten sich nach den von der Hauptsteuervorrichtung 500 vorgegebenen Sollstromwerten 300. Durch eine Änderung der Sollstromwerte 300 kann eine Änderung der pulsweitenmodulierten Steuersignale 303 und damit der Tastverhältnisse und Pulsdauern der Spannungspulse bewirkt werden, wodurch sich auch die Mittelwerte der Ströme ändern. Im Vergleich zu dem überlagerten Rippelstrom können derartige Stromänderungen wesentlich langsamer sein bzw. sich auf wesentlich größere Zeiträume beziehen. Infolgedessen kann die bei dem Planarantriebssystem 1 durchgeführte Stromregelung, trotz der über größere Zeiträume vorliegenden unterschiedlichen Ströme, auch als Gleichstromregelung bzw. DC-Stromregelung (Direct Current) bezeichnet werden.

Wie oben anhand von **Figur 12** erläutert wurde, weist das bzw. jedes Statormodul 10 des Stators 5 acht Strommesseinrichtungen 172 auf, welche jeweils mit einer Gruppe aus drei Dreiphasensystemen 150 verbunden sind und jeweils zur Stromabtastung einer solchen Gruppe aus Dreiphasensystemen 150 verwendet werden. Die Strommesseinrichtungen 172 sind ausgebildet, das Abtasten der in den zugehörigen Dreiphasensystemen 150 fließenden Ströme lediglich in Bezug auf eines der Dreiphasensysteme 150 simultan durchzuführen.

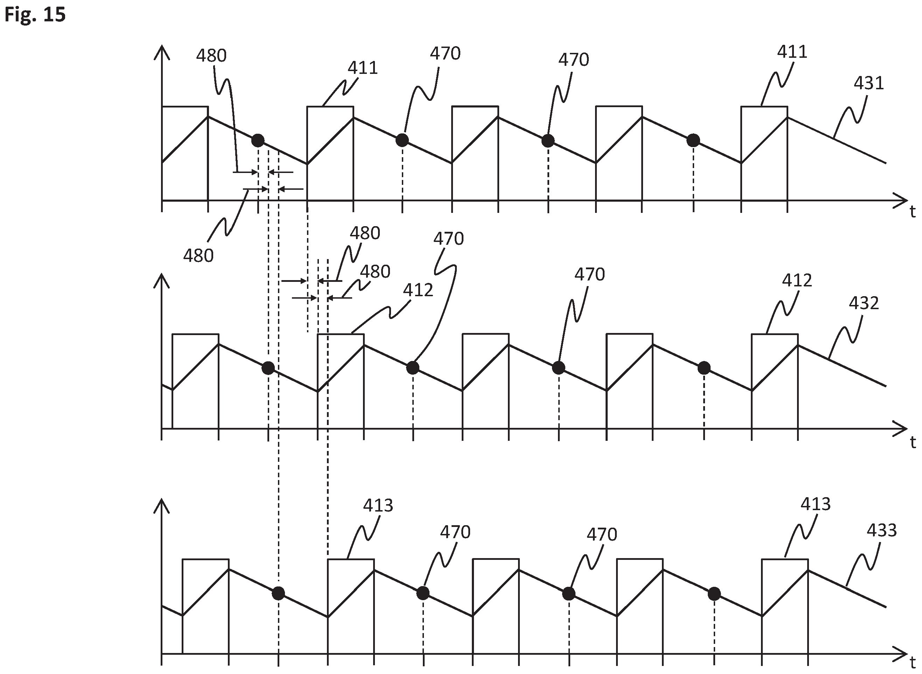

In diesem Zusammenhang kann folgende Ausgestaltung für das Planarantriebssystem 1 zur Anwendung kommen. Hierbei ist das bzw. jedes Statormodul 10 des Stators 5 dazu ausgebildet, Dreiphasensysteme 150 einer Gruppe mit Hilfe der zugehörigen Strommesseinrichtung 172, wie oben beschrieben, jeweils zeitlich abgestimmt auf deren pulsweitenmodulierte Bestromung periodisch abzutasten. Auf diese Weise können Strommittelwerte als Iststromwerte erhalten werden, was eine genaue Stromregelung möglich macht. Da mit Hilfe der betreffenden Strommesseinrichtung 172 jeweils lediglich ein Dreiphasensystem 150 simultan abgetastet werden kann, ist das bzw. jedes Statormodul 10 des Stators 5 ferner ausgebildet, das pulsweitenmodulierte Bestromen von Dreiphasensystemen 150 der Gruppe und das hierauf abgestimmte Abtasten mit Hilfe der zugehörigen Strommesseinrichtung 172 jeweils mit einem Zeitversatz zueinander, und damit in zueinander versetzten Zeitrastern, durchzuführen, wie es weiter unten anhand der Figuren 14 und 15 näher erläutert wird. Der Zeitversatz besteht dabei jeweils zwischen dem pulsweitenmodulierten Bestromen von verschiedenen Dreiphasensystemen 150 der betreffenden Gruppe und zwischen dem Abtasten von verschiedenen Dreiphasensystemen 150 der Gruppe. Diese Ausgestaltung kann in Bezug auf sämtliche Strommesseinrichtungen 172 und zugehörige Gruppen aus Dreiphasensystemen 150 des Stators 5 des Planarantriebssystems 1 vorgesehen sein.

Das pulsweitenmodulierte Bestromen von Dreiphasensystemen 150 eines Statormoduls 10 mit einem Zeitversatz zueinander macht es möglich, eine Entlastung des Zwischenkreises des Statormoduls 10 zu erzielen. Denn hierbei können die betreffenden Dreiphasensysteme 150 nicht gleichzeitig Strom aus dem Zwischenkreis ziehen, sondern versetzt zueinander, wodurch auch geringere Stromspitzen in dem Zwischenkreis auftreten können.

Im Betrieb des Planarantriebssystems 1 können mehrere Dreiphasensysteme 150 gleichzeitig bestromt werden, um den Läufer 200 anzutreiben. Dies kann durch die Hauptsteuervorrichtung 500 gesteuert werden, indem die Hauptsteuervorrichtung 500 entsprechende Sollstromwerte 300 für zugehörige Stromregler 170 ausgibt (vgl. **Figur 11**). Es ist auch möglich, dass mehrere Dreiphasensysteme 150 von verschiedenen Gruppen, welche also unterschiedlichen Strommesseinrichtungen 172 zur Stromabtastung zugeordnet sind, gleichzeitig bestromt werden. Bei einer Ausgestaltung des Stators 5 mit mehreren Statormodulen 10 (vgl. **Figur 2****)** können mehrere gleichzeitig bestromte Dreiphasensysteme 150, je nach Position des Läufers 200, auch Bestandteile von mehreren benachbarten Statormodulen 10 sein.

Bei einer gleichzeitigen Bestromung von mehreren Dreiphasensystemen 150 bezieht sich der oben erwähnte Zeitversatz jeweils auf die Dreiphasensysteme 150 einer Gruppe, welche einer Strommesseinrichtung 172 zugeordnet sind. Mit Bezug auf verschiedene Gruppen aus Dreiphasensystemen 150 des Stators 5 können die zueinander versetzten Zeitraster hingegen synchron sein, d.h. dass Dreiphasensysteme 150 von unterschiedlichen Gruppen sowie gegebenenfalls von unterschiedlichen Statormodulen 10 synchron zueinander pulsweitenmoduliert bestromt und synchron zueinander abgetastet werden können.

Bei einer gleichzeitigen Bestromung von mehreren Dreiphasensystemen 150 können sich ferner der Läufer 200 und damit die wenigstens eine zur induktiven Energieübertragung genutzte Läuferspule 240 des Läufers 200 im Einflussbereich der mehreren bestromten Dreiphasensysteme 150 befinden und dem Einfluss eines resultierenden magnetischen Wechselfelds ausgesetzt sein, welches durch eine Überlagerung mehrerer magnetischer Wechselfelder, jeweils hervorgerufen durch die in den Dreiphasensystemen 150 fließenden Rippelströme, gebildet ist. Die in der Läuferspule 240 des Läufers 200 induzierte Wechselspannung ist abhängig von dem resultierenden magnetischen Wechselfeld. Ein zueinander zeitlich versetztes pulsweitenmoduliertes Bestromen von Dreiphasensystemen 150 führt dazu, dass die in den Dreiphasensystemen 150 fließenden Rippelströme und damit der zeitliche Verlauf der hierdurch hervorgerufenen magnetischen Wechselfelder zeitlich zueinander versetzt bzw. phasenverschoben sind.

In **Figur 14** ist dieser Zusammenhang anhand von zwei benachbarten bestromten Spulensystemen veranschaulicht. Mit Bezug auf den Stator 5 des Planarantriebssystems 1 kann es sich hierbei zum Beispiel um zwei lateral nebeneinanderliegende oder um zwei übereinanderliegende Dreiphasensysteme 150 handeln. Die beiden oberen Diagramme von **Figur 14** zeigen elektrische Spannungs- und Stromverläufe in Abhängigkeit der Zeit t, wie sie bei einer versetzten pulsweitenmodulierten elektrischen Ansteuerung der beiden Spulensysteme vorliegen können. Ein erstes der beiden Spulensysteme wird mit einer ersten elektrischen Ansteuerspannung s1(t) und damit mit periodischen fünften Spannungspulsen 411 beaufschlagt, so dass ein in dem ersten Spulensystem fließender erster elektrischer Strom i1(t) einen dreieckförmigen dritten Stromverlauf 431 aufweist. In entsprechender Weise wird ein zweites der beiden Spulensysteme mit einer zweiten elektrischen Ansteuerspannung s2(t) und damit mit periodischen sechsten Spannungspulsen 412 beaufschlagt, so dass ein in dem zweiten Spulensystem fließender zweiter elektrischer Strom i2(t) einen dreieckförmigen vierten Stromverlauf 432 besitzt. In beiden Spulensystemen erfolgt ferner eine auf die jeweilige pulsweitenmodulierte Ansteuerung abgestimmte Stromabtastung an Strommesszeitpunkten 470, welche sich jeweils mittig zwischen aufeinanderfolgenden fünften Spannungspulsen 411 bzw. sechsten Spannungspulsen 412 befinden.

Gemäß den beiden oberen Diagrammen von **Figur 14** werden das periodische elektrische Ansteuern und damit Bestromen der beiden Spulensysteme, sowie das zeitlich hierauf abgestimmte periodische Abtasten, jeweils in zueinander versetzten, durch die Taktfrequenz der Pulsweitenmodulation vorgegebenen Zeitrastern durchgeführt. Somit liegt zwischen den fünften und sechsten Spannungspulsen 411, 412, als auch zwischen den sich auf das erste und das zweite Spulensystem beziehenden Stromesszeitpunkten 470, jeweils ein Zeitversatz 480 vor. Aufgrund des Zeitversatzes 480 kann es zeitweise in einem der beiden Spulensysteme zu einer Vergrößerung des Strombetrags kommen, während gleichzeitig in dem anderen der beiden Spulensysteme eine Verkleinerung des Strombetrags auftritt.

Hinsichtlich der fünften und sechsten Spannungspulse 411, 412 kann der Zeitversatz 480, wie in **Figur 14** gezeigt ist, auf die ansteigenden Flanken der fünften und sechsten Spannungspulse 411, 412 bezogen sein. Alternativ kann der Zeitversatz 480 auch auf die Mitten der fünften und sechsten Spannungspulse 411, 412 bezogen sein. Im Hinblick auf die abfallenden Flanken der fünften und sechsten Spannungspulse 411, 412 ist dies hingegen nicht der Fall. Denn es besteht die Möglichkeit, dass die Tastverhältnisse (also die Verhältnisse Ton/Ts) bei der Stromregelung der beiden Spulensysteme unterschiedlich groß sind, obwohl jeweils der gleiche Strom ausgeregelt wird. Ursache hierfür können Parameterstreuungen oder anderen Toleranzen sein. Wenn die Tastverhältnisse (wenn auch nur leicht) unterschiedlich sind, dann ist der Zeitversatz 480 zwischen den Strommesszeitpunkten 470 nicht gleich dem Zeitabstand der fallenden Flanken der fünften und sechsten Spannungspulse 411, 412, jedoch gleich dem Zeitabstand der Mitten der fünften und sechsten Spannungspulse 411, 412.

Das vorletzte Diagramm von **Figur 14** zeigt den zeitlichen ersten Verlauf eines virtuellen Summenstroms 451, welcher durch Addition der Ströme i1(t), i2(t) bzw. des dritten und vierten Stromverlaufs 431, 432 gebildet ist. Weiter dargestellt sind erste Zeitbereiche 441, in welchen eine zeitliche Überlappung der versetzten fünften und sechsten Spannungspulse 411, 412 vorliegt, sowie der zeitliche erste Verlauf einer Magnetfeldstärkeänderung 461. Der erste Verlauf der Magnetfeldstärkeänderung 461 bezieht sich auf die zeitliche Überlagerung der magnetischen Wechselfelder der beiden Spulensysteme. Mit Bezug auf den ersten Verlauf der Magnetfeldstärkeänderung 461 ist auf der Ordinate eine fiktive Größenskala angedeutet. In den ersten Zeitbereichen 441 besitzt der erste Verlauf des virtuellen Summenstroms 451 die größten, auf die Zeit t bezogenen Änderungen des Strombetrags. Der erste Verlauf der Magnetfeldstärkeänderung 461 richtet sich nach den durch die Ströme i1(t), i2(t) in den beiden Spulensystemen hervorgerufenen magnetischen Wechselfeldern, und ist abhängig von dem ersten Verlauf des virtuellen Summenstroms 451. In den ersten Zeitbereichen 441 kommt es zu den größten konstruktiven Überlagerungen der durch die Spulensysteme hervorgerufenen magnetischen Wechselfelder, wodurch die Änderung der Magnetfeldstärke am größten ist. Außerhalb der ersten Zeitbereiche 441, in welchen aufgrund der zueinander versetzen Bestromung der beiden Spulensysteme zum Teil abschwächende Überlagerungen der magnetischen Wechselfelder vorliegen, fällt die Änderung der Magnetfeldstärke hingegen geringer aus.

Das letzte bzw. unterste Diagramm von **Figur 14** zeigt im Vergleich dazu Gegebenheiten für den Fall einer zeitlich synchronen elektrischen Ansteuerung der beiden Spulensysteme, also bei einer Bestromung der beiden Spulensysteme jeweils mit dem ersten Strom i1(t). Weiter dargestellt sind der zeitliche zweite Verlauf eines virtuellen Summenstroms 452, gebildet durch zweimalige Addition des ersten Stroms i1(t) bzw. des dritten Stromverlaufs 431, zu den fünften Spannungspulsen 411 korrespondierende zweite Zeitbereiche 442, und der von dem zweiten Verlauf des virtuellen Summenstroms 452 abhängige zeitliche zweite Verlauf einer Magnetfeldstärkeänderung 462. Der zweite Verlauf der Magnetfeldstärkeänderung 462 bezieht sich auf die Überlagerung der magnetischen Wechselfelder der beiden Spulensysteme. Bei der zeitlich synchronen Ansteuerung der Spulensysteme liegen ausschließlich konstruktive Überlagerungen der durch die Spulensysteme hervorgerufenen magnetischen Wechselfelder vor, welche in den zweiten Zeitbereichen 442 am größten sind. Insofern ist bei der zeitlich synchronen Ansteuerung auch die Änderung der Magnetfeldstärke größer als bei der zeitlich versetzten Ansteuerung der Spulensysteme, wie sich anhand eines Vergleichs der unterschiedlichen Verläufe der Magnetfeldstärkeänderung 461, 462 erkennen lässt. Dies gilt in entsprechender Weise für eine in der wenigstens einen Läuferspule 240 des Läufers 200 induzierbare elektrische Wechselspannung.

Bei dem Planarantriebssystem 1 sind den Strommesseinrichtungen 172 jeweils Gruppen aus drei Dreiphasensystemen 150 zugeordnet (vgl. **Figur 12**). Wie ferner oben angegeben wurde, kann eine Ausgestaltung des Planarantriebssystems 1 zur Anwendung kommen, in welcher das bzw. jedes Statormodul 10 des Stators 5 dazu ausgebildet ist, das Bestromen von Dreiphasensystemen 150 einer Gruppe und das hierauf abgestimmte periodische Abtasten jeweils zeitlich versetzt zueinander durchzuführen.

In **Figur 15** ist diese Ausgestaltung anhand von möglichen Spannungs- und Stromverläufen in Abhängigkeit der Zeit t für eine solche Gruppe aus drei Spulensystemen veranschaulicht, welche alle bestromt werden. Ein erstes der drei Spulensysteme wird mit periodischen fünften Spannungspulsen 411 beaufschlagt, so dass ein dreieckförmiger dritter Stromverlauf 431 in dem ersten Spulensystem vorliegt. In entsprechender Weise werden ein zweites und ein drittes Spulensystem mit periodischen sechsten Spannungspulsen 412 bzw. periodischen siebten Spannungspulsen 413 angesteuert, wodurch sich ein dreieckförmiger vierter Stromverlauf 432 bzw. ein dreieckförmiger fünfter Stromverlauf 433 in dem zweiten bzw. dritten Spulensystem einstellt. In jedem der Spulensysteme wird eine Stromabtastung zeitlich abgestimmt auf die jeweilige elektrische Ansteuerung durchgeführt, d.h. an Strommesszeitpunkten 470, welche sich jeweils mittig zwischen aufeinanderfolgenden fünften, sechsten und siebten Spannungspulsen 411, 412, 413 befinden. Pro PWM-Periode erfolgt jeweils eine Stromabtastung. Denkbar sind auch mehrere Stromabtastungen, zum Beispiel zwei Abtastungen, pro PWM-Periode.

Wie in **Figur 15** gezeigt ist, werden das elektrische Ansteuern und damit Bestromen sowie das hierauf abgestimmte Abtasten der drei Spulensysteme versetzt zueinander durchgeführt. Zwischen dem periodischen Ansteuern des ersten Spulensystems und dem periodischen Ansteuern des zweiten Spulensystems, sowie auch zwischen dem periodischen Ansteuern des zweiten Spulensystems und dem periodischen Ansteuern des dritten Spulensystems liegt jeweils ein Zeitversatz 480 vor. In entsprechender Weise liegt zwischen dem periodischen Abtasten des ersten Spulensystems und dem periodischen Abtasten des zweiten Spulensystems, sowie auch zwischen dem periodischen Abtasten des zweiten Spulensystems und dem periodischen Abtasten des dritten Spulensystems jeweils ein Zeitversatz 480 vor. Hinsichtlich der fünften, sechsten und siebten Spannungspulse 411, 412, 413 kann der Zeitversatz 480, entsprechend **Figur 14****,** auf die ansteigenden Flanken der fünften, sechsten und siebten Spannungspulse 411, 412, 413 bezogen sein. Alternativ kann der Zeitversatz 480 auch auf die Mitten der fünften, sechsten und siebten Spannungspulse 411, 412, 413 bezogen sein.

Ein weiterer Effekt, welcher bei einer zeitlich versetzten Ansteuerung von Spulensystemen auftreten kann, besteht darin, dass die Magnetfeldstärkeänderung des resultierenden Magnetfelds ortsabhängig sein kann. In entsprechender Weise kann eine in der wenigstens einen Läuferspule 240 des Läufers 200 induzierbare elektrische Wechselspannung abhängig sein von der Position des Läufers 200.

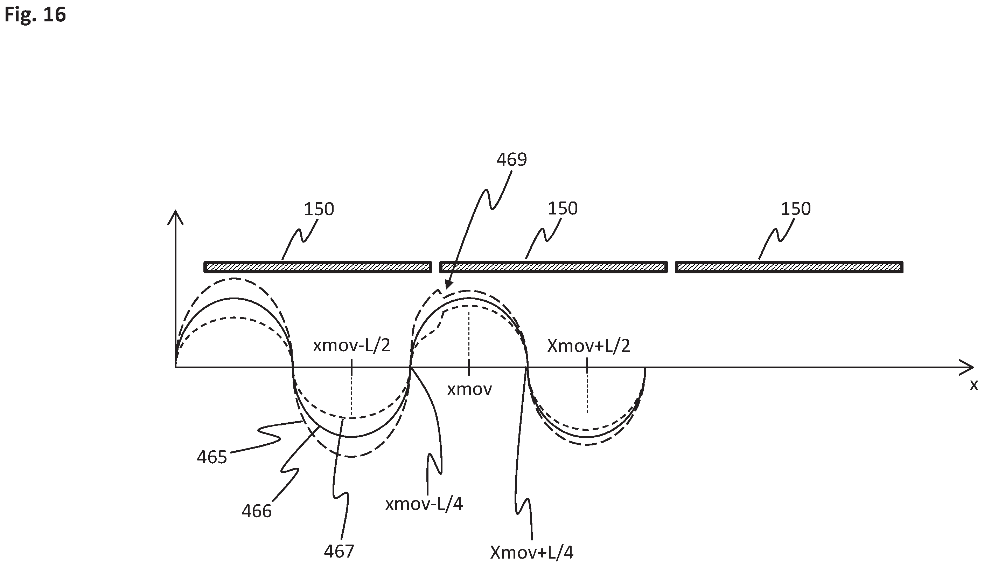

Zur weiteren Veranschaulichung zeigt **Figur 16** eine Anordnung aus drei benachbarten Dreiphasensystemen 150 sowie räumliche Verläufe einer Magnetfeldstärke 465, 466, 467 in Abhängigkeit eines Ortes x. Diese werden im Folgenden als erster Verlauf der Magnetfeldstärke 466, zweiter Verlauf der Magnetfeldstärke 465 und dritter Verlauf der Magnetfeldstärke 467 bezeichnet. Bei den Dreiphasensystemen 150 kann es sich um erste Dreiphasensysteme 151 oder um zweite Dreiphasensysteme 152 des Stators 5 handeln, wie sie oben mit Bezug auf die **Figuren 8** **und** **9** erläutert wurden. In entsprechender Weise kann sich der Ort x auf die erste Richtung 12 oder die zweite Richtung 14 beziehen. Von den in **Figur 16** gezeigten Dreiphasensystemen 150 werden lediglich zwei Dreiphasensysteme 150, und zwar das in **Figur 16** linke und das mittlere Dreiphasensystem 150, bestromt. Die Verläufe der Magnetfeldstärke 465, 466, 467, welche jeweils die örtliche Stärke des von beiden bestromten Dreiphasensystemen 150 erzeugten resultierenden Magnetfelds veranschaulichen, beziehen sich auf drei unterschiedliche Zeitpunkte. Der mit einer durchgezogenen Linie dargestellte räumliche erste Verlauf der Magnetfeldstärke 466, welcher eine stetige sinusförmige Gestalt besitzt, kann einen zeitlichen Mittelwert der Stärke des resultierenden Magnetfelds veranschaulichen.

Bei der in **Figur 16** gezeigten Anordnung werden das linke und das mittlere Dreiphasensystem 150 in der oben beschriebenen Art und Weise pulsweitenmoduliert elektrisch angesteuert, wodurch die Dreiphasensysteme 150 bestromt werden und die in den Dreiphasensystemen 150 fließenden Ströme mit einem Rippelstrom behaftet sind. Dies führt dazu, dass bei den von den bestromten Dreiphasensystemen 150 erzeugten Magnetfeldern, und damit auch bei dem resultierenden Magnetfeld, ein zeitliches Schwanken der Magnetfeldstärke vorliegt, wie es anhand der zu unterschiedlichen Zeitpunkten vorliegenden verschiedenen Verläufe der Magnetfeldstärke 465, 466, 467 deutlich wird.

Gemäß **Figur 16** werden das linke und das mittlere Dreiphasensystem 150 ferner mit einem Zeitversatz zueinander pulsweitenmoduliert angesteuert. Dies kann dazu führen, dass in einem Übergangsbereich der Dreiphasensysteme 150 die von den Dreiphasensystemen 150 erzeugten Magnetfelder voneinander abweichende Magnetfeldstärken aufweisen. Auf diese Weise kann das resultierende Magnetfeld einen Sprung bzw. Knick 469 in Form von relativ großen örtlichen Änderungen der Magnetfeldstärke in dem Übergangsbereich aufweisen, wie er in **Figur 16** bei den gestrichelt dargestellten zweiten und dritten Verläufen der Magnetfeldstärke 465, 467 gezeigt ist. Die zweiten und dritten Verläufe der Magnetfeldstärke 465, 467 besitzen dadurch, im Unterschied zu dem ersten Verlauf der Magnetfeldstärke 466, nur außerhalb des Übergangsbereichs eine sinusför-mige Gestalt. Die versetzte Ansteuerung der Dreiphasensysteme 150 führt vorliegend infolgedessen dazu, dass die Effizienz einer induktiven Energieübertragung in dem Übergangsbereich der Dreiphasensysteme 150 geringer sein kann als in dem übrigen, von dem resultierenden Magnetfeld durchsetzten Bereich. Die induktive Energieübertragung kann insofern ortsabhängig, und damit abhängig von der Position des Läufers 200 sein.

In **Figur 16** sind darüber hinaus auf der x-Achse mehrere mit xmov-L/2, xmov-L/4, xmov, xmov+L4 und xmov+L/2 bezeichnete Positionen angedeutet, in welchen die Verläufe der Magnetfeldstärke 465, 466, 467 Scheitelpunkte und Nulldurchgänge aufweisen. Die Variable L kann eine Breite eines Dreiphasensystems 150 bzw. eines Statorsegments 120, 121 sein, und der in den **Figuren 6** **und** **7** dargestellten Segmentbreite 127 entsprechen. Mit xmov kann des Weiteren eine Mittenposition des Läufers 200 angedeutet sein, an welcher sich die Mitte des Läufers 200 und wenigstens einer Läuferspule 240 des Läufers 200 befinden können.

Um bei der oben beschriebenen Ausgestaltung des Planarantriebssystems 1 mit zueinander versetzt elektrisch angesteuerten Dreiphasensystemen 150 so weit wie möglich zu unterdrücken, dass es aufgrund des versetzten Ansteuerns zu einer Beeinträchtigung der induktiven Energieübertragung kommt, kann ferner folgende Konfiguration in Bezug auf das Planarantriebssystem 1 in Betracht kommen. Hierbei ist das bzw. jedes Statormodul 10 des Stators 5 derart ausgebildet, dass der bei der versetzten Ansteuerung von Dreiphasensystemen 150 vorliegende Zeitversatz 480 (vgl. die **Figuren 14** **und** **15**) möglichst klein bzw. minimal ist. Der Zeitversatz 480 kann zu diesem Zweck einer Abtastzeitdauer bzw. minimalen Abtastzeitdauer der Strommesseinrichtungen 172 entsprechen, welche die Strommesseinrichtungen 172 zum simultanen Abtasten der Ströme eines zugehörigen Dreiphasensystems 150 benötigen. Auf diese Weise kann bei dem versetzen Bestromen von Dreiphasensystemen 150 und dem hierauf abgestimmten Abtasten derselben erzielt werden, dass sich die magnetischen Wechselfelder der bestromten Dreiphasensysteme 150 zumindest teilweise bzw. zu einem relativ großen Teil konstruktiv überlagern. Infolgedessen kann die induktive Energieübertragung von dem Stator 5 auf den Läufer 200 möglichst effektiv und darüber hinaus auch größtenteils positionsunabhängig sein, und können Schwankungen in der Größe der Energieübertragung relativ klein sein. Die minimale Abtastzeitdauer, welche auch als Samplingzeit bezeichnet werden kann, kann zum Beispiel im einstelligen Mikrosekundenbereich liegen und zum Beispiel 1,2µs betragen.

Alternativ kann die im Folgenden beschriebene Ausgestaltung für das Planarantriebssystem 1 zur Anwendung kommen. Hierbei ist das bzw. jedes Statormodul 10 des Stators 5 dazu ausgebildet, in einem ersten Betriebsmodus das periodische Abtasten der Ströme von Dreiphasensystemen 150, welche einer Strommesseinrichtung 172 zur Stromabtastung zugeordnet sind, mit Hilfe der zugehörigen Strommesseinrichtung 172 jeweils zeitlich abgestimmt auf deren pulsweitenmodulierte Bestromung, und das pulsweitenmodulierte Bestromen von Dreiphasensystemen 150 der Gruppe und das hierauf abgestimmte Abtasten mit einem Zeitversatz zueinander durchzuführen. Das bzw. jedes Statormodul 10 des Stators 5 ist des Weiteren ausgebildet, in einem zweiten Betriebsmodus das pulsweitenmodulierte Bestromen von Dreiphasensystemen 150 einer Gruppe, welche einer Strommesseinrichtung 172 zugeordnet ist, jeweils zeitlich synchron zueinander, und das periodische Abasten von in den Dreiphasensystemen 150 der Gruppe fließenden Strömen mit Hilfe der zugehörigen Strommesseinrichtung 172 mit einem Zeitversatz zueinander durchzuführen. Auch diese Ausgestaltung kann in Bezug auf sämtliche Strommesseinrichtungen 172 und zugehörige Gruppen aus Dreiphasensystemen 150 des Stators 5 des Planarantriebssystems 1 vorgesehen sein.

Der in dem ersten Betriebsmodus und der in dem zweiten Betriebsmodus vorgesehene Zeitversatz kann jeweils der oben genannten Abtastzeitdauer bzw. minimalen Abtastzeitdauer der Strommesseinrichtungen 172 entsprechen. Des Weiteren kann in dem ersten Betriebsmodus als auch in dem zweiten Betriebsmodus pro PWM-Periode jeweils eine Stromabtastung durchgeführt werden.

In dem ersten Betriebsmodus erfolgt die Stromregelung und die zeitlich hierauf abgestimmte Stromabtastung von Dreiphasensystemen 150, welche einer Strommesseinrichtung 172 zugeordnet sind, in der oben beschriebenen, zueinander versetzten Art und Weise, wie sie auch in den beiden oberen Diagrammen von **Figur 14** sowie in **Figur 15** gezeigt ist. Der erste Betriebsmodus kann zum Einsatz kommen, wenn eine induktive Energieübertragung von dem Stator 5 auf den Läufer 200 nicht erforderlich ist oder das Induzieren einer Wechselspannung in der wenigstens einen Läuferspule 240 des Läufers 200 nicht genutzt wird. In dem ersten Betriebsmodus können, wie oben angegeben, Strommittelwerte als Iststromwerte erhalten werden, was eine genaue Stromregelung möglich macht.

Der zweite Betriebsmodus kann im Unterschied hierzu eingesetzt werden, um in gezielter Weise eine möglichst effiziente induktive Energieübertragung von dem Stator 5 auf den Läufer 200 hervorzurufen. In dem zweiten Betriebsmodus erfolgt das pulsweitenmodulierte Bestromen von Dreiphasensystemen 150 einer Gruppe, welche einer Strommesseinrichtung 172 zugeordnet sind, zeitlich synchron zueinander, und damit in einem gemeinsamen Zeitraster.

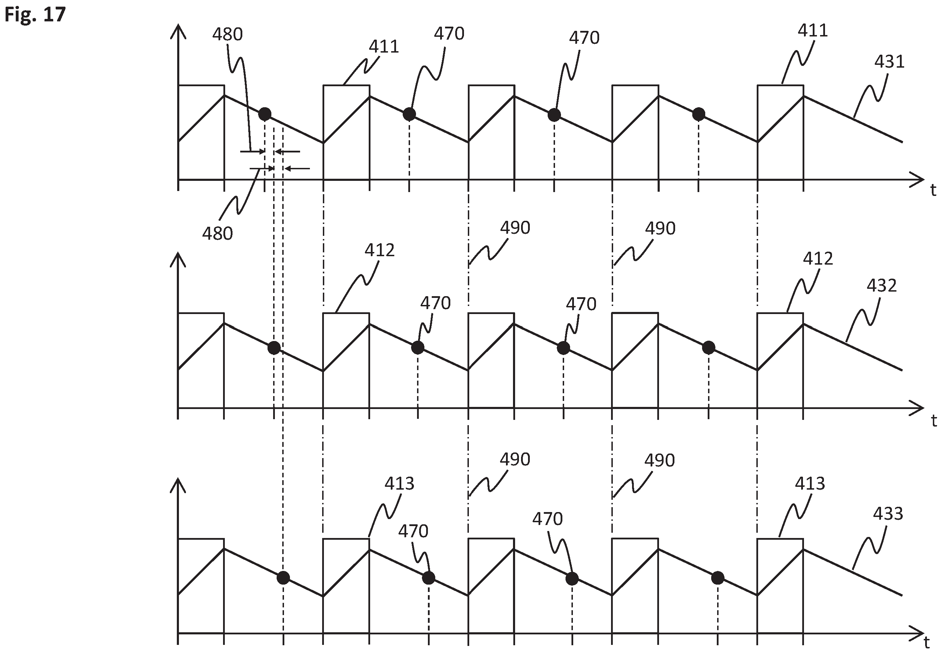

In **Figur 17** ist der zweite Betriebsmodus anhand von möglichen Spannungs- und Stromverläufen in Abhängigkeit der Zeit t für eine Gruppe aus drei Spulensystemen veranschaulicht, welche alle bestromt werden. Ein erstes der drei Spulensysteme wird mit periodischen fünften Spannungspulsen 411 beaufschlagt, so dass ein dreieckförmiger elektrischer dritter Stromverlauf 431 in dem ersten Spulensystem vorliegt. In entsprechender Weise werden ein zweites und ein drittes Spulensystem mit periodischen sechsten Spannungspulsen 412 bzw. periodischen siebten Spannungspulsen 413 angesteuert, wodurch sich ein dreieckförmiger vierter Stromverlauf 432 bzw. ein dreieckförmiger fünfter Stromverlauf 433 in dem zweiten bzw. dritten Spulensystem einstellt. Die zur pulsweitenmodulierten Bestromung an die Spulensysteme angelegten fünften, sechsten und siebten Spanungspulse 411, 412, 413 sind zeitlich synchron zueinander, und befinden sich auf einem gemeinsamen Zeitraster. Das Zeitraster ist in **Figur 17** anhand von Rasterlinien 490 angedeutet. Vorliegend beziehen sich die Rasterlinien 490 und damit das Zeitraster auf die ansteigenden Flanken der fünften, sechsten und siebten Spannungspulse 411, 412, 413. Alternativ können die Rasterlinien 490 und damit das Zeitraster auch auf die abfallenden Flanken oder die Mitten der fünften, sechsten und siebten Spannungspulse 411, 412, 413 bezogen sein.

Wie oben angegeben wurde, können im Betrieb des Planarantriebssystems 1 mehrere Dreiphasensysteme 150 gleichzeitig bestromt werden, um den Läufer 200 anzutreiben. Zu diesem Zweck kann die Hauptsteuervorrichtung 500 entsprechende Sollstromwerte 300 an zugehörige Stromregler 170 übermitteln (vgl. **Figur 11**). Es ist auch möglich, dass mehrere Dreiphasensysteme 150 von verschiedenen Gruppen, welche also unterschiedlichen Strommesseinrichtungen 172 zur Stromabtastung zugeordnet sind, gleichzeitig bestromt werden. Bei einer Ausgestaltung des Stators 5 mit mehreren Statormodulen 10 (vgl. **Figur 2****)** können mehrere gleichzeitig bestromte Dreiphasensysteme 150 ferner Bestandteile von mehreren benachbarten Statormodulen 10 sein. In dieser Hinsicht können der Stator 5 bzw. kann das bzw. jedes Statormodul 10 des Stators 5 dazu ausgebildet sein, dass in dem zweiten Betriebsmodus mehrere oder sämtliche zu bestromenden Dreiphasensysteme 150, welche Bestandteile von unterschiedlichen Gruppen sowie gegebenenfalls von unterschiedlichen Statormodulen 10 sein können, zeitlich synchron zueinander und damit in einem gemeinsamen Zeitraster pulsweitenmoduliert bestromt werden.

Bei dem zeitlich synchronen Bestromen von mehreren Dreiphasensystemen 150 des Stators 5, wie es in dem zweiten Betriebsmodus durchgeführt wird, können die in den betreffenden Dreiphasensystemen 150 fließenden Rippelströme und die hierdurch hervorgerufenen magnetischen Wechselfelder zueinander synchron und in Phase sein, und sich ausschließlich oder weitestgehend konstruktiv überlagern. Auf diese Weise können relativ große Änderungen der Magnetfeldstärke bewirkt werden, wie es oben anhand des letzten Diagramms von **Figur 14** aufgezeigt wurde. In entsprechender Weise kann eine relativ große Wechselspannung in der wenigstens einen Läuferspule 240 des Läufers 200 induziert werden, was eine effektive induktive Energieübertragung von dem Stator 5 auf den Läufer 200 möglich macht. Darüber hinaus kann der anhand von **Figur 16** erläuterte ortsabhängige Effekt vermieden werden, so dass die Energieübertagung unabhängig von der Position des Läufers 200 sein kann.

In dem zweiten Betriebsmodus wird das periodische Abasten von Dreiphasensystemen 150 einer Gruppe mit Hilfe der zugehörigen Strommesseinrichtung 172 mit einem Zeitversatz zueinander durchgeführt. Dies liegt daran, dass mit Hilfe der Strommesseinrichtungen 172, wie oben angegeben, jeweils lediglich ein zugeordnetes Dreiphasensystem 150 simultan abgetastet werden kann. In diesem Sinne kann in dem zweiten Betriebsmodus auch lediglich ein Dreiphasensystem 150 einer Gruppe, welche einer Strommesseinrichtung 172 zugeordnet ist, mit Hilfe der betreffenden Strommesseinrichtung 172 derart abgestimmt auf dessen pulsweitenmodulierte Bestromung abgetastet werden, dass für dieses Dreiphasensystem 150 Strommittelwerte als Iststromwerte gewonnen werden. Bei den anderen Dreiphasensystemen 150 der Gruppe ist dies aufgrund des zueinander versetzt durchgeführten Abtastens hingegen nicht möglich.

In **Figur 17** ist dieser Aspekt ebenfalls dargestellt. Hierbei wird lediglich das zweite Spulensystem derart abgestimmt auf dessen pulsweitenmodulierte Bestromung abgetastet, dass Strommittelwerte als Iststromwerte erfasst werden können. Die Strommesszeitpunkte 470 befinden sich zu diesem Zweck jeweils mittig zwischen den sechsten Spannungspulsen 412. Das Abtasten des ersten und dritten Spulensystems erfolgt jeweils versetzt hierzu. Gegenüber dem Abtasten des zweiten Spulensystems sind die Strommesszeitpunkte 470 bei dem ersten Spulensystem zeitlich nach vorn, und bei dem dritten Spulensystem zeitlich nach hinten verschoben. Zwischen dem periodischen Abtasten des ersten Spulensystems und dem periodischen Abtasten des zweiten Spulensystems, sowie auch zwischen dem periodischen Abtasten des zweiten Spulensystems und dem periodischen Abtasten des dritten Spulensystems liegt daher jeweils ein Zeitversatz 480 vor. Auf diese Weise befinden sich die Strommesszeitpunkte 470 weder bei dem ersten Spulensystem noch bei dem dritten Spulensystem mittig zwischen den sechsten Spannungspulsen 412 bzw. siebten Spannungspulsen 413, und können insofern weder für das erste noch für das dritte Spulensystem Strommittelwerte als Iststromwerte gewonnen werden. Der Zeitversatz 480 kann auch hier einer Abtastzeitdauer bzw. minimalen Abtastzeitdauer der Strommesseinrichtungen 172 entsprechen.

Im Betrieb des Planarantriebssystems 1 in dem zweiten Betriebsmodus kann es infolgedessen zu einer Beeinträchtigung der Genauigkeit der Stromregelung kommen. Beispielsweise kann es vorkommen, dass sich in einem oder mehreren bestromten Dreiphasensystemen 150 von den Sollstromwerten abweichende Ströme einstellen. Der zweite Betriebsmodus kann allerdings lediglich in gezielter Weise zum Bewirken einer effektiven induktiven Energieübertragung von dem Stator 5 auf den Läufer 200, und damit zeitlich begrenzt zum Einsatz kommen, so dass eine solche Beeinträchtigung vernachlässigt werden kann.

Das Bestromen von Dreiphasensystemen 150 des Stators 5 des Planarantriebssystems 1 entsprechend des ersten oder zweiten Betriebsmodus kann durch die Hauptsteuervorrichtung 500 des Planarantriebssystems 1 festgelegt bzw. initiiert werden. Zu diesem Zweck kann die Hauptsteuervorrichtung 500 entsprechende Steuersignale an einen oder mehrere Stromregler 170 bzw. an eine oder mehrere Modulsteuervorrichtungen 190 eines oder mehrerer Statormodule 10 übermitteln, um den jeweiligen Betriebsmodus vorzugeben (nicht dargestellt).

Für das Erzielen einer effizienten induktiven Energieübertragung von dem Stator 5 auf den Läufer 200 kann ferner die im Folgenden beschriebene Ausgestaltung für das Planarantriebssystem 1 zum Einsatz kommen. Diese Ausgestaltung basiert darauf, in gezielter Weise derart in die oben anhand von **Figur 11** erläuterte Stromregelung einzugreifen, dass der in bestromten Dreiphasensystemen 150 fließende Rippelstrom verstärkt wird.

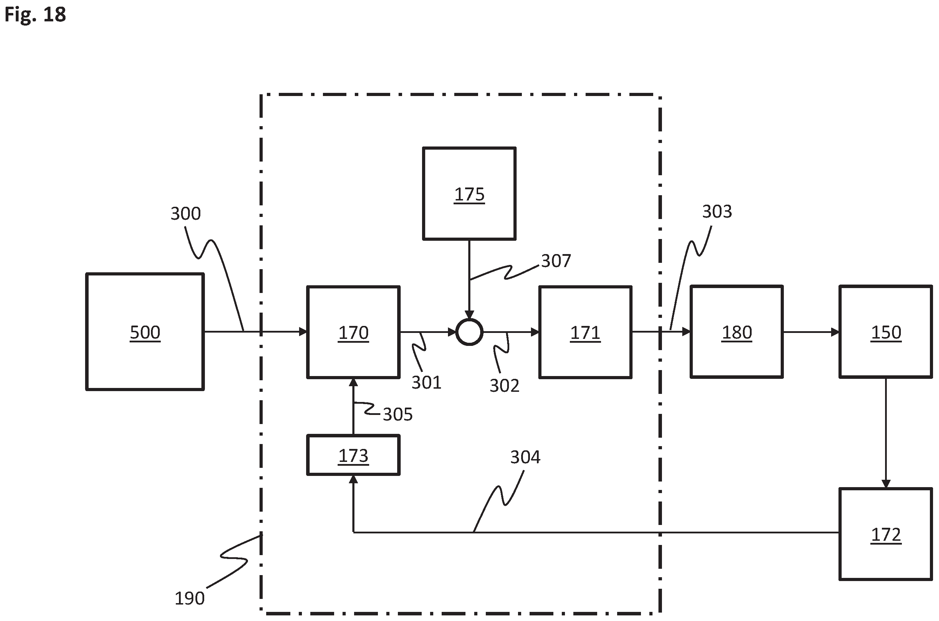

Zur Veranschaulichung zeigt **Figur 18** ein Blockschaltbild eines weiteren Regelkreises zur Stromregelung eines Dreiphasensystems 150 auf Basis der Pulsweitenmodulation, wie er zu diesem Zweck bei dem Planarantriebssystem 1 vorgesehen sein kann. Der in **Figur 18** dargestellte Regelkreis stimmt im Wesentlichen mit dem Regelkreis von **Figur 11** überein, und umfasst, neben der Hauptsteuervorrichtung 500, oben erläuterte Komponenten wie eine Modulsteuervorrichtung 190, eine Endstufeneinrichtung 180, ein Dreiphasensystem 150 und eine Strommesseinrichtung 172. Die Modulsteuervorrichtung 190 umfasst einen Stromregler 170, eine PWM-Signalerzeugungseinrichtung 171 und eine Verarbeitungseinrichtung 173. Mit Bezug auf Details zu diesen Komponenten und deren Zusammenwirken wird auf die obige Beschreibung zu **Figur 11** Bezug genommen.

Ein weiterer Bestandteil des in **Figur 18** gezeigten Regelkreises ist eine optional zuschaltbare Beeinflussungseinrichtung 175, welche, wie in **Figur 18** gezeigt ist, Bestandteil der Modulsteuervorrichtung 190 sein kann. Sofern die Beeinflussungseinrichtung 175 nicht aktiviert bzw. nicht zugeschaltet ist, erfolgt die Stromregelung bei dem Dreiphasensystem 150 in der oben beschriebenen Art und Weise, wie sie anhand von **Figur 11** erläutert wurde.

Bei einem Aktivieren bzw. Zuschalten der Beeinflussungseinrichtung 175 werden, wie in **Figur 18** gezeigt ist, Beeinflussungssignale 307 mit Hilfe der Beeinflussungseinrichtung 175 erzeugt, welche den von dem Stromregler 170 ausgegebenen Steuersignalen 301 hinzugefügt werden. Bei den Beeinflussungssignalen 307 kann es sich um eine mittelwertfreie Wechselspannung handeln. Möglich ist es auch, dass die Beeinflussungssignale 307 eine mittelwertfreie Wechselspannung oder den Effekt einer solchen Wechselspannung wiedergeben. Das Aufaddieren der Beeinflussungssignale 307 auf die Steuersignale 301 führt zu einer Veränderung bzw. Modulation der Steuersignale 301, so dass beeinflusste Steuersignale 302 an die PWM-Signalerzeugungseinrichtung 171 übermittelt werden. Hierauf basierend werden von der PWM-Signalerzeugungseinrichtung 171 pulsweitenmodulierte Steuersignale 303 erzeugt, welche wie oben beschrieben an die Endstufen bzw. Schalter der Endstufeneinrichtung 180 angelegt werden. Da die PWM-Signalerzeugungseinrichtung 171 anstelle der Steuersignale 301 beeinflusste Steuersignale 302 empfängt, unterliegen die von der PWM-Signalerzeugungseinrichtung 171 erzeugten pulsweitenmodulierten Steuersignale 303 ebenfalls der Beeinflussung durch die Beeinflussungseinrichtung 175, und zwar derart, dass in dem mit Hilfe der Endstufeneinrichtung 180 bestromten Dreiphasensystem 150 ein verstärkter Rippelstrom fließt.

Der mit Hilfe der Beeinflussungseinrichtung 175 erzeugte verstärkte Rippelstrom kann eine größere Schwingungsbreite besitzen als der im unbeeinflussten Betrieb ohne die Beeinflussungseinrichtung 175 vorliegende Rippelstrom. In entsprechender Weise können das durch den verstärkten Rippelstrom hervorgerufene magnetische Wechselfeld, sowie die in der wenigstens einen Läuferspule 240 des Läufers 200 induzierbare Wechselspannung, eine größere Schwingungsbreite aufweisen. Die oben beschriebene Verwendung von Beeinflussungssignalen 307, welche in Form einer mittelwertfreien Wechselspannung vorliegen oder den Effekt einer solchen Wechselspannung wiedergeben, ermöglicht des Weiteren, dass der Mittelwert des in dem bestromten Dreiphasensystem 150 fließenden und mit Hilfe der Beeinflussungseinrichtung 175 beeinflussten Stroms gleich bleibt. Diese Gegebenheit kann sich auf mehrere PWM-Perioden beziehen. Darüber hinaus kann mit Hilfe der Beeinflussungseinrichtung 175 die Größe bzw. Schwingungsbreite des Rippelstroms unabhängig von dem Mittelwert des in dem Dreiphasensystem 150 fließenden Stroms beeinflusst werden.

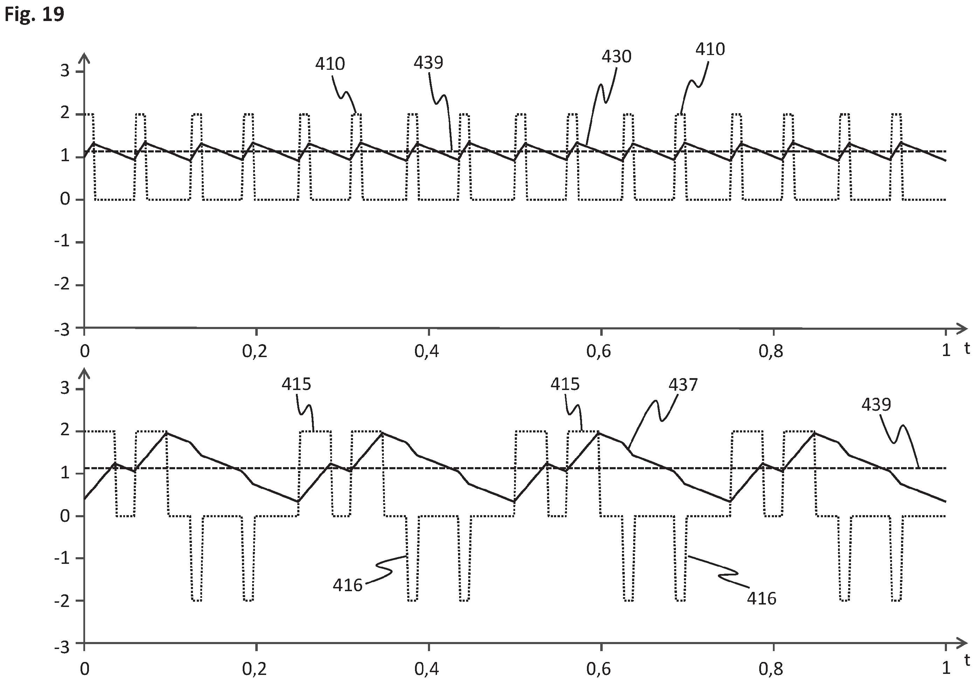

Zur weiteren Veranschaulichung zeigt **Figur 19** mögliche elektrische Spannungs- und Stromverläufe in Abhängigkeit der Zeit t, wie sie bei einer pulsweitenmodulierten Bestromung eines Spulensystems in einem unbeeinflussten und in einem mit der Beeinflussungseinrichtung 175 beeinflussten Zustand auftreten können. Das obere Diagramm von **Figur 19** veranschaulicht die unbeeinflusste elektrische Ansteuerung des Spulensystems. Das Spulensystem wird mit periodischen ersten Spannungspulsen 410 beaufschlagt, so dass ein dreieckförmiger elektrischer erster Stromverlauf 430 in dem Spulensystem vorliegt. Der Strom pendelt um einen Strommittelwert 439 hin und her. Mit Bezug auf den Strom ist auf der Ordinate eine fiktive Größenskala angedeutet. Auch auf der Abszisse ist in Bezug auf die Zeit t eine fiktive Größenskala angedeutet.

Das untere Diagramm von **Figur 19** zeigt im Vergleich dazu mögliche Gegebenheiten, wie sie bei der mit der Beeinflussungseinrichtung 175 beeinflussten elektrischen Ansteuerung des Spulensystems vorliegen können. Bei dem vorliegend gezeigten Beispiel wird das Spulensystem in periodischer Weise nacheinander im Wechsel mit zwei achten Spannungspulsen 415 und zwei neunten Spannungspulsen 416 beaufschlagt. Um den angestrebten Effekt des gleichleibenden Strommittelwerts zu erzielen, kann es sich bei den achten und neunten Spannungspulsen 415, 416 zum Beispiel um aus den ersten Spannungspulsen 410 hervorgehende Spannungspulse handeln, bei welchen die doppelte Pulsbreite der ersten Spannungspulse 410 hinzugefügt wird (achte Spannungspulse 415) oder subtrahiert wird (neunte Spannungspulse 416). Die Pulsdauer der achten Spannungspulse 415 kann auf diese Weise um einen Faktor drei größer sein als die Pulsdauer der unbeeinflussten ersten Spannungspulse 410. Mit Bezug auf die neunten Spannungspulse 416 würde die Subtraktion in einer negativen Pulsbreite mit einem Absolutwert entsprechend der Pulsbreite der ersten Spannungspulse 410 resultieren. Äquivalent hierzu werden die neunten Spannungspulse 416 daher derart erzeugt, dass die neunten Spannungspulse 416 dieselbe Pulsdauer wie die unbeeinflussten ersten Spannungspulse 410 und eine inverse Polarität gegenüber den ersten Spannungspulsen 410, und damit auch gegenüber den achten Spannungspulsen 415, aufweisen. Aufgrund der periodischen achten und neunten Spannungspulse 415, 416 stellt sich ein dreieckförmiger elektrischer dritter Stromverlauf 437 in dem Spulensystem ein, welcher im Vergleich zu dem unbeeinflussten ersten Stromverlauf 430 eine größere Schwingungsbreite aufweist. Der Strom pendelt auch hier, allerdings bezogen auf mehrere PWM-Perioden bzw. Periodendauern, um denselben Mittelwert 439 hin und her.

Mit Bezug auf den in **Figur 18** gezeigten Regelkreis besteht die Möglichkeit, dass das bzw. jedes Statormodul 10 des Stators 5 eine einzelne Beeinflussungseinrichtung 175 aufweist. Die Beeinflussungseinrichtung 175 eines Statormoduls 10 kann hierbei dazu ausgebildet sein, die von einem, mehreren oder sämtlichen Stromreglern 170 des zugehörigen Statormoduls 10 erzeugten Steuersignale 301 in der oben beschriebenen Art und Weise zu beeinflussen. Möglich ist es auch, dass das bzw. jedes Statormodul 10 für jedes Dreiphasensystem 150 des Statormoduls 10 und damit jeden Stromregler 170 eine eigene Beeinflussungseinrichtung 175 aufweist. In dieser Ausgestaltung kann das bzw. jedes Statormodul 10 vierundzwanzig Beeinflussungseinrichtungen 175 aufweisen, mit deren Hilfe die Steuersignale 301 von jeweils einem Stromregler 170 beeinflusst werden können. Die Beeinflussungseinrichtung 175 oder die mehreren Beeinflussungseinrichtungen 175 eines Statormoduls 10 können, wie in **Figur 18** dargestellt ist, in der zugehörigen Modulsteuervorrichtung 190 integriert sein.

Für das Beeinflussen der Stromregelung kann des Weiteren eine nicht dargestellte und von **Figur 18** abweichende weitere Ausgestaltung in Betracht kommen, in welcher die von einer Beeinflussungseinrichtung 175 erzeugten Beeinflussungssignale 307 den von einer PWM-Signalerzeugungseinrichtung 171 erzeugten pulsweitenmodulierten Steuersignalen 303 hinzugefügt werden, so dass veränderte bzw. beeinflusste pulsweitenmodulierte Steuersignale an Endstufen bzw. Schalter einer Endstufeneinrichtung 180 angelegt werden. Hierdurch können in entsprechender Weise ein Beeinflussen der elektrischen Ansteuerung eines Dreiphasensystems 150, und dadurch ein Hervorrufen eines verstärkten Rippelstroms bewirkt werden. Auch bei einer solchen Ausgestaltung kann das bzw. jedes Statormodul 10 des Stators 5 eine einzelne Beeinflussungseinrichtung 175 oder mehrere bzw. vierundzwanzig Beeinflussungseinrichtungen 175 aufweisen, mit deren Hilfe die pulsweitenmodulierten Steuersignale 303 von einer, mehreren oder sämtlichen PWM-Signalerzeugungseinrichtungen 171 des zugehörigen Statormoduls 10 beeinflusst werden können.

Wie oben beschrieben wurde, können im Betrieb des Planarantriebssystems 1 mehrere Dreiphasensysteme 150 gleichzeitig bestromt werden, um den Läufer 200 anzutreiben. Die mehreren gleichzeitig bestromten Dreiphasensysteme 150 können Bestandteile von mehreren Gruppen sein, also mehreren Strommesseinrichtungen 172 zugeordnet sein, sowie auch Bestandteile von mehreren Statormodulen 10 sein. In diesem Zusammenhang ist es möglich, bei mehreren oder sämtlichen zu bestromenden Dreiphasensystemen 150 mit Hilfe von einer oder mehreren Beeinflussungseinrichtungen 175 derart in die Stromregelung einzugreifen, dass eine Verstärkung des Rippelstroms bewirkt wird. Auf diese Weise können eine Verstärkung der mit Hilfe der Dreiphasensysteme 150 erzeugten magnetischen Wechselfelder und damit des resultierenden magnetischen Wechselfelds, und in entsprechender Weise eine Verstärkung der in der wenigstens einen Läuferspule 240 des Läufers 200 induzierbaren Wechselspannung hervorgerufen werden. Dies ermöglicht eine effektive induktive Energieübertragung von dem Stator 5 auf den Läufer 200.

Das Aktivieren von einer oder mehreren Beeinflussungseinrichtungen 175 zum Beeinflussen der Stromregelung von einem oder mehreren Dreiphasensystemen 150, sowie auch das Deaktivieren derselben, kann durch die Hauptsteuervorrichtung 500 des Planarantriebssystems 1 veranlasst werden. Zu diesem Zweck kann die Hauptsteuervorrichtung 500 entsprechende Steuersignale an eine oder mehrere Beeinflussungseinrichtungen 175 bzw. an eine oder mehrere Modulsteuervorrichtungen 190 eines oder mehrerer Statormodule 10 übermitteln (nicht dargestellt).

Die anhand der **Figuren 18** **und** **19** erläuterte Ausgestaltung, in welcher eine Beeinflussung der Stromregelung erfolgen kann, kann mit oben beschriebenen Ausgestaltungen des Planarantriebssystems 1 kombiniert werden. Hierunter fallen die Ausgestaltung, in welcher eine versetzte Bestromung von Dreiphasensystemen 150 erfolgt (vgl. **Figur 15**), sowie die Ausgestaltung mit einem ersten und zweiten Betriebsmodus, wobei in dem zweiten Betriebsmodus Dreiphasensysteme 150 synchron zueinander bestromt werden (vgl. **Figur 16**). Mit Bezug auf letztere Ausgestaltung kann in diesem Zusammenhang vorgesehen sein, in dem zweiten Betriebsmodus sowohl Dreiphasensysteme 150 synchron zueinander zu bestromen als auch die Stromregelung der betreffenden Dreiphasensysteme 150 durch das Aktivieren von einer oder mehreren Beeinflussungseinrichtungen 175 derart zu beeinflussen, dass ein verstärkter Rippelstrom in den Dreiphasensystemen 150 fließt.

Im Folgenden wird auf weitere mögliche Details eingegangen, welche in Bezug auf den Läufer 200 und die wenigstens eine zur induktiven Energieübertragung genutzte Läuferspule 240 des Läufers 200 in Betracht kommen können.

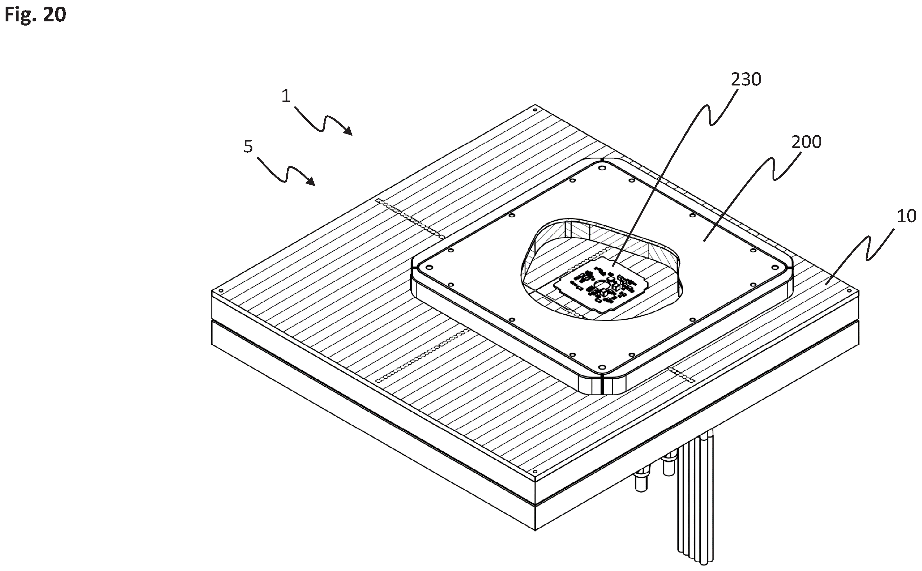

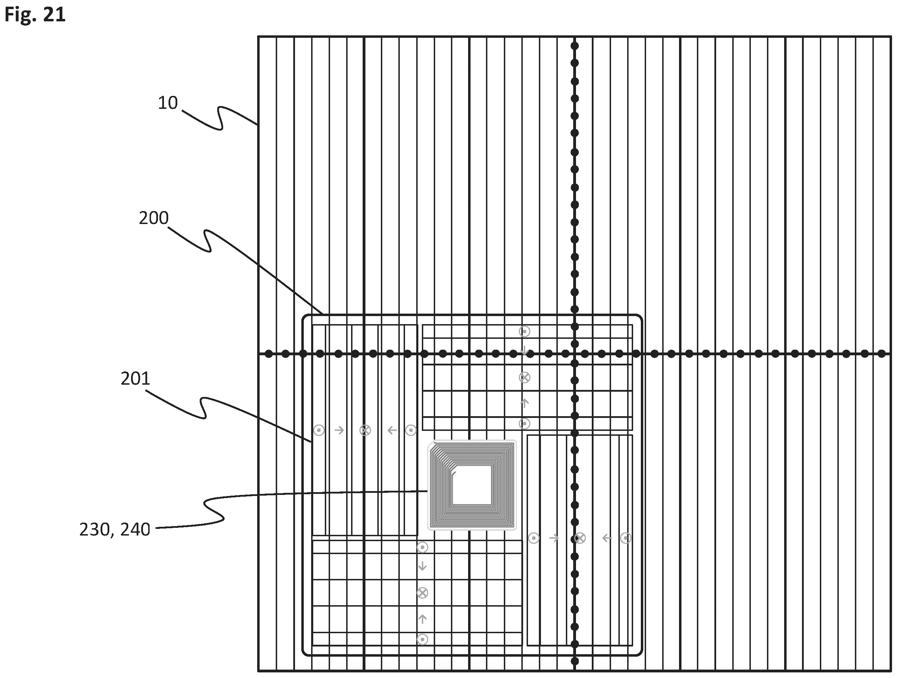

Wie oben anhand von **Figur 3** erläutert wurde, kann der Läufer 200 eine erste Leiterplatte 230 mit wenigstens einer Läuferspule 240 aufweisen, welche in dem von den Läufermagneten 216 der Magneteinrichtung 201 des Läufers 200 umgebenen Bereich angeordnet ist. Auf diese Weise kann die erste Leiterplatte 230 relativ einfach in dem Läufer 200 integriert sein. Zur weiteren Veranschaulichung dieser Ausgestaltung zeigt **Figur 20** eine perspektivische Darstellung des bzw. eines Statormoduls 10 des Stators 5 und des Läufers 200, wobei der Läufer 200 in einer teilaufgeschnittenen Ansicht gezeigt ist. Anhand dieser Darstellung werden eine mögliche Größe und Lage der ersten Leiterplatte 230 des Läufers 200 deutlich. Die erste Leiterplatte 230 besitzt vorliegend eine rechteckige bzw. quadratische Kontur. Ebenfalls zur Veranschaulichung zeigt **Figur 21** eine Aufsichtsdarstellung des Statormoduls 10 und des Läufers 200, wobei von dem Läufer 200 Konturen der Magneteinrichtung 201 und der ersten Leiterplatte 230, sowie eine Läuferspule 240 gezeigt sind.

Die in den **Figuren 3****,** **20** **und** **21** gezeigte erste Leiterplatte 230 kann eine Dicke von zum Beispiel 1mm aufweisen. Des Weiteren kann die erste Leiterplatte 230 mehrlagig ausgeführt sein, und eine Mehrzahl an übereinander angeordneten und elektrisch miteinander verbundenen Läuferspulen 240 aufweisen. Hierdurch kann eine effektive induktive Energieübertragung von dem Stator 5 auf den Läufer 200 ermöglicht werden. Die Läuferspulen 240 können durch miteinander verbundene spiralförmige Leiterbahnen der mehrlagigen ersten Leiterplatte 230 verwirklicht sein.

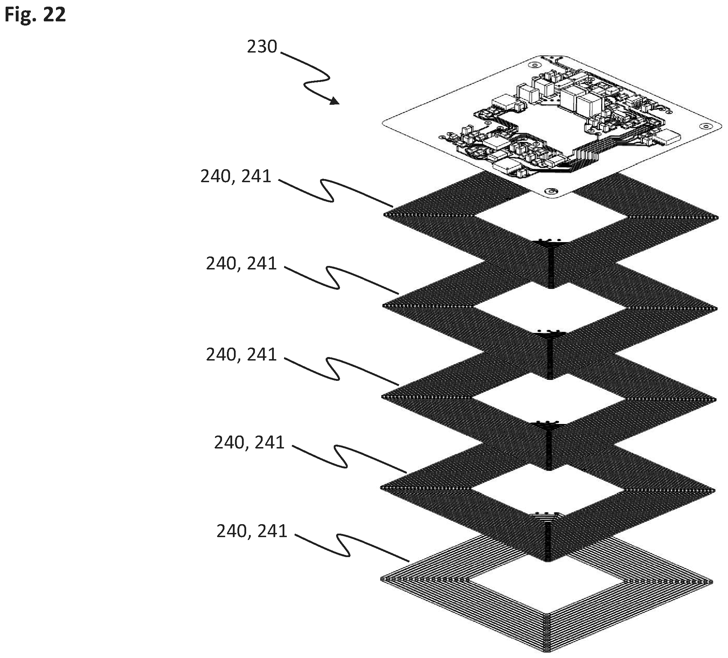

Zur Veranschaulichung dieser Ausgestaltung zeigt **Figur 22** eine Explosionsdarstellung von Bestandteilen der ersten Leiterplatte 230. Die erste Leiterplatte 230 umfasst mehrere, in unterschiedlichen Lagen der ersten Leiterplatte 230 angeordnete spiralförmige metallische erste Leiterbahnen 241, welche jeweils eine Läuferspule 240 bilden. Die ersten Leiterbahnen 241 können über nicht dargestellte elektrische Vertikalverbindungsstrukturen der ersten Leiterplatte 230 elektrisch in Serie verbunden sein.

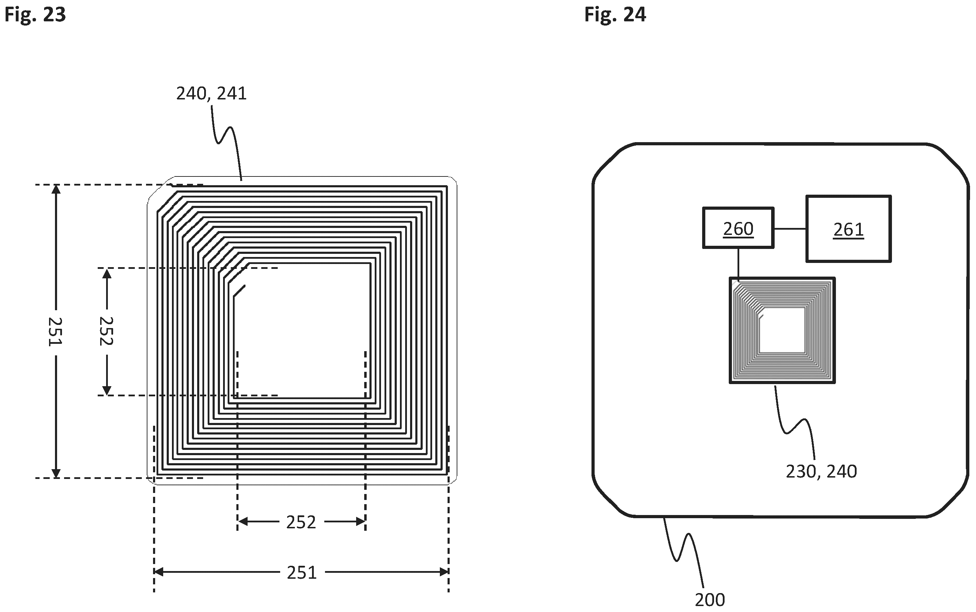

**Figur 23** zeigt eine Aufsichtsdarstellung einer als Läuferspule 240 dienenden spiralförmigen ersten Leiterbahn 241 der ersten Leiterplatte 230. Der gezeigte Aufbau kann in Bezug auf sämtliche erste Leiterbahnen 241 der ersten Leiterplatte 230 zutreffen. Die erste Leiterbahn 241 besitzt eine im Wesentlichen rechteckige bzw. quadratische Außenkontur, und umschließt einen im Wesentlichen rechteckigen bzw. quadratischen Innenbereich. Auch besitzt die erste Leiterbahn 241 eine relativ hohe Windungszahl. In **Figur 23** sind des Weiteren eine sich auf die Außenkontur beziehende Außenbreite 251 und eine sich auf die Innenkontur beziehende Innenbreite 252 der ersten Leiterbahn 241 angedeutet. Hierbei können die Außenbreite 251 zum Beispiel 0,85L, und die Innenbreite 252 zum Beispiel 0,4L betragen. Wie oben erläutert wurde, kann die Variable L eine Breite eines Dreiphasensystems 150 bzw. eines Statorsegments 120, 121 sein, und der in den Figuren **6** **und** **7** dargestellten Segmentbreite 127 entsprechen.

Im Hinblick auf das Nutzen einer in der wenigstens einen Läuferspule 240 induzierten Wechselspannung kann der Läufer 200, wie in **Figur 24** dargestellt ist, ferner einen Gleichrichter 260 aufweisen. Mit Hilfe des Gleichrichters 260, welcher in geeigneter Weise mit der bzw. den Läuferspulen 240 elektrisch verbunden ist, kann die induzierte Wechselspannung in eine Gleichspannung umgewandelt werden. Der Gleichrichter 260 kann zum Beispiel ein Brückengleichrichter oder ein synchroner Gleichrichter sein. Darüber hinaus kann der Gleichrichter 260 zum Beispiel als Spannungsverstärker bzw. Spannungsverdoppler verwirklicht sein.

Mit der durch den Gleichrichter 260 bereitgestellten Gleichspannung kann wenigstens eine weitere Einrichtung 261 mit elektrischer Energie versorgt werden. Wie in **Figur 24** angedeutet ist, kann die weitere Einrichtung 261 Bestandteil des Läufers 200 und/oder auf dem Läufer 200 angeordnet sein. Auch ist die weitere Einrichtung 261 in geeigneter Weise mit dem Gleichrichter 260 elektrisch verbunden. Die weitere Einrichtung 261 kann zum Beispiel eine Elektronik sein. Es besteht ferner die Möglichkeit, dass mit der durch den Gleichrichter 260 bereitgestellten Gleichspannung mehrere weitere Einrichtungen, welche Bestandteile des Läufers 200 und/oder auf dem Läufer 200 angeordnet sein können, elektrisch versorgt werden (nicht dargestellt).

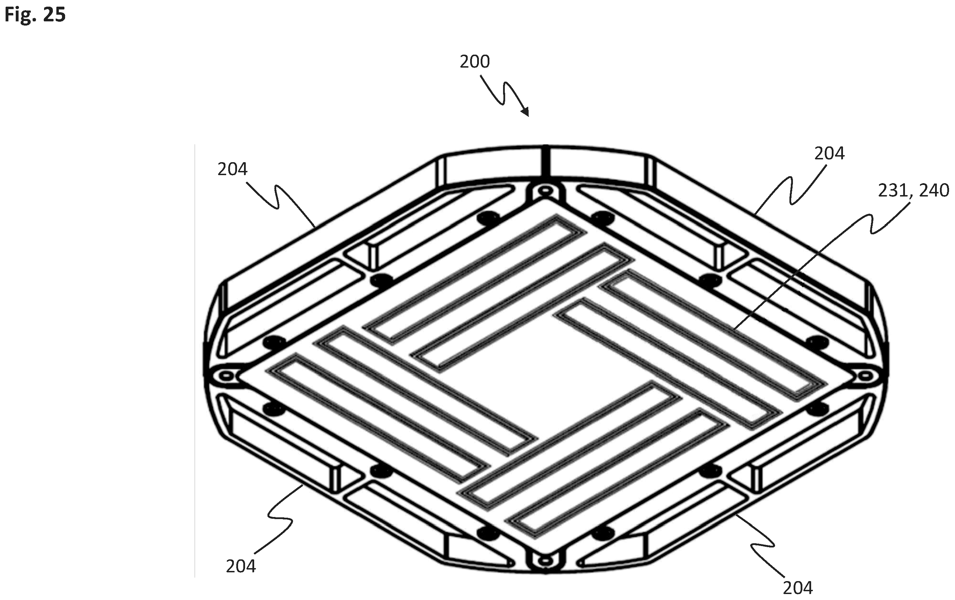

Eine Ausgestaltung des Läufers 200 mit einem Gleichrichter 260 zur elektrischen Versorgung von wenigstens einer weiteren Einrichtung 261 kann in entsprechender Weise in Bezug auf die im Folgenden anhand der **Figuren 25 bis 31** erläuterten Ausgestaltungen in Betracht kommen.

**Figur 25** zeigt in einer perspektivischen Ansicht von unten eine weitere Ausgestaltung, welche für den Läufer 200 vorgesehen sein kann. Hierbei weist der Läufer 200 eine an der Unterseite angeordnete und sich unterhalb der in **Figur 25** nicht dargestellten Magneteinrichtung 201 befindende zweite Leiterplatte 231 mit mehreren Läuferspulen 240 auf. Die zweite Leiterplatte 231 erstreckt sich im Wesentlichen über die gesamte Fläche des Läufers 200. Auf diese Weise kann eine relativ große Spulenfläche zur Verfügung gestellt werden, was eine effektive Energieübertragung von dem Stator 5 auf den Läufer 200 begünstigt. Die zweite Leiterplatte 231 kann ebenfalls mehrlagig ausgeführt sein.

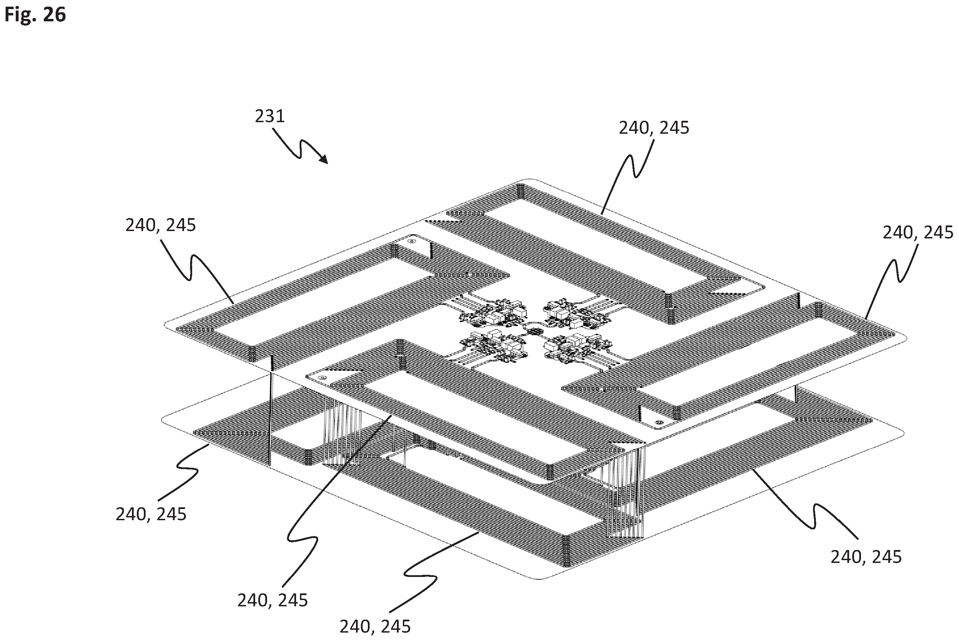

In der in **Figur 25** gezeigten Ausgestaltung kann die Flughöhe des Läufers 200 um die Dicke der zweiten Leiterplatte 231 verringert sein. Daher kann es in Betracht kommen, die zweite Leiterplatte 231 mit einer im Vergleich zu der in den **Figuren 3****,** **20** **und** **21** gezeigten ersten Leiterplatte 230 geringeren Dicke und einer kleineren Anzahl an Lagen zu verwirklichen. Möglich ist zum Beispiel eine Ausgestaltung der zweiten Leiterplatte 231 mit einer Dicke von 0,3mm und, wie in **Figur 26** in einer Explosionsdarstellung gezeigt ist, mit zwei Lagen. Gemäß **Figur 26** weist die zweite Leiterplatte 231 in jeder der zwei Lagen vier nebeneinander angeordnete spiralförmige metallische zweite Leiterbahnen 245 auf, welche jeweils eine Läuferspule 240 bilden. Die zweiten Leiterbahnen 245, welche eine geringere Windungszahl als die ersten Leiterbahnen 241 (vgl. **Figur 23**) besitzen können, können über geeignete elektrische Verbindungsstrukturen miteinander verbunden sein.

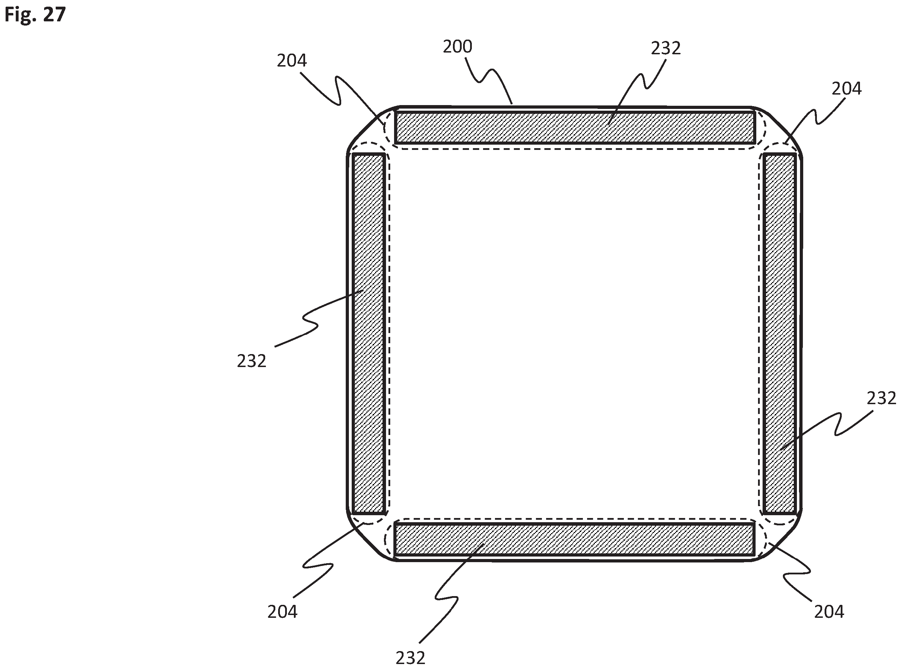

**Figur 27** zeigt eine weitere Ausgestaltung, welche in Bezug auf den Läufer 200 zur Anwendung kommen kann. Hierbei weist der Läufer 200 mehrere bzw. vier dritte Leiterplatten 232 auf, welche im Bereich von lateralen Außenseiten des Läufers 200 angeordnet sind. Die dritten Leiterplatten 232 können mehrlagige Leiterplatten sein, und eine Dicke von zum Beispiel 1mm aufweisen. Des Weiteren können die dritten Leiterplatten 232 eine Mehrzahl an übereinander angeordneten und als Läuferspulen 240 dienenden spiralförmigen Leiterbahnen aufweisen (nicht dargestellt). Die Anzahl der Lagen kann zum Beispiel der in **Figur 22** gezeigten ersten Leiterplatte 230 entsprechen. Des Weiteren können die dritten Leiterplatten 232 in Abstandshaltern 204 des Läufers 200 integriert sein, welche im Bereich der lateralen Außenseiten des Läufers 200 vorhanden sein können.

Eine weitere nicht dargestellte Ausgestaltung für den Läufer 200 ist zum Beispiel eine Abwandlung der in **Figur 27** gezeigten Bauform dahingehend, dass der Läufer 200 anstelle von vier dritten Leiterplatten 232 lediglich zwei dritte Leiterplatten 232 aufweist, welche im Bereich von lateralen Außenseiten des Läufers 200 angeordnet bzw. in Abstandshaltern 204 des Läufers 200 integriert sind. Hierbei können sich die zwei dritten Leiterplatten 232 in unterschiedliche laterale Richtungen erstrecken. Mit Bezug auf **Figur 27** können zum Beispiel lediglich die zwei in der Darstellung von **Figur 27** oben und links angeordneten Leiterplatten 232 vorgesehen sein.

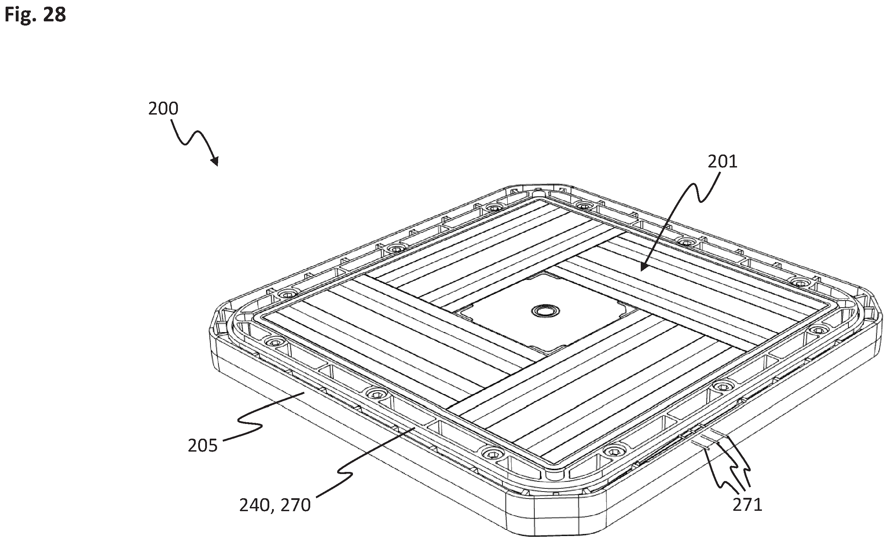

Die **Figuren 28 bis 31** zeigen anhand von perspektivischen Darstellungen und Ansichten von unten eine weitere Ausgestaltung, welche für den Läufer 200 in Betracht kommen kann. Hierbei weist der Läufer 200 eine Läuferspule 240 auf, welche in Form eines gewickelten bzw. mehrfach gewickelten metallischen Drahts 270 ausgebildet ist. In dieser Ausgestaltung weist die Läuferspule 240 eine Mehrzahl an umlaufenden Drahtwicklungen auf (nicht dargestellt). Auch ist die Läuferspule 240 im Bereich von lateralen Außenseiten des Läufers 200 angeordnet, und umschließt bzw. umläuft die Läuferspule 240 die Magneteinrichtung 201 des Läufers 200. Auf diese Weise kann die induktive Energieübertragung von dem Stator 5 zu dem Läufer 200 mit einer hohen Effektivität erfolgen, und kann eine relativ große elektrische Leistung übertragen werden.

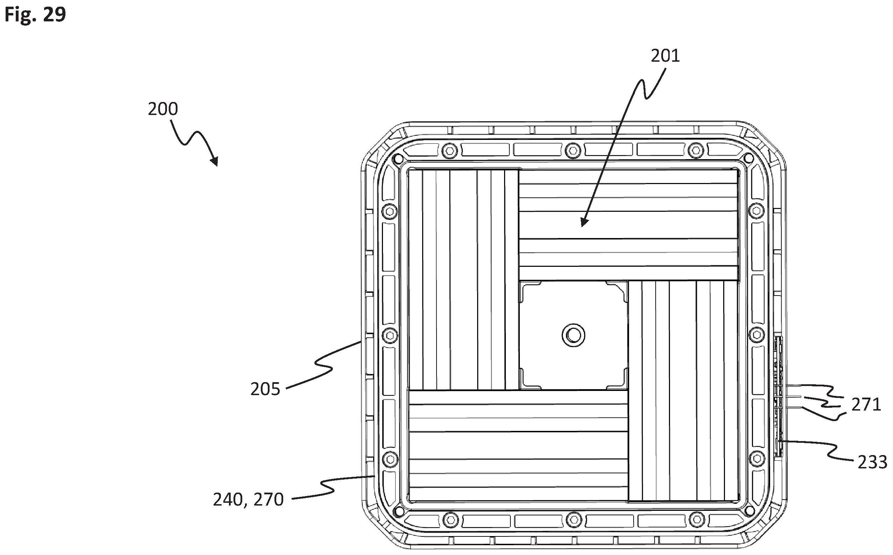

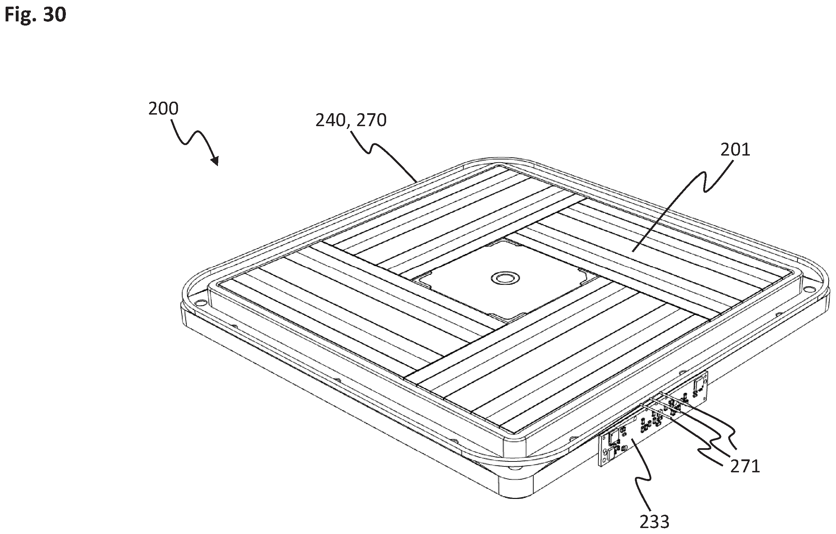

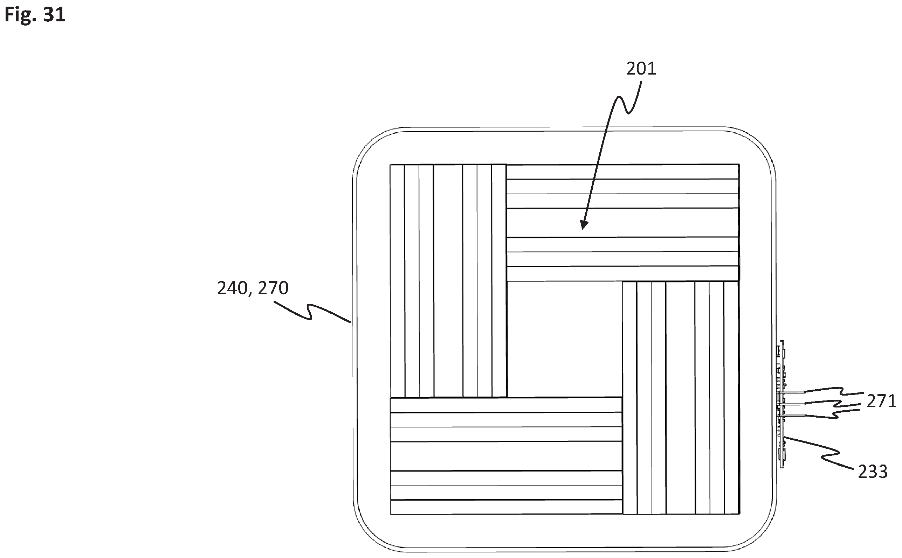

Gemäß der in den **Figuren 28 bis 31** gezeigten Ausgestaltung weist der Läufer 200 ferner eine umlaufende Abstandshalterstruktur 205 und eine vierte Leiterplatte 233 auf. Die Abstandshalterstruktur 205 kann ein elastisch verformbares Material oder Plastik aufweisen oder aus einem solchen Material ausgebildet sein. Die Läuferspule 240 ist in der Abstandshalterstruktur 205 integriert, wie anhand der **Figuren 28** **und** **29** deutlich wird. Zur Veranschaulichung dieser Ausgestaltung ist die Abstandshalterstruktur 205 in **Figur 30** weggelassen. Zur weiteren Veranschaulichung zeigt **Figur 31** lediglich die Läuferspule 240, die Magneteinrichtung 201 und die vierte Leiterplatte 233 des Läufers 200.

Die vierte Leiterplatte 233 des Läufers 200 ist ebenfalls in der Abstandshalterstruktur 205 integriert (vgl. **Figur 29**). Die vierte Leiterplatte 233 kann oben anhand von **Figur 24** beschriebene Komponenten wie zum Beispiel einen mit der Läuferspule 240 elektrisch verbundenen Gleichrichter 260 aufweisen, mit dessen Hilfe eine in der Läuferspule 240 induzierte Wechselspannung in eine Gleichspannung umgewandelt werden kann. Auf diese Weise kann, wie ebenfalls oben anhand von **Figur 24** erläutert wurde, wenigstens eine weitere Einrichtung 261 über die durch den Gleichrichter 260 bereitgestellte Gleichspannung elektrisch versorgt werden. Auch die weitere Einrichtung 261 kann auf der vierten Leiterplatte 233 integriert sein.

Die **Figuren 28 bis 31** veranschaulichen darüber hinaus Drahtanschlüsse 271 der in Form eines gewickelten Drahts 270 vorliegenden Läuferspule 240, über welche die Läuferspule 240 kontaktiert werden und mit der vierten Leiterplatte 233 elektrisch verbunden sein kann. Gemäß der in den **Figuren 28 bis 31** abgebildeten Ausgestaltung weist die Läuferspule 240 drei Drahtanschlüsse 271 auf, wobei einer der Drahtanschlüsse 271 als Zwischenabgriff dienen kann. Hierbei kann die Läuferspule 240 zum Beispiel siebzig Drahtwicklungen aufweisen, wobei über den Zwischenabgriff eine Aufteilung von sechzig Drahtwicklungen und zehn Drahtwicklungen verwirklicht sein kann. Dadurch ist es im Rahmen einer hier nicht weiter beschriebenen Lastmodulation möglich, die zehn Drahtwicklungen der Läuferspule 240 kurzzuschließen. Zur Energieübertragung können sämtliche siebzig Drahtwicklungen oder sechzig Drahtwicklungen der Läuferspule 240 genutzt werden. Sofern die Lastmodulation nicht zum Einsatz kommt, kann die Läuferspule 240 auch lediglich zwei Drahtanschlüsse 271 und keinen Zwischenabgriff aufweisen (nicht dargestellt). Ergänzend wird darauf hingewiesen, dass die Drahtanschlüsse 271 abweichend von der Darstellung in den **Figuren 28** **und** **29** nicht seitlich aus dem Läufer 200 bzw. aus der Abstandshalterstruktur 205 herausragen können.

Durch das beschriebene Verfahren und Planarantriebssystem 1 kann eine elektrische Leistung von zum Beispiel maximal 10W, beispielsweise maximal 1W oder beispielsweise maximal 100mW von dem Stator 5 auf den Läufer 200 übertragen werden. Möglich sind jedoch auch andere bzw. größere Leistungswerte.

Die übertragene elektrische Energie kann für unterschiedliche Anwendungen verwendet werden. Nachfolgend wird eine nicht abschließende Reihe von Anwendungen beschrieben. Die übertragene Energie kann auch gleichzeitig für eine Kombination der im Folgenden beschriebenen Anwendungen verwendet werden.

Zur Bereitstellung von größeren Leistungen auf dem Läufer 200, als die induktiv übertragene elektrische Leistung von dem Stator 5 auf den Läufer 200, kann der Läufer 200 eine Ladeschaltung zum Laden eines Energiespeichers sowie einen Energiespeicher, wie beispielsweise einen Akkumulator oder einen Kondensator, umfassen. Die induktiv übertragene Leistung kann über eine Verbindung zwischen der Läuferspule 240 mit der Ladeschaltung dazu verwendet werden, den Energiespeicher zu laden. Der geladene Energiespeicher kann die gespeicherte Energie anschließend wieder an elektronische Komponenten auf dem Läufer 200 abgeben.

Mit der auf dem Läufer 200 zur Verfügung stehenden elektrischen Leistung kann ein elektrischer Motor auf dem Läufer 200 angetrieben werden. Dieser kann dazu verwendet werden, einen Gegenstand auf dem Läufer 200 zu greifen oder zu befestigen oder zu drehen oder anzuheben, oder um andere mechanische Komponenten oder Wirkketten, wie zum Beispiel Roboter, zu bewegen.

Weiterhin kann auf dem Läufer 200 eine Kommunikationseinrichtung, insbesondere eine zur kabellosen Kommunikation dienende Kommunikationseinrichtung betrieben werden. Diese Kommunikationseinrichtung kann zum Datenaustausch zwischen dem Läufer 200 und dem Stator 5 oder dem Planarantriebssystem 1 oder weiteren Kommunikationspartnern dienen.

Mit der auf dem Läufer 200 zur Verfügung stehenden elektrischen Energie kann außerdem ein Sensor auf dem Läufer 200 betrieben werden, der beispielsweise eine Temperatur oder Abstände zu umgebenen Objekten messen kann.

Der Läufer 200 kann auch ein Leuchtmittel umfassen, welches mit der übertragenen oder gespeicherten Energie betrieben werden kann. Das erzeugte Licht kann beispielsweise als Gebäudebeleuchtung verwendet werden, und zum Zweck einer effizienten Raumbeleuchtung kann ein solcher Läufer 200 mit entsprechender Sensorik einer Person durch das Gebäude folgen, um eine gezielte Raumbeleuchtung am Aufenthaltsort einer Person zu erreichen. Weiterhin kann das erzeugte Licht beispielsweise im Infrarot-Spektrum liegen und ebenfalls der Kommunikation dienen bzw. ein Signal in entsprechenden Sensoren auslösen, um beispielsweise eine Schleuse zu öffnen, die getrennte Arbeitsbereiche des Planarantriebssystem 1 trennt.

Mit der übertragenden elektrischen Energie auf dem Läufer 200 kann ebenfalls ein Verdichter für Gase, wie zum Beispiel die Raumluft, oder eine Vakuumpumpe auf dem Läufer 200 betrieben werden. Das so erzeugte Gas, Gasgemisch oder die Raumlauft mit Überdruck oder Unterdruck gegenüber der Atmosphäre kann beispielsweise zur Manipulation von Produkten, die auf einem Läufer 200 transportiert werden, verwendet werden. Beispielsweise kann mit einem Überdruck eine Verpackung eines Produktes aufgeblasen bzw. geöffnet gehalten werden oder mit einem Unterdruck die Luft vor einem Versiegeln einer Verpackung aus einer Verpackung, insbesondere einer Lebensmittelverpackung, abgesaugt werden. Weiterhin können Produkte mit Hilfe von Unterdruck auf einem Läufer 200 festgesaugt bzw. gehalten werden.

Mit der elektrischen Energie auf dem Läufer 200 kann auch ein Peltier-Element betrieben werden, welches einen elektrothermischen Wandler darstellt. Das Peltier-Element auf dem Läufer kann sowohl zur Kühlung als auch zur Heizung eines auf dem Läufer 200 transportierten Produktes dienen. Somit können beispielsweise Lebensmittelprodukte während des Transportes mit dem Planarantriebssystem 1 gekühlt werden, damit sie langsamer verderben. Des Weiteren kann ein Produkt, auf dem ein Lötzinn aufgebracht worden ist, gezielt so geheizt werden, dass das Lötzinn bis zu einem nachfolgenden Verarbeitungsschritt flüssig gehalten wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Planarantriebssystem
- 5: Stator
- 10: Statormodul
- 11: Statorfläche
- 12: erste Richtung
- 14: zweite Richtung
- 15: dritte Richtung
- 16: Anschlussleitung
- 18: Modulgehäuse
- 21: Außenkante
- 32: Unterseite
- 33: Seitenflächen
- 100: Statoreinheit
- 104: erste Statorlage
- 106: zweite Statorlage
- 108: weitere Statorlage
- 110: erster Statorsektor
- 112: zweiter Statorsektor
- 113: dritter Statorsektor
- 114: vierter Statorsektor
- 120: erstes Statorsegment
- 121: zweites Statorsegment
- 125: Statorleiter
- 127: Segmentbreite
- 131: erster Hinleiter
- 132: erster Rückleiter
- 141: zweiter Hinleiter
- 142: zweiter Rückleiter
- 146: dritter Hinleiter
- 147: dritter Rückleiter
- 150: Dreiphasensystem
- 151: erstes Dreiphasensystem
- 152: zweites Dreiphasensystem
- 154: erster Anschlusspunkt
- 155: zweiter Anschlusspunkt
- 156: dritter Anschlusspunkt
- 157: Sternpunkt
- 165: erste Spule
- 166: zweite Spule
- 167: dritte Spule
- 170: Stromregler
- 171: PWM-Signalerzeugungseinrichtung
- 172: Strommesseinrichtung
- 173: Verarbeitungseinrichtung
- 175: Beeinflussungseinrichtung
- 180: Endstufeneinrichtung
- 181: erster Schalter
- 182: zweiter Schalter
- 183: dritter Schalter
- 184: vierter Schalter
- 185: fünfter Schalter
- 186: sechster Schalter
- 190: Modulsteuervorrichtung
- 200: Läufer
- 201: Magneteinrichtung
- 204: Abstandshalter
- 205: Abstandshalterstruktur
- 206: erste Läuferrichtung
- 208: zweite Läuferrichtung
- 210: erste Magneteinheit
- 212: zweite Magneteinheit
- 213: dritte Magneteinheit
- 214: vierte Magneteinheit
- 216: Läufermagnet
- 230: erste Leiterplatte
- 231: zweite Leiterplatte
- 232: dritte Leiterplatte
- 233: vierte Leiterplatte
- 240: Läuferspule
- 241: erste Leiterbahn
- 245: zweite Leiterbahn
- 251: Außenbreite
- 252: Innenbreite
- 260: Gleichrichter
- 261: weitere Einrichtung
- 270: Draht
- 271: Drahtanschluss
- 300: Sollstromwerte
- 301: Steuersignale
- 302: beeinflusste Steuersignale
- 303: pulsweitenmodulierte Steuersignale
- 304: Iststromwerte
- 305: verarbeitete Iststromwerte
- 307: Beeinflussungssignale
- 410: erster Spannungspuls
- 411: fünfter Spannungspuls
- 412: sechster Spannungspuls
- 413: siebter Spannungspuls
- 415: achter Spannungspuls
- 416: neunter Spannungspuls
- 421: zweiter Spannungspuls
- 422: dritter Spannungspuls
- 423: vierter Spannungspuls
- 430: erster Stromverlauf
- 431: dritter Stromverlauf
- 432: vierter Stromverlauf
- 433: fünfter Stromverlauf
- 435: zweiter Stromverlauf
- 437: dritter Stromverlauf
- 439: Strommittelwert
- 441: erster Zeitbereich
- 442: zweiter Zeitbereich
- 451: erster Verlauf virtueller Summenstrom
- 452: zweiter Verlauf virtueller Summenstrom
- 461: erster Verlauf Magnetfeldstärkeänderung
- 462: zweiter Verlauf Magnetfeldstärkeänderung
- 465: zweiter Verlauf Magnetfeldstärke
- 466: erster Verlauf Magnetfeldstärke
- 467: dritter Verlauf Magnetfeldstärke
- 469: Knick
- 470: Strommesszeitpunkt
- 480: Zeitversatz
- 490: Rasterlinie
- 500: Hauptsteuervorrichtung
- 601: erste Seite
- 602: zweite Seite
- i1: erster Strom
- i2: zweiter Strom
- s1: erste Ansteuerspannung
- s2: zweite Ansteuerspannung
- t: Zeit
- Ton: Pulsdauer
- Toff: Auszeitdauer
- Ts: Periodendauer
- x: Weg
- Ud: Zwischenkreisspannung
- U: erste Phase
- V: zweite Phase
- W: dritte Phase

## Patentansprüche

1. Planarantriebssystem (1), aufweisend einen Stator (5) und einen Läufer (200),
wobei der Stator (5) mehrere Statorleiter (125) aufweist,
wobei der Läufer (200) eine Magneteinrichtung (201) mit wenigstens einem Läufermagneten (216) aufweist,
wobei der Stator (5) zum Bestromen der Statorleiter (125) ausgebildet ist,
wobei zwischen bestromten Statorleitern (125) des Stators (5) und der Magneteinrichtung (201) des Läufers (200) eine magnetische Wechselwirkung hervorrufbar ist, um den Läufer (200) anzutreiben,
wobei der Stator (5) ausgebildet ist, das Bestromen der Statorleiter (125) durch eine Stromregelung auf Basis einer Pulsweitenmodulation durchzuführen,
wobei aufgrund der Stromregelung ein Rippelstrom in bestromten Statorleitern (125) des Stators (5) und dadurch ein magnetisches Wechselfeld erzeugbar ist,
wobei der Läufer (200) wenigstens eine Läuferspule (240) aufweist, in welcher aufgrund des magnetischen Wechselfelds eine Wechselspannung induzierbar ist,
und wobei die wenigstens eine Läuferspule (240) des Läufers (200) in Form eines gewickelten Drahts (270) ausgebildet ist und die Magneteinrichtung (201) des Läufers (200) umschließt.

2. Planarantriebssystem nach Anspruch 1,
wobei die in Form eines gewickelten Drahts (270) ausgebildete Läuferspule (240) im Bereich von lateralen Außenseiten des Läufers (200) angeordnet ist.

3. Planarantriebssystem nach einem der vorhergehenden Ansprüche,
wobei die in Form eines gewickelten Drahts (270) ausgebildete Läuferspule (240) eine Mehrzahl an umlaufenden Drahtwicklungen aufweist.

4. Planarantriebssystem nach einem der vorhergehenden Ansprüche,
wobei die in Form eines gewickelten Drahts (270) ausgebildete Läuferspule (240) drei Drahtanschlüsse (271) zur Kontaktierung aufweist, von denen ein Drahtanschluss (271) als Zwischenabgriff dient.

5. Planarantriebssystem nach einem der vorhergehenden Ansprüche,
wobei der Läufer (200) eine umlaufende Abstandshalterstruktur (205) aufweist, in welcher die in Form eines gewickelten Drahts (270) ausgebildete Läuferspule (240) integriert ist.

6. Planarantriebssystem nach Anspruch 5,
wobei der Läufer (200) eine Leiterplatte (233) aufweist, welche in der Abstandshalterstruktur (205) integriert ist, und wobei die Leiterplatte (233) einen Gleichrichter (260) zum Umwandeln der induzierten Wechselspannung in eine Gleichspannung aufweist.

7. Planarantriebssystem nach Anspruch 6,
wobei auf der Leiterplatte (233) eine weitere Einrichtung (261) integriert ist, welche über die durch den Gleichrichter (260) bereitgestellte Gleichspannung elektrisch versorgbar ist.

8. Verfahren zum Betreiben eines Planarantriebssystems (1),
wobei das Planarantriebssystem (1) einen Stator (5) und einen Läufer (200) aufweist,
wobei der Stator (5) mehrere Statorleiter (125) aufweist,
wobei der Läufer (200) eine Magneteinrichtung (201) mit wenigstens einem Läufermagneten (216) aufweist,
wobei durch Bestromen von Statorleitern (125) des Stators (5) eine magnetische Wechselwirkung zwischen bestromten Statorleitern (125) und der Magneteinrichtung (201) des Läufers (200) hervorgerufen wird, um den Läufer (200) anzutreiben,
wobei das Bestromen der Statorleiter (125) durch eine Stromregelung auf Basis einer Pulsweitenmodulation durchgeführt wird,
wobei aufgrund der Stromregelung ein Rippelstrom in bestromten Statorleitern (125) des Stators (5) und dadurch ein magnetisches Wechselfeld erzeugt wird,
wobei der Läufer (200) wenigstens eine Läuferspule (240) aufweist, in welcher aufgrund des magnetischen Wechselfelds eine Wechselspannung induziert wird,
und wobei die wenigstens eine Läuferspule (240) des Läufers (200) in Form eines gewickelten Drahts (270) ausgebildet ist und die Magneteinrichtung (201) des Läufers (200) umschließt.

9. Läufer (200) für ein Planarantriebssystem mit einem Stator (5),
wobei der Stator mehrere Statorleiter aufweist und ausgebildet ist, ein Bestromen der Statorleiter (125) durch eine Stromregelung auf Basis einer Pulsweitenmodulation durchzuführen,
wobei aufgrund der Stromregelung ein Rippelstrom in bestromten Statorleitern (125) des Stators (5) und dadurch ein magnetisches Wechselfeld erzeugbar ist,
wobei der Läufer eine Magneteinrichtung (201) mit wenigstens einem Läufermagneten (216) und wenigstens eine Läuferspule (240) aufweist,
wobei zwischen bestromten Statorleitern (125) des Stators (5) und der Magneteinrichtung (201) des Läufers (200) eine magnetische Wechselwirkung hervorrufbar ist, um den Läufer (200) anzutreiben,
wobei in der wenigstens einen Läuferspule (240) des Läufers (200) aufgrund des magnetischen Wechselfelds eine Wechselspannung induzierbar ist,
und wobei die wenigstens eine Läuferspule (240) des Läufers (200) in Form eines gewickelten Drahts (270) ausgebildet ist und die Magneteinrichtung (201) des Läufers (200) umschließt.

10. Läufer nach Anspruch 9,
wobei die in Form eines gewickelten Drahts (270) ausgebildete Läuferspule (240) im Bereich von lateralen Außenseiten des Läufers (200) angeordnet ist.

11. Läufer nach einem der Ansprüche 9 oder 10,
wobei die in Form eines gewickelten Drahts (270) ausgebildete Läuferspule (240) eine Mehrzahl an umlaufenden Drahtwicklungen aufweist.

12. Läufer nach einem der Ansprüche 9 bis 11,
wobei die in Form eines gewickelten Drahts (270) ausgebildete Läuferspule (240) drei Drahtanschlüsse (271) zur Kontaktierung aufweist, von denen ein Drahtanschluss (271) als Zwischenabgriff dient.

13. Läufer nach einem der Ansprüche 9 bis 12,
weiter aufweisend eine umlaufende Abstandshalterstruktur (205), in welcher die in Form eines gewickelten Drahts (270) ausgebildete Läuferspule (240) integriert ist.

14. Läufer nach Anspruch 13,
weiter aufweisend eine Leiterplatte (233), welche in der Abstandshalterstruktur (205) integriert ist, wobei die Leiterplatte (233) einen Gleichrichter (260) zum Umwandeln der induzierten Wechselspannung in eine Gleichspannung aufweist.

15. Läufer nach Anspruch 14,
wobei auf der Leiterplatte (233) eine weitere Einrichtung (261) integriert ist, welche über die durch den Gleichrichter (260) bereitgestellte Gleichspannung elektrisch versorgbar ist.
